(19) **Europäisches Patentamt / European Patent Office / Office européen des brevets**

(11) **EP 4 060 914 B1**

(12) **EUROPEAN PATENT SPECIFICATION**

(45) Date of publication and mention
of the grant of the patent:
**04.03.2026 Bulletin 2026/10**

(21) Application number: **22173017.9**

(22) Date of filing: **30.06.2016**

(51) International Patent Classification (IPC):
*H04J 3/16* (2006.01)   *H04L 12/28* (2006.01)
*H04L 12/413* (2006.01)  *H04L 25/49* (2006.01)
*H04L 12/64* (2006.01)  *H04J 3/06* (2006.01)

(52) Cooperative Patent Classification (CPC):
**H04L 25/4908; H04J 3/1658; H04L 12/413;**
H04J 3/0667; H04J 2203/0085

(54) **FLEXIBLE ETHERNET SYSTEMS AND METHODS FOR TIME TRANSFER**

FLEXIBLE ETHERNETSYSTEME UND VERFAHREN ZUR ZEITÜBERTRAGUNG

SYSTÈMES ETHERNET FLEXIBLES ET PROCÉDÉS DE TRANSFERT DE DURÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.06.2015 US 201562186489 P
30.06.2015 US 201562186502 P
30.06.2015 US 201562186508 P
30.06.2015 US 201562186518 P
12.08.2015 US 201514824667
12.08.2015 US 201514824693
12.08.2015 US 201514824715
16.09.2015 US 201514855857
29.09.2015 US 201514868603
11.12.2015 US 201514966779**

(43) Date of publication of application:
**21.09.2022 Bulletin 2022/38**

(62) Document number(s) of the earlier application(s) in
accordance with Art. 76 EPC:
**18176943.1 / 3 393 136
16177286.8 / 3 113 502**

(73) Proprietor: **Ciena Corporation
Hanover, MD 21076 (US)**

(72) Inventors:
• **GAREAU, Sebastien
Ottawa (CA)**
• **TIERNEY, James
Carp (CA)**
• **STUART, David
Almonte (CA)**
• **LECLAIR, Marc W.
Gatineau (CA)**
• **NORMAN, Timothy
Ottawa (CA)**
• **WATFORD, Michael
Ottawa (CA)**

(74) Representative: **Dehns
10 Old Bailey
London EC4M 7NG (GB)**

(56) References cited:
**US-A1- 2010 040 369   US-A1- 2013 051 407**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**CROSS-REFERENCE TO RELATED APPLICATION(S)**

The present patent/application claims priority to U.S. Provisional Patent Application No. 62/186,489, filed June 30, 2015, and entitled "FLEXIBLE ETHERNET SWITCHING SYSTEMS AND METHODS," U.S. Provisional Patent Application No. 62/186,502, filed June 30, 2015, and entitled "FLEXIBLE ETHERNET OPERATIONS, ADMINISTRATION, AND MAINTENANCE SYSTEMS AND METHODS," U.S. Provisional Patent Application No. 62/186,508, filed June 30, 2015, and entitled "FLEXIBLE ETHERNET CLIENT MULTI-SERVICE AND TIMING TRANSPARENCY SYSTEMS AND METHODS," U.S. Provisional Patent Application No. 62/186,518, filed June 30, 2015, and entitled "FLEXIBLE ETHERNET CHIP-TO-CHIP INTEFACE SYSTEMS AND METHODS," U.S. Patent Application No. 14/855,857, filed September 16, 2015, and entitled "FLEXIBLE ETHERNET SWITCHING SYSTEMS AND METHODS," U.S. Patent Application No. 14/824,667, filed August 12, 2015, and entitled "FLEXIBLE ETHERNET OPERATIONS, ADMINISTRATION, AND MAINTENANCE SYSTEMS AND METHODS," U.S. Patent Application No. 14/824,693, filed August 12, 2015, and entitled "FLEXIBLE ETHERNET CLIENT MULTI-SERVICE AND TIMING TRANSPARENCY SYSTEMS AND METHODS," U.S. Patent Application No. 14/824,715, filed August 12, 2015, and entitled "FLEXIBLE ETHERNET CHIP-TO-CHIP INTEFACE SYSTEMS AND METHODS," U.S. Patent Application No. 14/868,603, filed September 29, 2015, and entitled "TIME TRANSFER SYSTEMS AND METHODS OVER FLEXIBLE ETHERNET," and U.S. Patent Application No. 14/966,779, filed December 11, 2015, and entitled "FLEXIBLE ETHERNET ENCRYPTION SYSTEMS AND METHODS".

**FIELD OF THE DISCLOSURE**

The present disclosure generally relates to networking systems and methods. More particularly, the present disclosure relates to Flexible Ethernet (also referred to variously as Flex Ethernet or FlexE) switching systems and methods; Flexible Ethernet Operations, Administration, and Maintenance (OAM) systems and methods; Flexible Ethernet client multi-service and timing transparency systems and methods; Flexible Ethernet Chip-to-Chip (C2C) interface systems and methods, time transfer systems and methods in Flexible Ethernet; and Flexible Ethernet encryption systems and methods.

**BACKGROUND OF THE DISCLOSURE**

Layer 1 protocols and technologies have evolved including Synchronous Optical Network (SONET)/Synchronous Digital Hierarchy (SDH) in the 1990s to Optical Transport Network (OTN) in the 2000s. SONET/SDH were synchronous protocols optimized for circuit switching and transmission. OTN evolved from SONET/SDH to provide transparency and support for Wavelength Division Multiplexing (WDM) as well as for optimized transmission of packet traffic. SONET, SDH, and OTN each have a rich suite of Operations, Administration, and Maintenance (OAM) functions and support for a wide range of services and applications. Conventionally, as OTN scales beyond 100G (B100G), there are emerging frameworks for Layer 1 functionality, namely Flexible OTN (FlexO or B100G) initiatives in the International Telecommunication Union (ITU) and Flex Ethernet in the Optical Internetworking Forum (OIF).
Traditionally, Ethernet rates were defined in steps of 10x, i.e., 10Mb/s, 100Mb/s, 1Gb/s (GbE), etc. There is a wrinkle in this 10x progression where 40Gb/s Ethernet (40GbE) was defined. Today, there are various Ethernet rates defined, including rates in-between established rates. IEEE 802.3 standards group is discussing 2.5Gb/s, 5Gb/s, 25 Gb/s and other various odd rates. Specifically, different rates are established for different applications, such as wireless applications, data center group applications, data center interconnections, etc. There is an expectation that different Ethernet rates will continue as new high-volume applications require optimized solutions. Specifically, router/switch equipment and optical transmission equipment are evolving at different rates. There is a desire to support simple transport of n x Ethernet streams across a faster interface. IEEE historically defines Ethernet rates (Media Access Control (MAC) layer) with projects that also define the Physical (PHY)/Physical Medium Dependent (PMD) rates; the MAC rates and PMD rates are tied and defined together. To address evolution in Ethernet and dissociate the MAC/client rate to the PHY/PMD, Flexible Ethernet has been proposed. Note, as described herein, the terms Flexible Ethernet, Flex Ethernet, and FlexE can be used interchangeably.
In transport applications, FlexE can be used to match the flexibility of optical transmission equipment. Specifically, optical transmission equipment (e.g., Dense Wave Division Multiplexing (DWDM)) is evolving to support variable modulation formats, Forward Error Correction (FEC) schemes, baud rates, etc. DWDM equipment can support a variable line rate with the same hardware, relying on configuration and provisioning. FlexE is based on Ethernet constructs, e.g., 64b/66b encoding, recognizing the primary client being transported is Ethernet. Note, the current scope of FlexE, as described in Implementation Agreement IA #OIF-FLEXE-01.0 "Flex Ethernet Implementation Agreement - Draft 1.1" (July 2015), is limited to interfacing applications (e.g., bonding, subrating, and channelization). However, it may be advantageous to leverage Flexible Ethernet to augment or even replace OTN and/or FlexO in some transport and switching applications.

OTN switching (e. g. as set out in US 2010/040369 A1) can solve most (if not all) of the FlexE switching applications. However, it is "alien" and different for certain market segments that are not used to transport technologies. OTN is also perceived as complex and costly given it has included many features to support switching, Operations, Administration, and Maintenance (OAM), transparency, multiservice, etc. It is expensive given the volume of OTN devices and relatively small (compared to Ethernet) market application. Again, FlexE uses building blocks (i.e. 64b/66b) and concepts from Ethernet. It is simpler for routers or switches to integrate FlexE functionality rather than OTN.

OAM functionality is critical for operating networks, fault isolation, service and path awareness, and the like. Again, OTN provides a rich set of OAM capabilities for layer 1 circuit switching and transport application. Ethernet also provides a rich set of OAM capabilities for layer 2 packet networking and transport applications, such as through the efforts of the Metro Ethernet Forum (MEF). However, FlexE clients (in current IA) do not have defined OAM functionality and cannot be transported and switched as a service or private line service in a provider's network.

The FlexE shim (as currently documented in the OIF Implementation Agreement) does not support timing transparency for FlexE clients. Also, the FlexE shim only supports FlexE/Ethernet clients (ETYn as defined in G.8010/Y.1306 "Architecture of Ethernet layer networks,") and does not support other client types (i.e., multi-service). OTN is well-established and addresses this application very well (i.e., multi-service and timing transparency), but OTN is seen as expensive to many due to relatively low volumes. Also, OTN is not gaining traction is certain markets (such as intra data center). FlexE could possibly address multi-service applications in such markets. For example, it would be advantageous for FlexE to transport Fibre Channel (FC) (or the like) and Ethernet on same groups.

Conventionally, FlexE is currently not intended as a next-generation C2C interface. For example, FlexE does not include flow control, flexible channelization, etc. which are required elements for packet C2C interfaces. For example, Interlaken and SPI4.2, which are C2C interfaces, support these elements. Interlaken is a purpose-built interface for C2C Network Processor Unit (NPU) to framer or backplane applications and is described by the Interlaken Protocol Definition, Revision 1.2, October, 2008, available from the Interlaken Alliance (www.interlakenalliance.com/Interlaken_Protocol_Definition_v1.2.pdf). There is a desire to support less complex and more powerful C2C interfaces that can also be used for system interfaces. It would be advantageous to augment FlexE to support C2C applications.

Currently, time transfer, such as Precision Time Protocol (PTP) over Ethernet interfaces, is outside scope of the FlexE implementation. IEEE Standard 1588-2008 for a Precision Clock Synchronization Protocol for Networked Measurement and Control Systems, the contents of which are incorporated by reference, defines a protocol for transferring time across a packet network. ITU-T developed PTP over OTN schemes using the OTN Synchronization Message Channel (OSMC) and a multiframe point of reference. IEEE 1588-2008 would typically use packet delimiting as timestamp point of reference, and then inject this timestamp at the Ethernet PHY. With FlexE, the PTP packet timestamp would have to be done at the FlexE client and would be susceptible to Constant Time Error (CTE). IEEE 1588-2008 only defines a protocol for transferring time information over a packet network. It does not address performance aspects on the time accuracy when adapting to a FlexE shim. The transfer of time over a FlexE shim can be challenging because of delays introduced by elastic First-in-First-out (FIFOs) required in adaptation and mapping schemes. Uncertainty in these delays (at start-up, after fault recovery, etc.) results in uncertainty in the transferred time. Also, FlexE clients are adapted using idles to the FlexE shim adding more uncertainty and variation. Time synchronisation in classical Ethernet can be found in US 2013/051407 A1.

Various techniques exist for various network protocols for authentication and encryption for secure communication sessions. For example, Internet Protocol Security (IPsec) (RFC 430x) provides secure Internet Protocol (IP) communications by authenticating and encrypting each IP packet of a communication session. IEEE 802.1AE is the IEEE MAC Security standard (also known as MACsec) which defines connectionless data confidentiality and integrity for media access independent protocols. Security has also been extended in a proprietary manner, to Layer 1 protocols such as proprietary OTN ("OTNSec") or SONET bulk schemes. There are various disadvantages of IPSec, MACSec, and/or OTNSec. OTNSec is proprietary and, therefore, must be bookended and lacks interoperability. IPSec and MACSec cause packet inflation, i.e., an increase in packet size, so it decreases the effective throughput. These schemes also require complicated logic/circuitry with additional power and cost implications. Also, IPSec and MACSec only encrypt the payload, not the header. Further, with FlexE at Layer 1, there is an opportunity to provide bulk encryption at the FlexE layer, overcoming the aforementioned limitations as well as being used in combination with IPSec and/or MACSec.

## BRIEF SUMMARY OF THE DISCLOSURE

In an exemplary embodiment, a Flexible Ethernet (FlexE) switch system (100, 300, 400) configured to switch a FlexE client (14) service includes interface circuitry (102, 302, 402) configured to ingress and egress a plurality of FlexE clients (14); and switch circuitry (104, 304, 404) configured to switch portions of the FlexE clients (14) between the interface circuitry (102, 302, 402) based on 64b/66b block boundaries. The portions can include calendar slots, and wherein the switch circuitry utilizes a synchronous switching scheme. The interface circuitry (102, 302, 402) can be configured to partially terminate a FlexE shim (16) associated with the plurality of FlexE clients (14) and provide access to 64b/66b blocks from the plurality of FlexE clients (14), for phase and frequency alignment. The switch system (100, 300, 400) can be a native FlexE client 64b/66b switch system, and wherein the interface circuitry (102, 302, 402) is configured to perform timing synchronization including phase and frequency alignment between the 64b/66b block boundaries. The switch circuitry (104, 304, 404) can be a cell switch (418), and wherein the portions of the FlexE clients (14) are SARed (Segmentation and Reassembly) using Optical Transport Network (OTN) over Packet (OPF) techniques and switched as a stream across the cell switch (418).

The FlexE switch system can further include monitor circuitry (1102) configured to at least one of monitor and update one or more Operations, Administration, and Maintenance (OAM) fields in FlexE overhead, wherein the OAM fields cover a single client path for the FlexE client (14). The one or more OAM fields can include one or more of a client service error monitoring field which does not rely on packet Cyclic Redundancy Check (CRC), a client service error monitoring field including a bitstream Bit Interleaved Parity (BIP) code, a connectivity/trace, link fault, remote fault, maintenance states, test signals, link neighbor discovery, and backwards fault and error indication. The FlexE switch system can include circuitry configured to receive a client signal, wherein the client signal is different from a FlexE client (14); and circuitry configured to map the client signal into a FlexE shim (16). The FlexE switch system can further include circuitry configured to provide flow control and channelization.

In another exemplary embodiment, a Flexible Ethernet (FlexE) switch method configured to switch a FlexE client (14) service includes receiving a plurality of FlexE clients (14) via interface circuitry (102); and switching portions of the FlexE client (14) based on 64b/66b block boundaries with switch circuitry (104).

## BRIEF DESCRIPTION OF THE DRAWINGS

The present disclosure is illustrated and described herein with reference to the various drawings, in which like reference numbers are used to denote like system components/method steps, as appropriate, and in which:

FIG. 1 is a diagram of a general structure of FlexE;
FIG. 2A is a block diagram of FlexE mux functions;
FIG. 2B is a block diagram of FlexE demux functions;
FIG. 3 is a diagram of a transport network aware or unaware of a router to transport FlexE connection;
FIG. 4 is a network diagram of a transport network aware of FlexE;
FIG. 5 is a network diagram of a transport network of an example of partial-rate transport of Ethernet PHYs of a FlexE group;
FIG. 6 is a diagram of FlexE calendar distribution;
FIG. 7 is a diagram of FlexE overhead on each PHY of the FlexE group;
FIG. 8 is an example diagram of FlexE calendar slots where 25% of the calendar slots are unavailable;
FIG. 9 is a diagram of encoding of ordered set block for FlexE overhead;
FIG. 10 is a diagram of FlexE overhead;
FIG. 11 is a diagram of data flow and interleaving for a FlexE client mux in calendar slots;
FIG. 12 is a diagram of a standard Ethernet local fault ordered set;
FIG. 13 is a diagram of an Ethernet remote fault ordered set;
FIG. 14 is a diagram of data flow and de-interleaving for a FlexE client demux in calendar slots;
FIG. 15 is a diagram of a comparison between the layer stack and atomic functions of FlexO and FlexE;
FIG. 16 is a block diagram of a FlexE client switch showing FlexE transparent;
FIG. 17 is a block diagram of a FlexE client switch showing FlexE termination;
FIG. 18 is a block diagram for the termination of FlexE shim by line card ports of a FlexE switch;
FIG. 19 is a block diagram of a SONET/SDH STS-1 switch adapted to support FlexE;
FIGS. 20 and 21 are block diagrams of an OIF OTN over Packet (OPF) switch adapted to support FlexE;
FIG. 22 is a diagram of mapping individual client calendar slots to packets for the OPF switch;
FIG. 23 is a network diagram of a comparison of FlexO service OAM with the FlexE service OAM systems and methods described herein;
FIG. 24 is a network diagram with various FlexE OAM monitoring points;
FIG. 25 is a diagram of an exemplary FlexE OAM implementation with FlexE overhead;
FIG. 26 is a block diagram of the FlexE overhead from FIG. 9 with a new "O" code for implementing FlexE OAM at the RS layer;
FIG. 27 is the logical diagram of FIG. 2 illustrating a location of first and second options for locating FlexE OAM in the IEEE 802.3 stack;

FIG. 28 is a flowchart of a process, implemented in a node, for monitoring a Flexible Ethernet (FlexE) client service in a network;

FIG. 29 is a block diagram of OTN adaptation to 64b/66b;

FIG. 30 is a diagram of the FlexE overhead where a client number and new client type can be added to the FlexE overhead, such as in the client area;

FIG. 31 is a logical diagram of the IEEE 802.3 stack from FIG. 2, describing mapping one FlexE shim into another FlexE shim;

FIG. 32 is a diagram of a differential timing process between two nodes utilizing FlexE;

FIG. 33 is the diagram from FIG. 15 illustrating FlexE being the next B100G multiplexed structure (replacing OTUCn as HO container);

FIG. 34 is a flowchart of a process, implemented in a node, for supporting support multiservice with Flexible Ethernet (FlexE);

FIG. 35 is a network diagram of a FlexE service;

FIG. 36 is a logical diagram of a protocol stack for Layers 1-3;

FIG. 37 is a logical diagram of use of FlexE in a C2C application;

FIG. 38 is the diagram of FlexE overhead on each PHY of the FlexE group of FIG. 7 which is illustrated to describe channelization in the C2C application;

FIG. 39 is the diagram of FlexE overhead from FIG. 10 illustrating possible locations for communicating a logical channel number;

FIG. 40 is a logical diagram of the IEEE 802.3 stack and problems carrying standard PTP according to IEEE 1588;

FIG. 41 is a logical diagram of the IEEE 802.3 stack and where the time transfer systems and methods locate PTP in the FlexE shim;

FIG. 42 is a flowchart of a time transfer process in FlexE;

FIG. 43 is a diagram of a network with node A and node B connected to one another via FlexE;

FIGS. 44 and 45 are block diagrams of a FlexE timestamp point of reference;

FIG. 46 is a flowchart illustrates a time transfer method in Flexible Ethernet (FlexE) between a first node and a second node;

FIG. 47 is a network diagram of a FlexE terminating transport network with network elements coupled to switches/routers and with intermediate, transparent network elements between the network elements with FlexE encryption;

FIG. 48 is a logical diagram of the IEEE 802.3 stack compared to a FlexE stack and possible locations for encryption;

FIG. 49 is a diagram of encoding of ordered set block for FlexE overhead similar to FIG. 9 for an encryption messaging channel;

FIG. 50 is a table of 64b/66b block formats; and

FIG. 51 is a flowchart of a process for Physical Coding Sublayer (PCS) encryption implemented by a first network element communicatively coupled to a second network element.

## DETAILED DESCRIPTION OF THE DISCLOSURE

In various exemplary embodiments, FlexE switching systems and methods provide FlexE switching implementations or algorithms using FlexE as a switching technology. Specifically, the systems and methods address FlexE in legacy systems (e.g., SONET/SDH), in current systems (e.g., Packet-Optical Transport Systems (P-OTS), OTN, etc.), and in new future systems dedicated to FlexE and 64b/66b switching. In various exemplary embodiments, FlexE is described with augmentations to address OTN applications, such as service OAM, hitless resizing, switching, multi-service applications, and the like.

With the FlexE switching systems and methods, there are applications (such as intra-data center) that could benefit from layer 1 techniques to bond and possibly switch large (elephant) flows and bypass layer 2 switches. FlexE could be used in certain markets to bypass layer 2 switches, providing cost, power, latency, etc. benefits. It is an objective of the systems and methods described herein to describe circuit switching capabilities with FlexE technologies.

The FlexE switching systems and methods can include a 64b/66b block synchronous switch topology and granularity, idle adaptation functionality for adapting phase and frequency in a synchronous network, phase alignment to a FlexE frame for hitless switching, FlexE over fabric links, and the like. The FlexE switching systems and methods also include mapping of FlexE into STS-n for legacy fabrics, e.g., transcoding of FlexE to fit in an STS-192. Further, the FlexE switching systems and methods provide FlexE switching over OPF including transcoding FlexE over OPF for bandwidth savings and using OPF single stream per shim/destination or group.

In various exemplary embodiments, FlexE OAM systems and methods are described to extend and use FlexE clients as a maintenance entity and service with defined OAM functionality. The FlexE OAM systems and methods described various different approaches to an OAM layer in FlexE client overhead. The FlexE OAM systems and methods also address transport performance monitoring complexities introduced by FlexE including error checking allowing monitoring and fault isolation of FlexE clients, without having to perform packet-level error checking (i.e., MAC Frame Check Sequence (FCS)). There are markets (such as intra data-center) that could benefit from layer 1 techniques to bond, possibly switch large (elephant) flows and bypass layer 2 switches. These markets have not adopted OTN for such applications. FlexE could be used in such markets to bypass layer 2 switches, providing cost, power, latency, etc. benefits. Adding FlexE client OAM will enable such application using FlexE client as a service in a provider's network, and it will help with fault isolation and error checking of variable number/size of flows.

Advantageously, the FlexE OAM systems and method augment/create the concept/application of a FlexE client service with simplified performance monitoring for transport equipment. The FlexE OAM systems and methods add OAM fields to the FlexE client, including new Local Fault (LF)/Remote Fault (RF) client service fields independent of the FlexE group, which is tied to PHY LF/RF. The FlexE Client OAM provides fields in the FlexE frame overhead and/or in the path Reconciliation Sublayer (RS); two approaches are considered.

In various exemplary embodiments, FlexE multi-service and timing transparency systems and methods are described. The systems and methods introduce timing transparency for FlexE clients or other client types. A new stuffing block (O code) can be used to perform rate adaptation and timing information (Cn) and can be sent in FlexE overhead. Timing transparency enables multi-service applications where FlexE can be used for aggregation and transport/switching of different types of clients (e.g., FC, Ethernet, OTN, Common Public Radio Interface (CPRI), and the like). An exemplary objective of the systems and methods is to provide FlexE capabilities to address OTN type of applications. Thus, FlexE could actually be used as the next B100G container in ITU standardization. An analogy can be made to current B100G OTN/FlexO, where the High Order Optical channel Transport Unit Level Cn (OTUCn) is the FlexE n x group/PMD and the Optical channel Data Unit Flex (ODUflex) is like the FlexE client (ETC in G.8010 notation). The systems and methods described herein propose to also map the ODUflex into FlexE shim as a client, or the like.

Ethernet is driving volumes for modules and components due to its widespread adoption for a variety of applications. Many believe that a major disadvantage to OTN is the cost mostly driven by relatively small market volumes. It is unlikely that modules (i.e. CFP2, QSFP28) will be purposely built for OTN, and this is why OTN is using schemes for adapting to a similar structure to Ethernet PMD, in order to enable reuse of modules and components (possibly clocked a bit higher). A good example of this in the past was Optical Transport Lane (OTL) adaptation to align with 100 Gigabit Attachment Unit Interface (CAUI) lane structures and bit interleaving. Aligning completely to an Ethernet PMD/PHY by using the FlexE group + shim as a High Order (HO) container and section layer is advantageous. For example, this could be a competing approach to B100G OTUCn. Also, being able to support timing transparency enables applications of Synchronous Ethernet (SyncE) over FlexE in port expander and access aggregation applications. The systems and methods described herein use FlexE as the next B100G HO container and section layer.

Variously, the systems and methods include a new "O" code in FlexE 64b/66b stream to stuff into the FlexE shim, a scheme for timing transparency, ODUk adaptation for a next-gen B100G section, adaptation of multi-service (e.g., CPRI, FC, etc.) into FlexE, a FlexE hierarchy, support for SyncE over the FlexE shim, and a new client type field in the FlexE overhead.

In various exemplary embodiments, FlexE C2C interface systems and methods are described. The systems and methods include adding FlexE overhead bits to enable dynamic channelization and flow-control. The dynamic channelization can use new bits (from reserved fields) or repurpose the management channel ones (given this is useless for C2C applications) in order to communicate the changing/dynamic channel number. Also, the current behavior of fixed calendar can be removed and replaced by the dynamic channelization scheme for C2C applications. The channel number reflects the logical channel per frame boundary. The flow-control uses XON-XOFF method communicated via in-band FlexE overhead bits (per channel) or uses out-of-band pins that are applicable on FlexE frame boundaries. This flow-control is applied per logical channel (new scheme) or calendar slot client (old scheme). Advantageously, using FlexE for C2C interface applications allows next-gen devices to support less interfaces, saves on logic, die area, power, and the like. The FlexE interface can be used for system/network interfaces (Inter-Domain Interfaces (IrDI)/User-Network Interface (UNI)) as its current intended use, or can be used for C2C interfaces. Historically, many interfaces such as 100 Gigabit Attachment Unit Interface (CAUI) and Optical Transport Lanes (OTL) have been reused for C2C applications, but lack some flexibility when addressing packet applications. The FlexE C2C enhancements proposed herein can enable C2C packet applications.

The C2C interface systems and methods can include FlexE flow control, in-band, using the FlexE shim overhead as well as out-of-band. The systems and methods can include FlexE channelization extensions, supporting logical channels beyond the 20x already provided in FlexE. Also, the systems and methods contemplate an overclocking, e.g., an overclocked CAUI/PMD for C2C applications.

In various exemplary embodiments, time transfer systems and methods over Flexible Ethernet are described. The required information for the transfer of precise time between two nodes or network elements is (1) a time reference point, or "significant instant" to which timing information can be related, (2) the timing information itself, and (3) a measure of the delay it takes to transfer the timing information between the nodes or network elements. The time transfer systems and methods use the FlexE shim/group for time transfer and PTP messages instead of relying on the FlexE client and convention IEEE 1588 packet techniques. For example, the time transfer systems and methods can use FlexE overhead for a synchronization message channel and FlexE frame or multi-frame boundaries as an accurate timestamp point of reference. The time transfer systems and methods support FlexE interfaces for PTP applications and minimize the uncertainty and variations (overall CTE) for systems and nodes that have FlexE interfaces. As FlexE becomes more widely deployed, the time transfer systems and methods can be implemented to support PTP applications.

Again, in various exemplary embodiments, the present disclosure relates to Flexible Ethernet (also referred to variously as Flex Ethernet or FlexE) bulk encryption systems and methods. The systems and methods apply bulk encryption concepts (Advanced Encryption Standard (AES), Galois/Counter Mode (GCM), etc.) to the FlexE layer and uses FlexE overhead for a messaging channel. The messaging channel provides messaging (key exchange and authentication) and tag (GCM) communications between both ends. The encryption can cover the 64b/66b bit stream at either the FlexE client layer (i.e., path) or FlexE shim layer (i.e., section/segment). The FlexE client can be mapped into a FlexE shim or can be used on a standard PHY and this encryption method can also be considered as a Physical Coding Sublayer (PCS) based encryption method. FlexE encryption is applied at Layer 1, and does not affect the packet rate and can be used with future FlexE interfaces, without requiring OTN wrapping. It is also lower complexity, resulting in lower logic, lower power and lower cost relative to other techniques (i.e., IPSec, MACSec, etc.). FlexE encryption can be applied at either the FlexE client (i.e., path layer) or the FlexE shim (i.e., section/segment) and can facilitate FlexE client circuit switching schemes.

**Flexible Ethernet**

FlexE provides a generic mechanism for supporting a variety of Ethernet Media Access Control (MAC) rates that may or may not correspond to any existing Ethernet PHY rate. This includes MAC rates that are both greater than (through bonding) and less than (through sub-rate and channelization) the Ethernet PHY (Physical Layer) rates used to carry FlexE. This can be viewed as a generalization of the Multi-Link Gearbox implementation agreements, removing the restrictions on the number of bonded PHYs (MLG2.0, for example, supports one or two 100GBASE-R PHYs) and the constraint that the client signals correspond to Ethernet rates (MLG2.0 supports only 10G and 40G clients). The Multi-Link Gearbox implementation agreements are described in IA # OIF-MI,G-01.0 "Multi-link Gearbox Implementation Agreement" (May 2012) and IA # OIF-MLG-02.0 "Multi-link Gearbox Implementation Agreement" (April 2013),

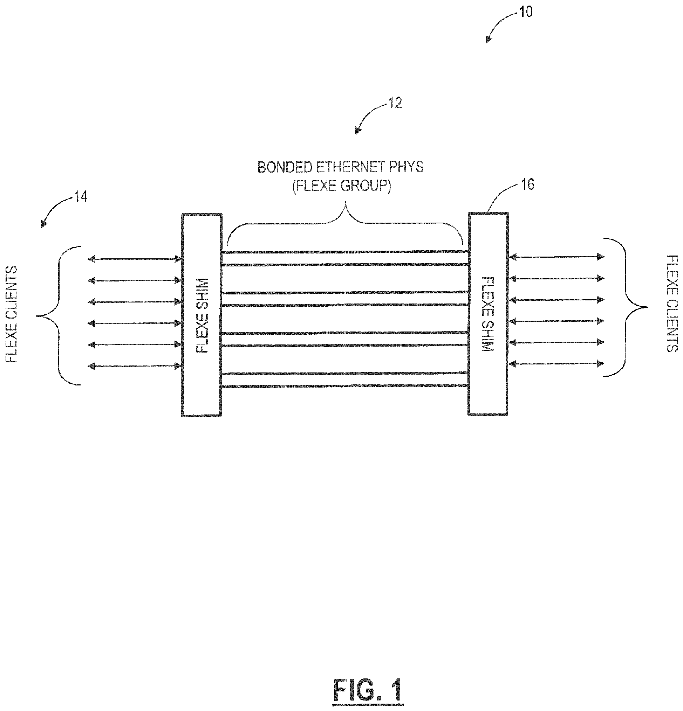

Referring to FIG. 1, in an exemplary embodiment, a diagram illustrates a general structure of FlexE 10. Again, conventionally, the general capabilities supported by the FlexE include (i) bonding of Ethernet PHYs, e.g., supporting a 200G MAC over two bonded 100GBASE-R PHYs, (ii) sub-rates of Ethernet PHYs, e.g., supporting a 50G MAC over a 100GBASE-R PHY, and (iii) channelization within a PHY or a group of bonded PHYs, e.g., support a 150G and two 25G MACs over two bonded 100GBASE-R PHYs. Note, combinations are also contemplated, for example, a sub-rate of a group of bonded PHYs, for example, a 250G MAC over three bonded 100GBASE-R PHYs.

The general structure of FlexE 10 includes a FlexE group 12, one or more FlexE clients 14, and a FlexE shim 16. The FlexE group 12 refers to a group including 1 to n bonded Ethernet PHYs. The FlexE group 12 can include one or more bonded 100GBASE-R PHYs as well as including other rates, including new, higher rates once those standards are complete. The one or more FlexE clients 14 are each an Ethernet flow based on a MAC data rate that may or may not correspond to any Ethernet PHY rate. The FlexE client 14 MAC rates supported by the current implementation agreement (IA #OIF-FLEXE-01.0) are 10, 40, and m × 25 Gb/s. The FlexE shim 16 is the layer that maps or demaps the FlexE clients 14 carried over the FlexE group 12. Similar to the terminology of MLG, a FlexE mux refers to the transmit direction which maps the FlexE clients 14 over the FlexE group 12. The FlexE demux refers to the receive direction which demaps the FlexE clients 14 from the FlexE group 12.

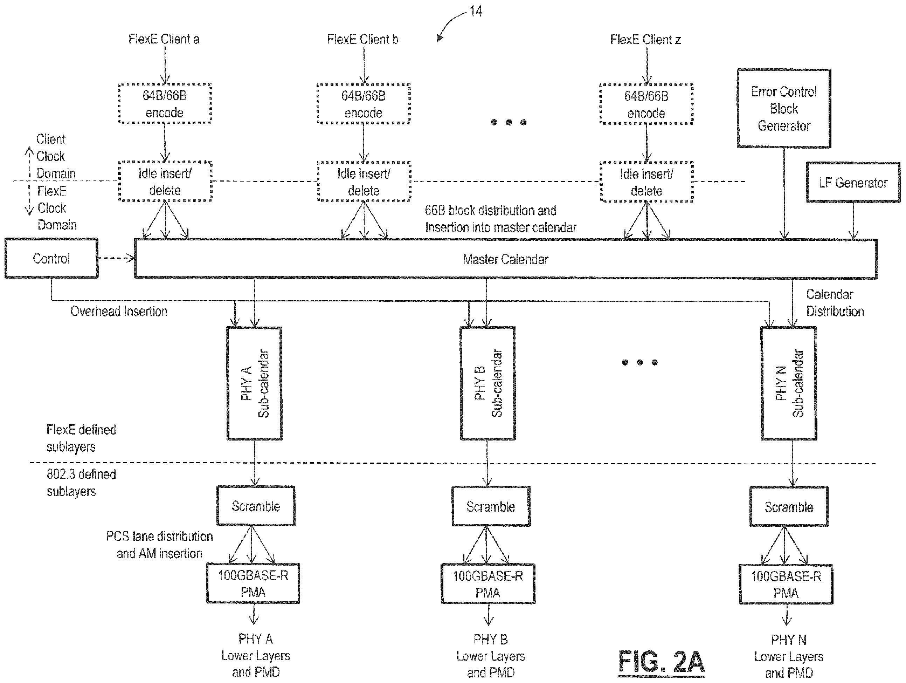

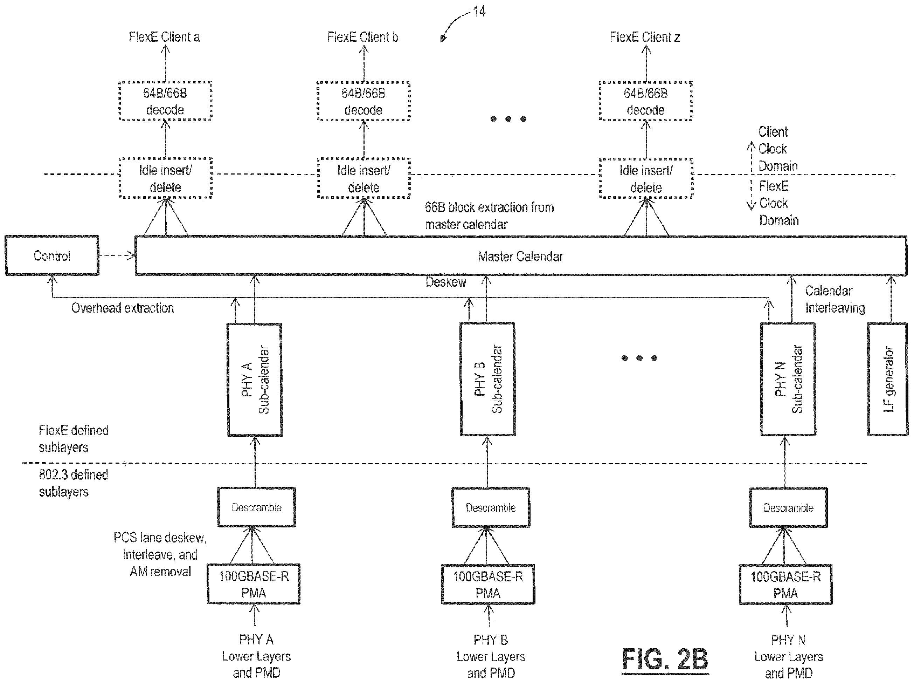

Referring to FIGS. 2A and 2B, in an exemplary embodiment, block diagrams illustrate FlexE mux functions (FIG. 2A) and FlexE demux functions (FIG. 2B). The FlexE shim 16 can be envisioned as being in the middle of the Physical Coding Sublayer (PCS) in the 100GBASE-R stack as illustrated in IEEE Std 802.3-2015 Figure 80-1. The Media Independent Interface (MII), Reconciliation Sublayer (RS), and MAC above the FlexE shim 16 are separate for each FlexE client 14 and operate at the FlexE client rate. The layers below the PCS (100GBASE-R Physical Medium Attachment (PMA), optional FEC, PMD) are used intact as specified for Ethernet. IEEE 802.3 is a working group, and a collection of IEEE standards produced by the working group defining the physical layer and data link layer's MAC of wired Ethernet.

FIG. 2A illustrates the functions of the FlexE mux (the FlexE shim 16 functions in the transmit direction). Where the 64b/66b encode and idle insert/delete functions are performed and whether these functions are part of the FlexE mux is application specific. What is presented for insertion into the slots of the FlexE master calendar is a stream of 64b/66b encoded blocks from each client encoded per IEEE Std 802.3-2015 Table 82-4 which has been rate-matched to other clients of the same FlexE shim 16. This stream of 66b blocks might be created directly at the required rate using back-pressure from a Network Processing Unit (NPU). It might come from a single-lane Ethernet PHY such as 10G or 25G, where the process of rate-matching involves both idle insertion/deletion, plus converting the rate-aligned stream from the 4-byte alignment of IEEE Std 802.3-2015 clause 49 to the 8-byte alignment of IEEE Std 802.3-2015 clause 82. Note that the IEEE 802.3 diagrammatic convention of showing idle insertion/deletion as though this were an operation that operates on a stream of 64b/66b blocks, even though strictly speaking this may require 64b/66b decoding and recoding, particularly in the case of converting between 4-byte alignment and 8-byte alignment. The stream of blocks may come from a multi-lane Ethernet PHY, where the lanes need to be deskewed and re-interleaved with alignment markers removed prior to performing idle insertion/deletion to rate match with other clients of the same FlexE shim 16. Or the stream may have come from another FlexE shim 16, for example, connected across an OTN network, where all that is required is to perform idle insertion/deletion to rate match with other clients of the same FlexE shim 16.

The 66b blocks from each FlexE client 14 are distributed sequentially into the master calendar in the order described herein. The 66b blocks from the master calendar are distributed to each PHY of the FlexE group 12 according to the ordering described herein. The FlexE overhead is inserted into the sub-calendar of each PHY. The stream of 66b blocks of each PHY is distributed to the PCS lanes of that PHY with the insertion of alignment markers, and this is presented at the PMA service interface in the 100GBASE-R stack. Lower layers and interfaces of the 100GBASE-R Ethernet PHY (e.g., CAUI, FEC, PMA, PMD) are used as specified in IEEE Std 802.3-2015. Error Control blocks are generated for insertion into calendar slots that are unused or unavailable. LF (Local Fault) blocks are generated for insertion into the calendar slots of any failed FlexE client.

FIG. 2B illustrates the functions of the FlexE demux (the FlexE shim 16 in the receive direction). The layers of each 100GBASE_R PHYs below the PCS are used exactly as specified in IEEE Std 802.3-2012. The PCS lanes are recovered, deskewed, reinterleaved, and the alignment markers are removed. The aggregate stream is descrambled. The calendar slots of the each PHY are logically interleaved in the order specified herein. The FlexE overhead is recovered from each PHY. In the case that any PHY of the FlexE group 12 has failed (PCS_Status=FALSE) or overhead lock or calendar lock has not been achieved on the overhead of any of the PHYs, LF is generated to be demapped from the master calendar for each FlexE PHY. The 66b blocks are extracted from the master calendar positions assigned to each FlexE client in the order described herein.

Where the Idle Insertion/Deletion, 66B Decoding functions are performed and whether they are inside or outside the FlexE is application specific. The 66b blocks could be delivered directly to an NPU. If delivered to a single-lane PHY, idle insertion/deletion may be used to increase the rate to the PHY rate, realigning to 4-byte boundaries in the process (for 10G or 25G) and recoding 64b/66b according to clause 49. For a multi-lane PHY, idle insertion/deletion is used to increase the rate to the PHY rate less the space needed for alignment markers, the blocks are distributed to PCS lanes with AM insertion. For a FlexE client mapped over OTN, idle insertion/deletion may be used to adjust the rate as required for the OTN mapping.

### FlexE applications

FlexE can support a variety of applications. A non-exhaustive list includes:

- Router to Transport Connection.
- Intra-Data Center "Fat Pipe" application: bonded PHYs for flows exceeding the PHY rate, or carrying traffic that doesn't distribute efficiently with LAG.
- Generalized MLG for port expansion applications, e.g., an $n \times 100G$ PHY as an umbilicus to a satellite shelf of lower rate ports.

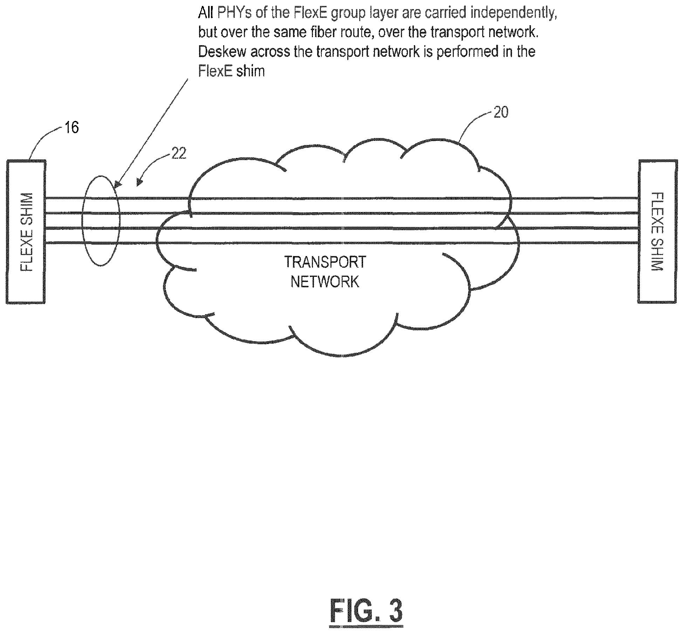

Referring to FIG. 3, in an exemplary embodiment, a network diagram illustrates a transport network 20 unaware of a router to transport FlexE connection. In FIG. 3, the FlexE shim 16, e.g., in a router or switch, maps the FlexE client(s) 14 over a group of bonded Ethernet PHYs 22. Each of the Ethernet PHYs 22 is carried independently over the transport network 20 using a PCS codeword transparent mapping (e.g., the mapping of 100GBASE-R into Optical channel Path Unit 4 (OPU4) as described in ITU-T Recommendation G.709 clause 17.7.5). The Ethernet PHYs 22 are intended to be carried over the same fiber route. All of the PHYs 22 of the FlexE group 12 need to be interconnected between the same two FlexE shims 16. In this case, the FlexE shim 16 will need to tolerate and accommodate considerably more skew than if the FlexE shims 16 were only separated by an Ethernet link distance of 40km or less, as the transport network 20 could carry the signal over thousands of kilometers. For the case illustrated in FIG. 3, it is the PHYs 22 of the FlexE group 12 which are carried over the transport network 20. Note, in FIG. 3, the transport network 20 is unaware of FlexE 10.

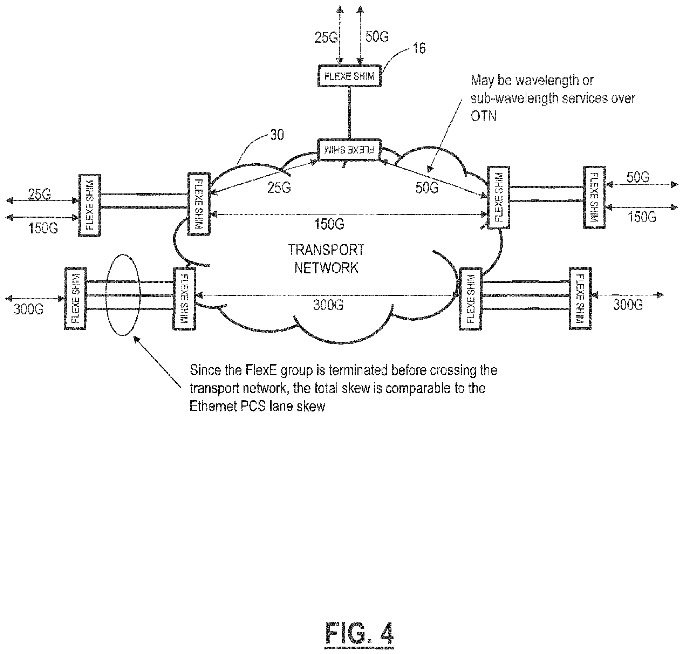

Referring to FIG. 4, in an exemplary embodiment, a network diagram illustrates a transport network 30 aware of FlexE. In FIG. 4, the distance between any pair of FlexE shims 16 is limited to the Ethernet link distance (about 40km maximum), so the amount of skew that needs to be tolerated and compensated is considerably less. The other important distinction here is that it is the FlexE clients 14 rather than the PHYs 22 of the FlexE group 12 which are carried over the transport network 30. The FlexE client 14 could be constructed to be the complete size of the payload that can be carried over a single wavelength (e.g., construct 200G to fill a Dual Polarization (DP) 16-Quadrature Amplitude Modulation (16QAM) wavelength with the bonding of two 100GBASE-R PHYs), or could be a smaller client which is multiplexed and switched at a sub-wavelength level, using the mapping described in ITU-T Recommendation G.709 clause 17.9 to carry the FlexE client signal over an Optical channel Data Unit flex (ODUflex) Constant Bit Rate (CBR).

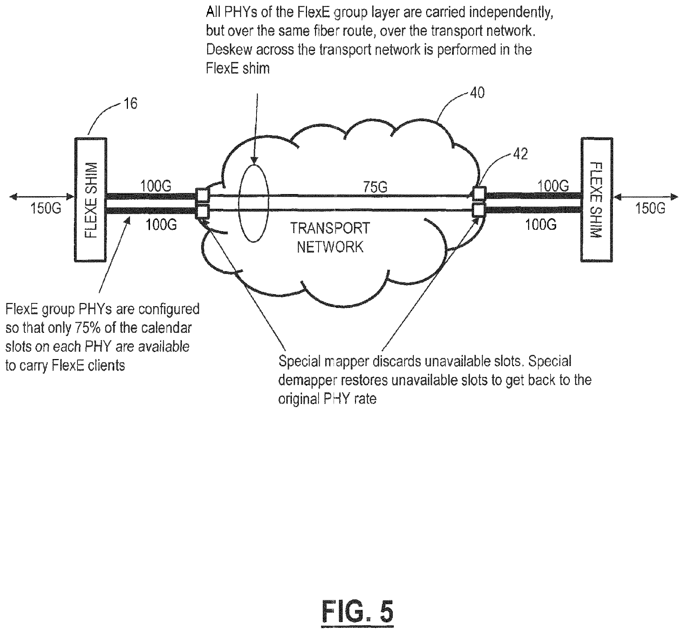

Referring to FIG. 5, in an exemplary embodiment, a network diagram illustrates a transport network 40 of an example of partial-rate transport of Ethernet PHYs 22 of a FlexE group 12. Here, the Ethernet PHY rate may be greater than the wavelength rate, and there is a reason (for example, wavelengths terminated on different line cards) that it is not desirable to terminate the FlexE shim 16 in transport equipment 42. The example illustrated here is a 150G FlexE client carried over two 75G wavelengths, but one can imagine a possible future 200GbE rate where one would want to carry a 300G FlexE client over two bonded 200GbE and be able to carry the two partially-filled Ethernet PHYs over 150G wavelengths.

### FlexE group

The FlexE group 12 includes from 1 to n 100GBASE-R Ethernet PHYs 22. Each PHY can be identified by a number in the range [1-254]. The values of 0 and 255 are reserved. A PHY number may correspond to the physical port ordering on equipment, but the FlexE shim 16 at each end of the group must identify each PHY in the group 12 using the same PHY number. PHY numbers do not need to be contiguous: even if a FlexE group 12 is composed of initially contiguous PHY numbers, this may not be preserved as PHYs are added to or removed from the group 12.

Each of these PHYs 22 uses the bulk of the PCS functions described in IEEE Std 802.3-2015 clause 82 including PCS lane distribution, lane marker insertion, alignment, and deskew. All the PHYs 22 of the FlexE group 12 must use the same physical layer clock. Each PHY 22 of the FlexE group 12 is able to deliver a logically serial stream of 64b/66b encoded blocks from the FlexE mux to the FlexE demux at a data rate of:

$$103.125 \text{ Gb/s} \times \frac{16383}{16384} \pm 100\text{ppm}$$

FlexE supports a value of n (number of PHYs 22 in the FlexE group 12) up to 254, although practical implementations are likely limited to the range of 4-8 PHYs 22. The fraction applied to the base rate reflects the fact that 1/16K of the space of the interface is occupied by PCS lane alignment markers which are not space available to carry the FlexE payload. The FlexE payload carried over each PHY 22 of the FlexE group 12 has the format of a logically serial stream of (mostly) legal 64b/66b blocks with the format described in IEEE Std 802.3-2015 Figure 82-4, although the blocks do not appear in a sequence that makes sense to interpret as an Ethernet interface. The actual PHYs 22 of the FlexE group 12 may transcode these blocks to 256b/257b format according to IEEE Std 802.3-2015 clause 91.5.2.5 according to the PHY type, but they are trans-decoded back to 64b/66b blocks prior to delivery to the FlexE demux.

### FlexE client

Each FlexE client 14 is a logically serial stream of 64b/66b blocks representing an Ethernet MAC layer. The MAC layer of a FlexE client 14 may operate at a rate of 10, 40, or n × 25 Gb/s. The 64b/66b encoding is according to IEEE Std 802.3-2015 Figure 82-4. For certain cases where the FlexE client 14 originates from an Ethernet PHY, this may require conversion from the 4-byte alignment of start-of-packet for a PHY which uses the clause-49 PCS to the 8-byte alignment of Figure 82-4 as part of the idle insertion/deletion process.

In the case where the FlexE client 14 comes from an Ethernet PHY which uses PCS lane alignment markers (e.g., 40GBASE-R), the lanes must be deskewed, re-interleaved and serialized, removing the alignment markers to produce the 64b/66b stream which is treated as a FlexE client 14. All FlexE clients 14 transmitted over the same FlexE group 12 must be aligned to a common clock. This is accomplished using idle insertion/deletion as described in IEEE Std 802.3-2015 clause 82.2.3.6. In addition, the bit-rate of each FlexE client 14 is reduced slightly from nominal as part of this process to allow room for insertion of FlexE overhead and the PCS lane alignment markers of the FlexE group 12. So the 64b/66b encoded format of a FlexE client 14 operates at a data rate of:

$$\text{FlexE Client MAC rate} \times \frac{66}{64} \times \frac{16383}{16384} \times \frac{20460}{20461} \pm 100\text{ppm}$$

This is a rate reduction slightly under 0.011%, which is well within what can be accomplished with idle insertion/deletion without packet loss. Note that this does not actually correspond to any clock that needs to be generated in an implementation, as the idle insertiondeletion process will simply operate by filling the allocated block positions in the FlexE group 12 from a FlexE client 14 First-In First-Out (FIFO) with its own deficit idle counter and inserting or deleting idles in the process of filling the block positions in the FlexE group 12 according to a FlexE calendar.

### FlexE Calendar

The FlexE operates using a calendar which assigns 66b block positions on each PHY 22 of the FlexE group 12 to each of the FlexE clients 14. The calendar has a granularity of 5G and has a length of 20 slots per 100G of FlexE group 12 capacity. Two calendars are supported: an "A" and a "B" calendar. At any given time, one of the calendars is used for mapping the FlexE clients 14 into the FlexE group 12 and demapping the FlexE clients 14 from the FlexE group 12. The two calendars are provided to facilitate reconfiguration.

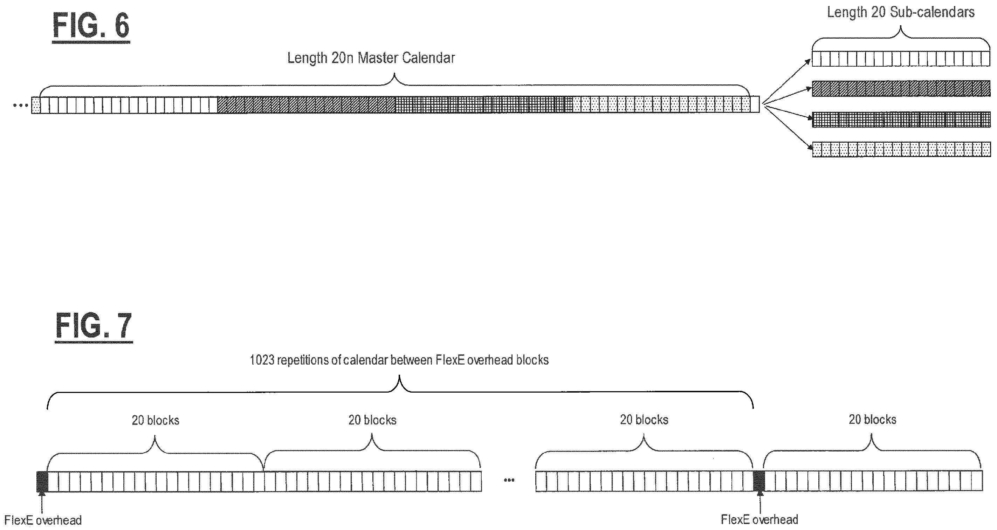

For a FlexE group 12 including n bonded 100GBASE-R PHYs, the logical length of the master calendar is 20n. The blocks as allocated per the master calendar are distributed to n sub-calendars of length 20 on each of the PHYs of the FlexE group as shown in FIG. 6. FIG. 6 is a diagram illustrating FlexE calendar distribution. The order of distribution of twenty blocks at a time is selected over simple "round robin" distribution of 66b blocks to facilitate addition of PHYs 22 to a FlexE group 12 without the need to change the calendar slots allocated to existing FlexE clients 14. Calendar slots are identified by their PHY number and the slot [0-19] (within that PHY). The calendar slots assigned to FlexE clients 14 do not change when PHYs are added or removed from the group 12. PHYs with calendar slots assigned to FlexE clients 14 cannot be removed from the group (or all FlexE clients 14 need to be moved to other PHYs or removed BEFORE a PHY is removed from the group). The "logical" sequence number of a calendar slot is 20×the PHY number plus the calendar slot number within the PHY. The sequence is ascending order. Note that the sequence numbering is not necessarily consecutive when the assigned PHY numbers are not contiguous. This logical order only matters when calendar slots on different PHYs are assigned to the same FlexE client 14.

### FlexE Overhead and Alignment

The alignment of the data from the PHYs 22 of the FlexE group 12 is accomplished by the insertion of FlexE overhead into a stream of 66b blocks carried over the FlexE group 12. The FlexE overhead is encoded as a 66b block which can be recognized independently of the FlexE client data. An illustration of the FlexE overhead on each PHY of the FlexE group is shown in FIG. 7.

On a 100GBASE-R PHY, a FlexE overhead block will occur approximately once per 13.1μs. The actual format of the FlexE overhead blocks is such that they occur in a repeating sequence of four blocks, so the sequence has a period of approximately 52.4μs. This sequence is used to align all of the PHYs 22 of the FlexE group 12 at the FlexE demux to reconstruct the sequence in the order of the master calendar so that the FlexE clients 14 can be recovered.

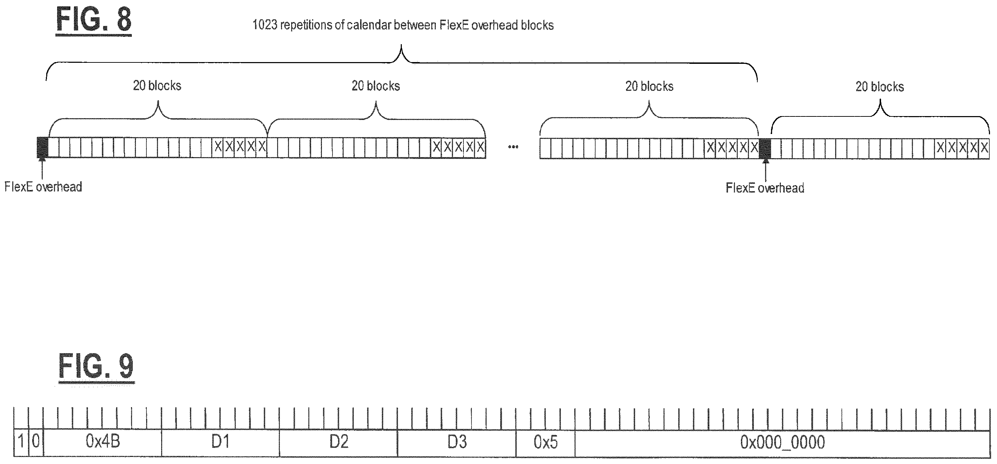

The scenario illustrated in FIG. 5 is supported by marking a certain number of the calendar slots as unavailable. This is different from "unused", in that it is known, due to transport network constraints, that not all of the calendar slots generated from the FlexE mux will reach the FlexE demux and, therefore, no FlexE client 14 should be assigned to those slots. The intention is that when a PHY 22 of the FlexE group 12 is carried across the transport network, the mapping is able to compress the signal to less than the PHY rate by dropping the unavailable calendar slots. A case where 25% of the calendar slots are unavailable is illustrated in FIG. 8.

The anchor position FlexE overhead is encoded as an ordered set (control block type 0x4B). A different "O" code (Operational Code) is selected (i.e. 0x5) which is different from that for the sequence ordered set used by Ethernet or the signal ordered set used by Fibre channel. The information to be transmitted in the FlexE overhead is encoded into the bytes D1, D2, and D3 of the overhead set block is shown in FIG. 9.

The information which needs to be included in the overhead includes:

- The number of PHYs 22 in the FlexE group 12;
- The identity (sequence) of this PHY 22 within the FlexE group 12;
- A way to transmit the programming of the calendars from the FlexE mux to the FlexE demux;
- A way to indicate which calendar ("A" or "B") is in use at this time; and
- A management channel. This may not be necessary in all applications (for example, if a network management system has direct access to the FlexE shim 15 at both ends of the connection), but may be useful for applications such as using FlexE for an n × 100G umbilicus to a remote shelf of lower-rate ports.

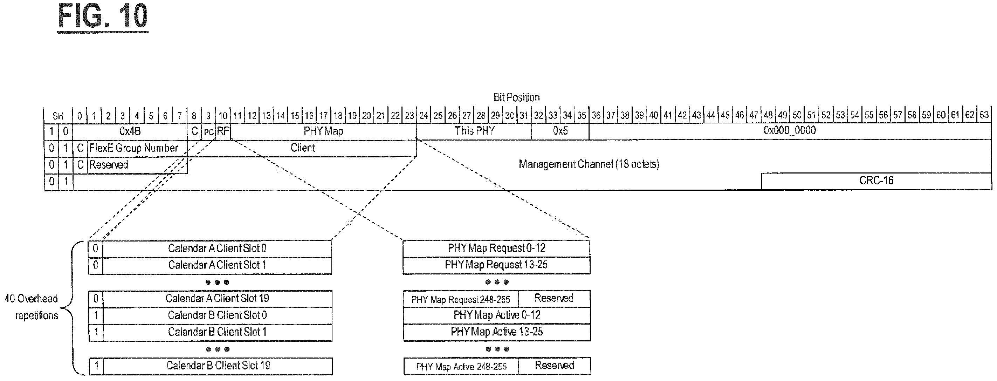

The amount of information to be conveyed from the FlexE mux to the FlexE demux exceeds the 24 bits available. This is addressed by spreading the relevant overhead across a sequence of four FlexE overhead blocks, each separated by 20 × 1023 FlexE data blocks. The encoding of the information in the sequence of four FlexE overhead blocks is illustrated in FIG. 10. The meaning, interpretation and processing of this overhead is explained in clause 7 of Contribution Number: oif2015.127.01. The first of each sequence of four FlexE overhead blocks is encoded as an ordered set as shown in FIG. 9. The next three FlexE overhead blocks are encoded as data 66b blocks at known locations based on the position of the ordered set block. The block with the higher order 2 bits of D1=00 serves as a marker to be used for alignment and re-interleaving of the sub-calendars from each of the PHYs 22 of the FlexE group 12 at the FlexE demux. The full sequence repeats once per approximately 52.4μs. Subject to the amount of buffer provided in a given implementation, skew detection and compensation across the PHYs 22 of the FlexE group 12 can be compensated up to a bit less than half of this amount.

### FlexE group functions

The FlexE group 12 includes from 1 to n 100GBASE-R PHYs 22. Each 100GBASE-R PHY 22 reuses nearly all of the functions as described for 100GBASE-R in IEEE Std 802.3-2015. This includes a subset of the functions of the PCS as described in clause 82, and all of the functions from sub-layers below the PCS as described in clauses 83, 86, 88, and 91-95 as appropriate according to the PHY type.

The FlexE shim 16 provides to each FlexE group PHY 22 a set of 64b/66b encoded blocks that are encoded according to Figure 82-4 in IEEE Std 802.3-2015. Within the PCS, clause 82, each FlexE group PHY reuses (with reference to Figure 82-2 in IEEE Std 802.3-2015) in the transmit direction, the scrambler, block distribution, and alignment insertion processes. In the receive direction, each FlexE group PHY reuses the lane block sync, alignment lock, and lane deskew (including Bit Error Rate (BER) monitor), lane reorder, alignment removal, and descrambling.

### FlexE clients

The format and standard bit rate of FlexE client 14 are described in clause 6.2 in IEEE Std 802.3-2015. However, FlexE also introduced the concept of flexible non-standard rates such as n x 25G (i.e. 175G, 225G, 300G ...). FlexE clients 14 generally originate from one of the following sources. A FlexE client 14 may be generated internally within a system, for example from a Network Processing Unit (NPU) within a router or the like. The packet flow is generated at the determined FlexE client 14 MAC rate and 64b/66b encoded according to IEEE Std 802.3-2015 Figure 82-4.

FlexE clients 14 at the rates of 10G, 40G, 100G, and in the future 25G and 400G can be created from an Ethernet PHY 22 at the corresponding rate with some processing to convert to the FlexE client 14 format and rate.

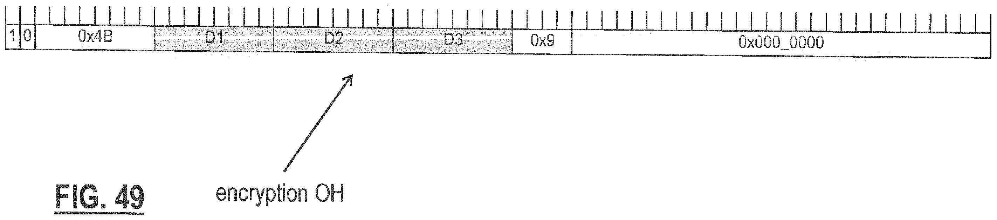

A 10GBASE-R signal will be converted to a 10G FlexE client signal format before presenting to a FlexE mux by using the idle insertion/deletion process as described in IEEE Std 802.3-2015 clause 82.2.3.6 (which will actually be doing idle deletion) to adapt the signal to the 10G FlexE client rate and align start of packet to an 8-byte boundary, encoding according to the 66b block format of Figure 82-4 in IEEE Std 802.3-2015 from the received format which uses the blocks according to Figure 49-7 in IEEE Std 802.3-2015. A 10G FlexE client signal coming from a FlexE demux can be converted to a 10GBASE-R signal format by using the idle insertion/deletion process as described in IEEE Std 802.3-2015 clause 49.2.4.7 (which will actually be doing idle insertion to compensate for the space that had been occupied by FlexE group lane alignment markers and FlexE overhead), which also aligns to 4-byte boundaries, and encodes the blocks according to Figure 49-7 in IEEE Std 802.3-2015.

The 25GBASE-R specification is currently under development in the IEEE P802.3by project. While the specification has not been finalized, judging from currently adopted baselines, converting a 25GBASE-R signal to a 25G FlexE client signal format is expected to involve correcting FEC errors (if FEC present), removing the FEC, removing the CWM (if present), trans-decoding to 64b/66b, and using the idle insertion/deletion process as described in IEEE Std 802.3-2015 clause 82.2.3.6 (which will actually be doing idle deletion to make room for the FlexE overhead) to adapt the signal to the 25G FlexE client rate and align start of packet to an 8-byte boundary, encoding according to the 66b block format of Figure 82-4 in IEEE Std 802.3-2015 from the received format which uses the blocks according to Figure 49-7 of the same standard. The conversion of a 25G FlexE client signal coming from a FlexE demux to a 25GBASE-R signal is expected to involve using the idle insertion/deletion process as described in IEEE Std 802.3-2015 clause 49.2.4.7 (which will actually be doing idle insertion to compensate for the space that had been occupied by FlexE overhead - the FlexE group lane alignment markers take the same proportion of the space as the CWM), 256b/257b transcoding, insertion of the CWM, and calculation and insertion of FEC, if appropriate.

A 40GBASE-R signal can be converted to a FlexE client 14 by serializing and deskewing the PCS lanes, removing the PCS lane alignment markers, and using the idle insertion/deletion process as described in IEEE Std 802.3-2015 clause 82.2.3.6 (which will actually be doing idle deletion to make room for the FlexE overhead) to adapt the signal to the 40G FlexE client rate. A 40G FlexE client 14 coming from a FlexE demux is converted to a 40GBASE-R interface by using the idle insertion/deletion process as described in IEEE Std 802.3-2015 clause 82.2.3.6 (which in this direction is generally doing idle insertion to restore the nominal bit-rate after removal of FlexE overhead), distributing the blocks round-robin to the four PCS lanes, and inserting PCS lane alignment markers.

A 100GBASE-R signal without FEC can be converted to and from a FlexE client 14 in the same manner as 40GBASE-R described above (except that the number of PCS lanes is 20 rather than 4). A 100GBASE-R signal with FEC, in converting to a FlexE client 14, also will correct any errors per the FEC code, remove the FEC, and trans-decode from 256b/257b prior to the idle insertion/deletion process. To convert a 100G FlexE client 14 coming from a FlexE demux to a 100GBASE-R signal with FEC involves the same processes as for 40GBASE-R, but in addition, transcoding the signal to 256b/257b, inserting the FEC lane alignment markers, and adding the FEC.

400GBASE-R is currently under development in the P802.3bs task force. This standard is not complete, but the process of converting to and from a 400G FlexE client 14 is expected to be similar to that for converting a 100GBASE-R client with FEC to and from a 100G FlexE client 14.

A FlexE client might come from another FlexE shim. In the case of transport network equipment which implements the FlexE shim 16, FlexE clients 14 can be delivered from the FlexE shim 16 at the transport network ingress to another FlexE shim at the transport network egress. The FlexE flow as a sequence of 64b/66b encoded blocks is expected to be carried over the transport network without packet loss. As no timing information is carried by this stream, idle insertion or padding is possible in the mapping over the transport network. The FlexE shim 16 at the network egress will only need to perform idle insertion/deletion according to IEEE Std 802.3-2015 clause 82.2.3.6, not due to any expected change in the nominal bit-rate, but simply to align the clock with that of the other FlexE clients 14 for the same shim.

**Interconnect flexibility**

Note that since the format of the FlexE client 14 is simply a logically serial stream of 66b blocks at a given rate, FlexE clients 14 do not need to be produced or received in the same manner at both ends of the connection. For example, a 10G, 25G, or 40G FlexE client 14 might be generated as a system internal signal in the main chassis of a system, connected using an n $\times$ 100G FlexE umbilicus to a satellite shelf, and connected to physical 10GBASE-R, 25GBASE-R, and 40GBASE-R ports on the satellite shelf. In the case where the FlexE mux is receiving a FlexE client 14 from a physical Ethernet port and the FlexE demux is delivering that FlexE client 14 to a physical Ethernet port, the two ports obviously have to be the same rate, but they do not have to be the same PHY type.

**FlexE overhead**

The format of the FlexE overhead is indicated in FIG. 10. The FlexE overhead is encoded as a 66b block and is inserted on each PHY 22 of the FlexE group 12. One overhead block is inserted after every 1023 iterations of the length 20 calendar of FlexE data blocks, so the sequence is one block of overhead followed by 1023 $\times$ 20 blocks of data followed by one block of overhead.

A FlexE overhead lock is achieved at the receiver (FlexE demux) by recognizing the FlexE "O" code used to send the first of every four FlexE overhead blocks, so the sync header is 10, the control block type is 0x4B (ordered set), and the "O" code is 0x5. Once FlexE overhead lock is achieved, the next expected FlexE overhead will be 1023 $\times$ 20 + 1 block positions later. While in FlexE overhead lock, bytes D1-D3 of the ordered set block, plus the data blocks occurring at 66B block positions 20461, 40922, and 122766 blocks beyond the ordered set block will be interpreted as FlexE overhead multiframe. FlexE overhead is not interpreted if not in FlexE overhead lock. FlexE overhead lock will be lost if the sync header, control block type, or O code do not match at the expected position for 5 occurrences.

**Calendar**

There are two calendars for each PHY 22 of the FlexE group 12: the "A" calendar (encoded as 0) and the "B" calendar (encoded as one). The two calendars are used to facilitate hitless reconfiguration. Normally, changes are only made to the calendar which is not currently in use. Exceptions would include initial link configuration or replacement of a failed circuit pack where it is necessary to download the calendar information into the replacement pack.

The calendar in use is signaled from the FlexE mux to the FlexE demux in bit position 2 of the first three of the four codewords in the FlexE multiframe sequence. While most of the FlexE overhead can be reliably protected by the Cyclic Redundancy Check (CRC), the calendar in use must be interpreted even if the CRC is bad, since the FlexE demux must switch its calendar in use at precisely the same multiframe boundary as the FlexE mux. So that this can be done reliably, three copies of the calendar in use are transmitted and interpreted by the receiver by majority vote. Since the three copies are separated into different FlexE overhead blocks across the multiframe (1,351,704 bits apart from each other), the different copies will never be affected by the same burst error. Since each PHY should have a BER of $10^{-12}$ or better, the probability of two instances of the calendar in use being wrong is no more than $10^{-24}$, which can safely be ignored.

When the calendar in use changes from a 0 to a 1, or from a 1 to a zero, the calendar used by both the FlexE mux and the FlexE demux will be changed beginning with the first FlexE data block of the next FlexE overhead ordered set block.

The set of PHYs 22 in the FlexE group 12 (not necessarily consecutive) are indicated in the "PHY Map Active" portion of the PHY Map field of the FlexE overhead, distributed over the same group of forty sets of four blocks of FlexE overhead as are used to transmit the contents of the two calendars as described herein. The identity of this PHY 22 in the FlexE group (from 1 to n) is encoded in the D3 byte of the FlexE overhead ordered set block. Note that this is persistent information which does not change frequently. The receiver accepts a value for "This PHY" when seen identically for the second time in frames with a good CRC, and updates to the PHY map bit map are accepted from frames with good CRC. The "PHY Map Request" bits of the PHY map are used for a protocol for the addition and removal of PHYs from the FlexE server group as described herein.

The contents of both the A and B calendar are transmitted continuously from the FlexE mux to the FlexE demux, with one calendar slot being programmed in each multiframe of the FlexE overhead. The PC bit indicates which calendar (0=the "A" calendar and 1=the "B" calendar). All slots of the A calendar are programmed (20 muliframes, one for each slot), followed by all slots of the B calendar (20 multiframes). The PC bit will be equal to 0 for the twenty multiframes for programming of the "A" calendar, and equal to 1 for the twenty multiframes for programming of the "B" calendar. The receiver (FlexE demux) achieves calendar lock when the PC bit changes from 0 to 1 or from 1 to 0 in consecutive multiframes with a good CRC. The receiver loses calendar lock if the expected value of the PC bit is wrong in a multiframe with a good CRC.

The calendar is programmed in the same order as the calendar is in the frame from slots 0 to 19, starting with the first multiframe where PC=0 (or is expected to be zero while in calendar lock) for the A calendar and the first multiframe where PC=1 (or is expected to be 1 while in calendar lock) for the B calendar.

The Client field indicates which of the FlexE clients is mapped into a given calendar slot. The size of a given FlexE client can be calculated based on the number of calendar slots that client is assigned to. The Client is a 16-bit field transmitted in the 2nd and 3rd octets in the second "row" of the multiframe (the first data block after the ordered set). The value 0x000 indicates a calendar slot which is unused (but available). The value 0xFFFF (all ones) indicates a calendar slot which is unavailable, for a case where the full FlexE group PHY rate cannot be carried over the transport network.

Calendar slot assignment changes are ignored while not in Calendar lock. Any change to which client is mapped into a calendar slot is ignored in a frame with a bad CRC. The full contents of both calendars are transmitted from the FlexE mux to the FlexE demux approximately once every 2ms. The fact that the calendars are transmitted continuously avoids an inconsistency between the calendars at the FlexE mux and the FlexE demux due to a lost message.

The normal process of reconfiguration (e.g., adding new FlexE clients 14 to the FlexE group 12 or resizing a FlexE client 14) will involve programming the new configuration into the calendar which is not in use, then switching to the updated calendar, and finally updating the original calendar. The FlexE mux should wait for at least 3 cycles of transmission of the full calendar after the last update before switching the updated calendar to be the new calendar in use as described in clause 7.3.2 in IEEE Std 802.3-2015. This provides a vanishingly small probability that a calendar update has not been successfully received without requiring an Acknowledgement (ACK).

**Management Channel**

Certain applications may require the use of a management channel between the FlexE mux and the FlexE demux. The management channel may not be required for an application where a single management system or controller has access to the FlexE shims 16 on both ends of the FlexE group 12, but certain applications such as using FlexE for an n × 100G umbilicus to a remote shelf may use the management channel for communication with the controller in the remote shelf for configuration, alarming, software update, etc. When the management channel is not used, it is transmitted as zeros before scrambling

The format of the management channel is not specified and is application specific. The management channel occupies 18 bytes of each FlexE overhead multiframe. The total capacity of the management channel is approximately 2.749 Mb/s.

Each PHY 22 of the FlexE group can carry its own management channel. The management channels are not aggregated across the FlexE group to keep open the possibility to pass back remote failure indications, for example, losing one of the PHYs 22 of the FlexE group 12. Most likely protocols that would be carried over this type of channel would be message oriented and would have some sort of frame check sequence on each packet, and therefore not require marking bytes of the management channel as bad if the CRC on the FlexE overhead is bad.

**FlexE Group number**

For some applications, it may be desirable to be able to distinguish one FlexE group 12 from another: for example, an 8-port device which is capable of being provisioned as a single 8-port group or two 4-port groups may create a situation where the PHY numbers could overlap between different groups. For such a situation, a 7-bit FlexE group number is provided which allows for checking that the correct PHY 22 is being received from the correct group number. When this field is used, it must be provisioned to the same value in both directions. When a non-zero value is provisioned, the received group number will be checked against the provisioned group number, and any mismatch will be alarmed to indicate the misconnection.

## Reserved bits

18 bits per FlexE overhead multiframe are reserved for possible future extensions to this implementation agreement. The reserved bits shall be transmitted as zero before scrambling. An implementation could choose to treat receipt of non-zero in the reserved bits in a multi-frame with a good CRC as a minor alarm, as it could indicate interconnection with a future version of this implementation agreement that is not known to be interoperable. An implementation could also choose to ignore these bits on receipt and leave the responsibility to an implementation of a newer version of the implementation agreement to recognize receipt of zeros as an indication of interconnection with an older version, and presumably the newer version knows whether it is interoperable with the older version.

## CRC-16

Primarily to avoid corrupting the content of the calendars in the presence of bit errors, the FlexE overhead is protected by a CRC. The CRC is calculated over the following bits across the four rows of the FlexE overhead multiframe (in the order transmitted and received, not the order described):

- The D1, D2, and D3 bytes of the ordered set overhead block
- All eight octets after the sync header of the 2nd and 3rd overhead data blocks
- The first six octets after the sync header of the 4th overhead data block.

The CRC is calculated using the polynomial $x^{16} + x^{12} + x^5 + 1$. This value is inserted by the FlexE mux into the transmitted overhead. It is calculated by the FlexE demux over the same set of bits and compared to the received value. Various overhead described in the previous clauses is either accepted or ignored based on whether the CRC matches the expected value.

## FlexE Mux data flow

The FlexE Mux creates a logically serial stream of 66b blocks by interleaving FlexE client signals, according to a master calendar of length 20n slots for a FlexE group including n 100GBASE-R PHYs. Each slot corresponds to 5G of bandwidth. A FlexE client is assigned a number of slots according to its bandwidth divided by 5G. The master calendar is distributed as described earlier in FIG. 6.

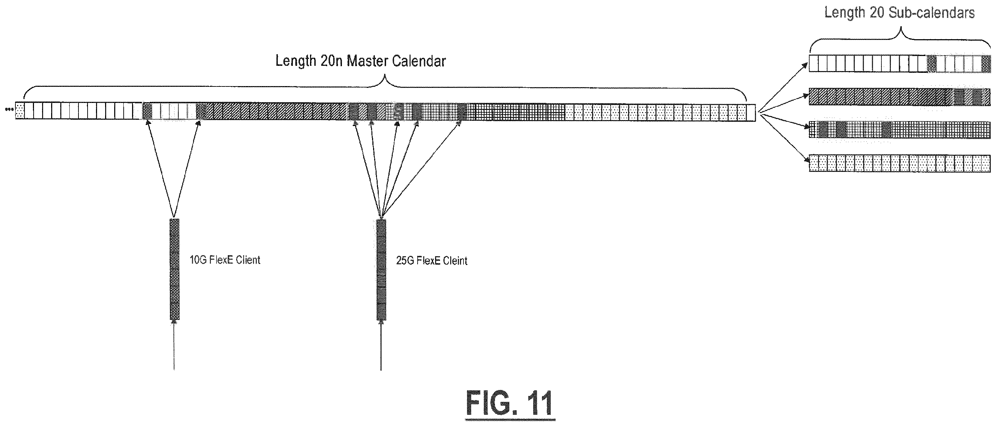

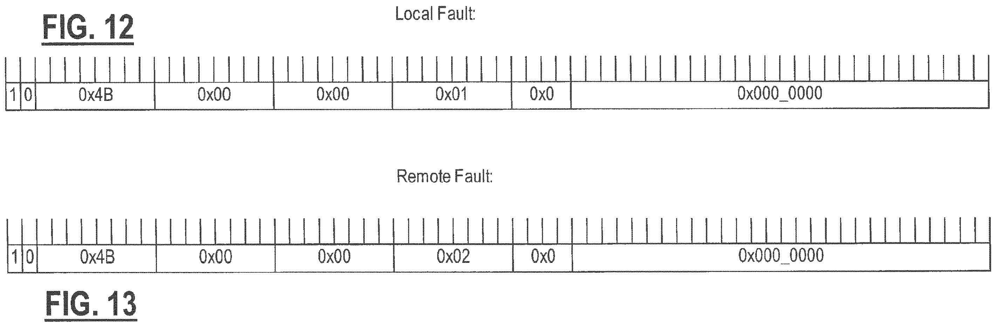

FIG. 11 presents an example of insertion of different bandwidth FlexE clients 14 into a logical master calendar. The slots assigned to a particular FlexE client 14 do not all need to be on the same PHY 22 of the FlexE group 12, and new clients 14 can be added as long as there are sufficient slots available. Any slot in the master calendar which is either "unassigned" or "unavailable" will be filled with Ethernet Error control blocks with the format given in FIG. 12. This ensures that any error in calendar slot assignment cannot appear to the FlexE demux as valid FlexE client data. Any incoming FlexE client 14 which has failed (e.g., one created from a physical Ethernet signal where the signal has failed, or failure to achieve block lock) will cause the slots assigned to that FlexE client 14 to be filled with Ethernet Local Fault ordered sets with the format as given in FIG. 13.

These rules allow for the creation of the complete data sequence on each PHY 22 of the FlexE group 12. The FlexE overhead is inserted onto each FlexE group PHY after every 1023 repetitions of the calendar sequence in the same relative position to the calendar sequence on every PHY 22. This provides a marker which allows the data from the different PHYs 22 of the FlexE group 12 to be re-interleaved in the original sequence so that the FlexE clients 14 can be extracted. The 66b block stream is then converted into the format for the individual FlexE group PHY, which includes block distribution and alignment marker insertion, along with (if applicable) 256b/257b transcoding and FEC calculation and insertion.

## FlexE Demux data flow

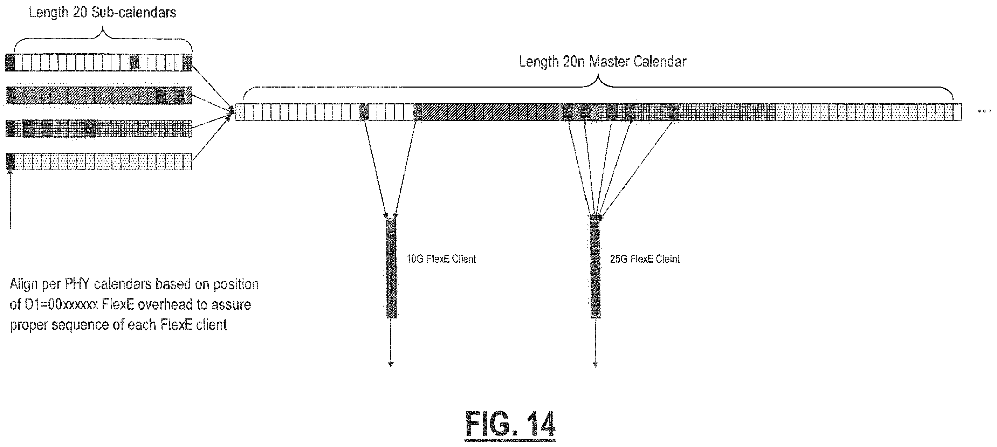

The FlexE Demux operates on a sequence of 66b blocks received from each PHY 22 of the FlexE group 12. Recovering this sequence of blocks includes (if applicable), FEC error correction and FEC remove and trans-decoding to 64b/66b, PCS or FEC lane alignment, reinterleaving, and alignment marker removal. Once this has occurred, the PHYs 22 of the FlexE group 12 are re-interleaved so that FlexE clients 14 can be recovered as illustrated in FIG. 14. Note that the FlexE overhead multiframe repeats on a cycle of approximately 52.4μs, which allows measuring skew differences between PHYs 22 of the FlexE group 12 of approximately ±25μs.

## Skew tolerance requirements

The amount of skew to be expected between the PHYs 22 of the FlexE group 12 are application specific. Skew requirements are specified for two classes of applications - low skew and high skew applications. Low Skew Applications include intra-data-center applications, plus those transport network applications where the FlexE shim 16 is implemented in the transport equipment, and the FlexE clients 14 rather than the PHYs 22 of the FlexE group 12 are carried across the transport network. The skew tolerance requirement for low skew applications is 300ns. Note that the intra-PCS-lane skew tolerance requirement for 100GBASE-R is 49ns. A larger skew budget is established for FlexE applications of similar reach to account for the fact that the PCS lane deskew is not synchronized across the PHYs 22 of the FlexE group 12, and there may be other variation, such as cable length, or even heterogeneous 100GBASE-R PHY types which are not present in a single 100GBASE-R interface.

High Skew Applications include transport network applications where the PHYs 22 of the FlexE group 12 rather than the FlexE clients 14 are carried over the transport network (FlexE unaware transport). The skew tolerance requirement for high skew applications is $10\mu s$. This is established to account for about $6\mu s$ of dispersion-related skew if the PHYs are mapped over lambdas at opposite ends of the "C" band over large distances (e.g., trans-pacific), with extra margin for things like split-band amplifiers and patch cords or the processing time to crunch and uncrunch the signal in the case where not all of the calendar slots can be carried over the transport network connection.

If the intra-PHY skew exceeds the skew tolerance, the FlexE clients 14 will not be demapped from the incoming PHYs 22, but will be sent continuous Ethernet Local Fault Ordered sets as illustrated in FIG. 13 at the FlexE client rate. If one or more of the PHYs 22 of the FlexE group 12 has failed (e.g., loss of signal, failure to achieve block lock or alignment lock, high BER, or any other condition that results in PCS_Status=FALSE), the FlexE clients 14 will be sent continuous Ethernet Local Fault Ordered sets as illustrated in FIG. 13 at the FlexE client rate. In addition, when one or more of the PHYs 22 of the FlexE group 12 have failed continuous remote fault ordered sets will be sent back over the FlexE group 12 in the calendar slots assigned to any FlexE clients 14, and the RF bit will be set in the FlexE overhead of every PHY in the FlexE group toward the far-end shim.

## Addition and Removal of PHYs from a FlexE Group

In general, only one PHY 22 should be added to or removed from a FlexE group 12 at a time. An added PHY 22 begins with all of its calendar slots (except those provisioned as unavailable) as unused. Prior to removing a PHY 22, all clients must be removed from all of its calendar slots in both the "A" and the "B" calendar, i.e., all calendar slots which are not provisioned as "unavailable" will be "unused". Addition and removal of PHYs does not change the (PHY,slot) identifier for any calendar slot on any other PHY, and does not change the order of calendar slots assigned to any currently provisioned FlexE client 14.

Addition and removal of PHYs are controlled by the "PHY map active" and "PHY map request" fields of the FlexE overhead. Changes to either of these fields are only accepted from overhead multiframes with a good CRC. These fields are sent identically on every current PHY of the FlexE group. The receiver may choose to receive these fields from multiple PHYs (so if a CRC is bad on one PHY, it receives it from another), or may choose to receive the overhead from only one PHY and rely on the fact that the overhead is repeated in a continuous cycle to receive eventually updates through repetition.

Whether the PHY addition procedure to add a new PHY to the group is initiated from one or both ends is application dependent. The new PHY might be added at both ends by the management or control system, or one end might be the master and the other the slave, with the slave echoing back the PHY addition request initiated by the master. The initiation procedure begins by changing the bit position in the "PHY map request field" from a zero to a one, bringing up the new PHY, and transmitting the FlexE overhead on the PHY to be added.

The PHY is considered added once the following conditions are met:

- The far end has also changed the bit position for the PHY to be added from zero to one in the "PHY map request" field.
- PCS _status=TRUE for the PHY to be added (no Loss of Signal (LOS), block lock and AM lock have been achieved on every PCS lane, no hi_ber).
- FlexE overhead lock and calendar lock are achieved on the added PHY, the expected value is being received in the "This PHY" field, and the FlexE overhead being received is within the skew tolerance with the rest of the FlexE group.

Once these conditions are met, the bit position corresponding to the added PHY is changed from a zero to a one in the "PHY map active" field. FlexE clients 14 may not be assigned to the newly added PHY until both the near end and the far end are indicating a one in the "PHY map active" field for the new PHY.

For PHY removal, all FlexE clients 14 must be removed from the A and the B calendars on a PHY before it can be removed. Any calendar slot not provisioned as "unavailable" must be "unused" in both calendars on the PHY. Whether the initiation procedure occurs from one or both ends is implementation dependent - both ends could be configured, or the controller at the far end could echo back the near end request in a master/slave configuration. The procedure begins by changing the PHY Map Request bit corresponding to the PHY to be deleted from a one to a zero. After the near end has changed the PHY Map Request bit to a zero, when the far end also has changed its PHY Map Request bit to a zero, the near end changes its PHY Map Active bit to a zero. The PHY is considered deleted once a zero is being received in the PHY Map Active bit from the far end. The FlexE overhead continues to be sent on the PHY being deleted until the far end is indicating zero in its PHY Map Active bit corresponding to the PHY.

**FlexE Management**

For FlexE group management, the control variables are the number of PHYs 22 in the FlexE group. The status variables are PHY_align - True if all PHYs in the FlexE group are being received and are within the skew tolerance of the implementation. False if one or more of the incoming PHYs has failed or if the inter-PHY skew exceeds the skew tolerance of the implementation.

For FlexE group management, per PHY, note that all 100GBASE-R control and status variables in or below the PCS are applicable to each PHY of the FlexE group 12.

Control Variables:

- PHY number (within the FlexE Group)
- Number of available Calendar Slots (20 except when entire PHY can't be carried across the transport network)
- Mux_Calendar_A[0..19] and Mux_Calendar_B[0..19] The FlexE client that is mapped into each of the respective calendar slots in the transmit direction. The initial default for all calendar slots is UNUSED, except in the case where the number of available calendar slots is less than 20, in which case the first AVAILABLE number of slots default to UNUSED and the rest default to UNAVAILABLE.
- Tx_Calander_in_use - Indicates whether the A or the B calendar is currently active.

Status Variables

- Demux_Calendar_A[0..19] and Demux_Calendar_B[0..19] The FlexE client that the far end has mapped into each of the calendar slots in the received direction. The initial default for all calendar slots (prior to information received from the far end) is UNUSED, except in the case where the number of available calendar slots is less than 20, in which case the first AVAILABLE number of slots default to UNUSED and the rest default to UNAVAILABLE.
- Rx_Calendar_in_use - Indicates the calendar being used at the current time by the far end.

**Transport Network Mappings for Flex Ethernet Signals**

Three different methods of mapping of FlexE signals over transport networks are possible. The case of FlexE unaware transport involves the transport network mapping each of the Ethernet PHYs independently over the transport network using a PCS codeword transparent mapping. Since the FlexE mux and FlexE demux are separated by transport network distances, this requires a "high skew" implementation of the FlexE shim 16.

Note that certain existing OTN mappers/demappers are not fully PCS codeword transparent with respect to LF and RF ordered sets, and may mistake an LF or RF sent for an individual FlexE client as an LF or RF for the entire link and bring the link down. This is not an issue in the case of FlexE unaware transport of simple bonding to carry a larger rate flow, as a failure of the single high-rate FlexE client is equivalent to a failure of the group. But it may be an issue if FlexE unaware transport is used to carry a group of multiple lower-rate FlexE client services using less than fully PCS codeword transparent mappings.

The next case is where the FlexE shim 16 is implemented in the transport network equipment, and rather than carrying the PHYs 22 of the FlexE group 12 over the transport network, the FlexE clients 14 are carried over the transport network. The 64b/66b encoded FlexE client rate is:

$$\text{FlexE Client MAC rate} \times \frac{66}{64} \times \frac{16383}{16384} \times \frac{20460}{20461} \pm 100\text{ppm}$$

Note that while this is the stream of blocks presented to the transport network from the FlexE shim 16 to be carried, since this stream does not have any timing information, the transport network is not required to signal at this rate: idle insertion/deletion or padding may be used in the mapping specified by ITU-T if it provides a more convenient rate for the transport.

When a FlexE client 14 is mapped in this manner, it may be connected at the OTN egress to another FlexE shim 16 where it will be clock aligned with other FlexE clients 14 carried over the same FlexE group 12. It may also be connected to an Ethernet PHY 22 with the same nominal MAC rate as the FlexE client 14 using the appropriate conversion as described herein.

Note that in the case where it is necessary to connect a FlexE client 14 to an Ethernet PHY 22 across an OTN where the Ethernet PHY 22 uses a legacy mapper/demapper, it may be necessary to perform the conversion of the FlexE client 14 to the Ethernet PHY format according to clause 7.2.2 immediately after the FlexE shim 16 and to map the FlexE client 14 over OTN as if it were an Ethernet PHY 22 of the corresponding rate. This second case can use a "low skew" implementation of the FlexE shim 16 as described herein.

The third case is where the FlexE shim 16 is not terminated in the transport network equipment, but the transport network equipment "crunches" the PHY 22 of the FlexE group 12 by discarding unavailable calendar slots at the transport network ingress and re-inserting them at the transport network egress. The mapping of this requires serializing and deskewing the PCS lanes of the PHY, then discarding all "UNAVAILABLE" calendar slots from the structure to reduce the bit-rate. For example, if only 15 of 20 calendar slots are available, there are effectively 1023 repetitions of a length 15 calendar after discarding the unavailable slots. At the transport network egress, the unavailable slots are restored to the FlexE PHY stream of 66b blocks (inserting error control blocks as illustrated in FIG. 12. The net bit-rate of this reduced-rate flow when there are "n" available calendar slots is:

$$103.125\,\text{Gb/s} \times \frac{16383}{16384} \times \frac{1 + 1023n}{20461} \pm 100\text{ppm}$$

### FlexO and FlexE

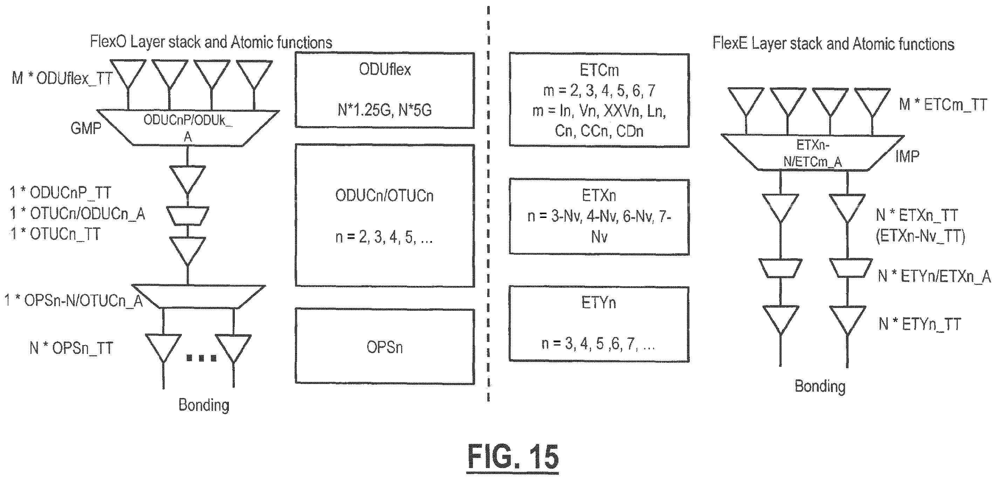

Referring to FIG. 15, in an exemplary embodiment, a diagram illustrates a comparison between the layer stack and atomic functions of FlexO and FlexE. Of note, FlexO and FlexE are converging and look alike in the layer stack and atomic functions. In various exemplary embodiments, the systems and methods described herein contemplate FlexE as becoming the next B100G multiplexed structure. For example, map Low Order (LO) Optical channel Data Unit-j (ODUj), High Order (HO) Optical channel Data Unit-k (ODUk) and ETY right into a FlexE shim 16. The FlexE group 12 can be a section layer, and the FlexE client 14 (the 64b/66b stream, which could be OTN) can become a switchable Operations, Administration, and Maintenance (OAM) service.

### FlexE Switching

The FlexE switching systems and methods provide various implementations and related ideas for TDM switching FlexE. As described above, the FlexE implementation agreement (in OIF) defines a TDM frame structure using 20x calendar slots per 100G group. These include 5G 64b/66b block streams distributed in a round-robin fashion to create a TDM structure.

The FlexE switching systems and methods deal with mapping such 64b/66b block streams into Synchronous Transport Signal-n (STS-n) structures, to be switched using legacy systems and fabrics. This can include mapping 64b/66b into STS using asynchronous stuffing, mitigating against skew across a fabric, and performing frequency and phase alignment for the 64b/66b into a synchronous system. Some transcoding techniques can be applied to lower bandwidth and fit into an STS-n where n is a standard number (such as STS-192).

Also, the FlexE switching systems and methods deal with mapping 64b/66b blocks into existing P-OTS cell switch architectures. The FlexE TDM slots are SARed (Segmentation and Reassembly) using OIF OTN over Packet (OPF) techniques and can be switched as a TDM stream across existing fabrics, co-locating packet and OTN traffic. OIF OPF is described in IA # OIF-OFP-01.0, "OTN Over Packet Fabric Protocol (OFP) Implementation Agreement" (November 2011), FlexE is beyond the scope of IA # OIF-OFP-01.0, but uses similar concepts. Timing transparency can be used for transparent switching of the 64b/66b streams.

Finally, the FlexE switching systems and methods deal with possible new TDM fabric architectures optimized around switching 64b/66b blocks and streams. The FlexE shims 16 can be used in on-ramp/off-ramp logic of a line card and can also be used to pack 64b/66b blocks on fabric links.

The FlexE switching systems and methods can be used to augment existing switch fabrics, P-OTS and OTN platforms. Further, the FlexE switching systems and methods can be used in next-generation switches, such as for use in applications which have not adopted OTN to date (e.g., intra data center applications).

Referring back to FIG. 7, FlexE introduces the concept of calendar slots, using 64b/66b block boundaries with 5G granularity (20 per 100G). These could be switched and moved around in a TDM fashion, similar to SONET/SDH STS-1 timeslots. This could include a partial termination of the FlexE shim 16, but keeping 64b/66b blocks intact. The scheme is completely agnostic to the content or grouping of the 64b/66b stream. The container to send FlexE slots from a line card to a fabric can also be a FlexE shim 16 using standard 100GE interfaces or the like.

**FlexE-based switching fabric**

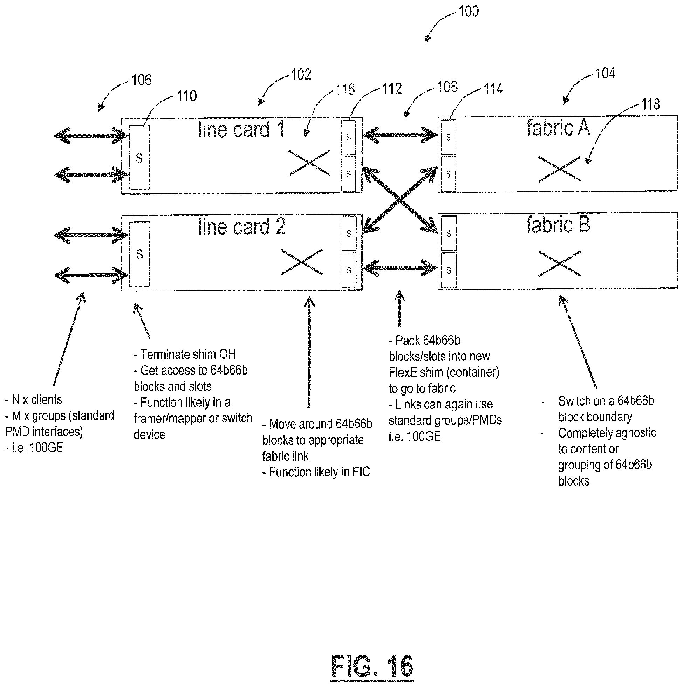

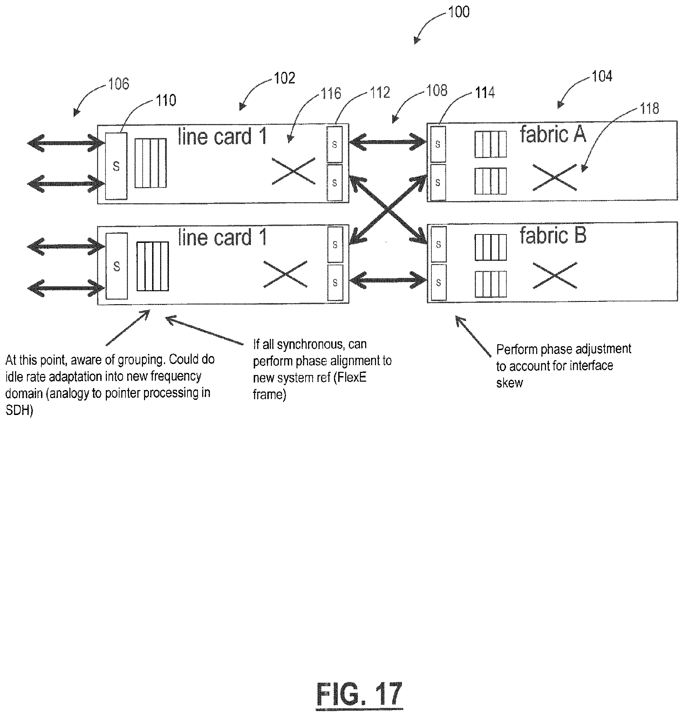

Referring to FIGS. 16 and 17, in an exemplary embodiment, block diagrams illustrate a FlexE switch 100 showing FlexE transparent (FIG. 16) and showing FlexE termination (FIG. 17). The FlexE switch 100 is a new fabric, optimized for FlexE switching, i.e., the FlexE switch 100 is not a SONET/SDH STS switch, a P-OTS or OTN switch. For illustration purposes, the FlexE switch 100 is illustrated with two line cards 102 and two fabrics 104. In FIG. 16, the line cards 102 include ingress/egress ports 106 which can be communicatively coupled externally to the FlexE switch 100. The line cards 102 connect to one another via the fabrics 104 through interfaces 108, such as a backplane, midplane, etc. In an exemplary embodiment, the FlexE switch 100 is a Clos-based switch between the line cards 102 and the fabrics 104. In physical implementations, the line cards 102 and the fabrics 104 include circuitry for implementing the functions described herein, and the ports 106 and the interfaces 108 are interconnection mechanisms.

Those of ordinary skill in the art will recognize the FlexE switch 100 can include other components which are omitted for illustration purposes, and that the systems and methods described herein are contemplated for use with a plurality of different hardware configurations with the FlexE switch 100 presented as an example. For example, in another exemplary embodiment, the FlexE switch 100 may not include the fabrics 104, but rather have the corresponding functionality in the line cards 102 (or some equivalent) in a distributed fashion. For the FlexE switch 100, other architectures providing ingress, egress, and switching are also contemplated for the systems and methods described herein.

The ports 106 can include N x FlexE clients 14 over M x FlexE groups 12, with standard PMD interfaces (e.g., 100GbE). The line cards 102 can include a FlexE shim termination block 110, facing the ports 106, and a FlexE shim termination block 112, facing the interfaces 108. The fabrics 104 can include a FlexE shim termination block 114, facing the interfaces 108 and a FlexE shim termination block 112. The FlexE shim termination blocks 110, 112, 114 can include circuitry to perform the following functions.

The FlexE shim termination block 110 is configured to terminate FlexE shim overhead and to provide access to 64b/66b blocks and slots. The FlexE shim termination block 110 functions similar to a framer/mapper in a switch device. The line cards 102 include switching circuitry 116 which can operate as a first stage and a third stage (or ingress stage and egress stage) in a Clos-architecture. The switching circuitry 116 is configured to move around (switch) 64b/66b blocks to an appropriate fabric link, on the interfaces 108. The switching circuitry 116 can operate similarly in a Fabric Interface Controller (FIC).

On the interfaces 108, the FlexE shim termination blocks 112, 114 pack 64b/66b blocks into a new FlexE shim (container) to go to the fabric. The links on the interfaces 108 can use standard groups/PMDs, such as FlexE in a Chip-to-Chip (C2C) application described in commonly-assigned U.S. Patent Application No. 14/824,715, filed August 12, 2015, and entitled "FLEXIBLE ETHERNET CHIP-TO-CHIP INTEFACE SYSTEMS AND METHODS". The fabrics 104 include switching circuitry 118 which can operate as a second stage (or center stage) in the Clos-architecture. The switching circuitry 118 is configured to switch on a 64b/66b block boundary and is completely agnostic to the content or grouping of the 64b/66b blocks.

FIG. 17 illustrates an exemplary operation of the FlexE switch 100. The FlexE switch 100 utilizes a synchronous scheme. However some idle adaptation (part of full shim function and based on 802.3 clause 82) could be performed at entry/exit of the line card 102. The fabrics 104 can utilize frequency and time (phase and frequency) synchronization (to keep proper order and handle groups of slots/blocks). The time synchronization could be based on FlexE frame boundaries, i.e., an analogy to 8k from SDH. This could allow hitless switching with FlexE given that all flows are aligned.

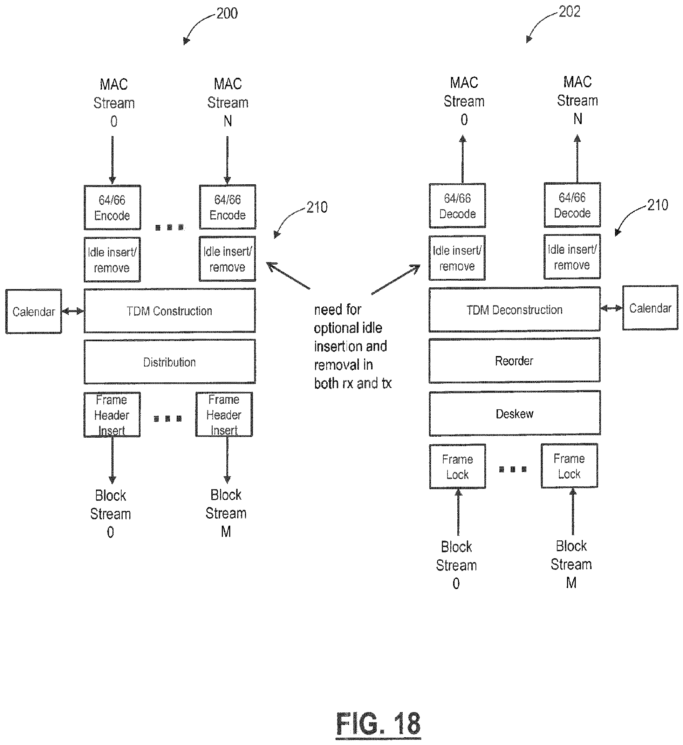

Referring to FIG. 18, in an exemplary embodiment, block diagrams illustrate processing performed by the line cards 102 at the ports 106. Specifically, FIG. 18 includes ingress processing 200 and egress processing 202. The FlexE switch 100 can include idle adaptation 210 based on 802.3 clause 82 scheme, which is analogous to pointer processing performed in SONET/SDH. The idle adaptation 210 could be done at ingress/egress of the FlexE switch 100, i.e., at the ports 106, and could be part of the FlexE shim function, i.e., the FlexE shim termination block 110.

The ingress processing 200 is configured to take N MAC streams and output M block streams. The N MAC streams are 64b/66b encoded, the idle adaptation 210 is performed, i.e., idle insert/remove based on clause 82, TDM construction is performed with the calendar, distribution is performed, and a frame header is inserted into the M block streams. The egress processing 202 is configured to take M block streams and output N MAC streams. The M block streams are frame locked, deskewed, reordered, TDM deconstructed with the calendar, the idle adaptation 210 is performed, again based on clause 82, i.e., idle insert/remove, and 64b/66b decoded.

**FlexE-based switching using a SONET/SDH STS fabric**

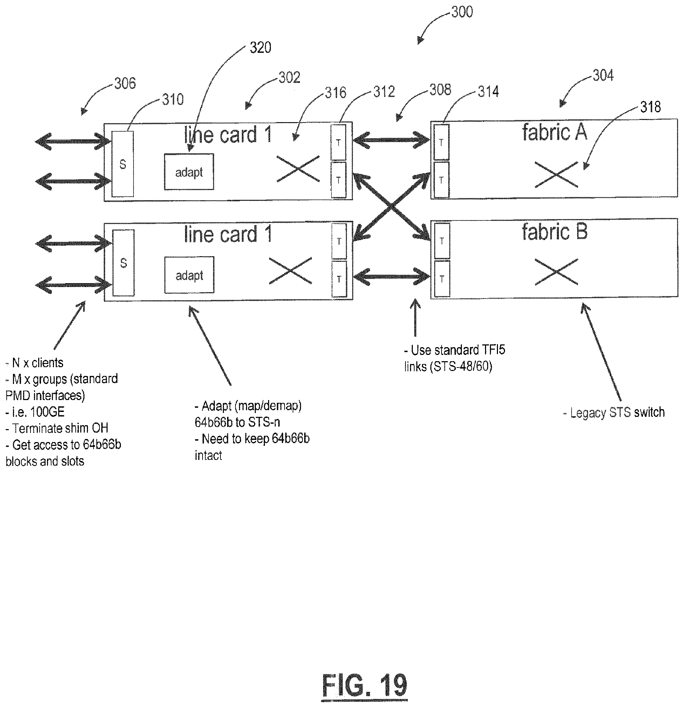

Referring to FIG. 19, in an exemplary embodiment, a block diagram illustrates an STS switch 300 adapted to support FlexE. The STS switch 300 is a TDM fabric that supports SDH/SONET switching at the STS-1 level and a TDM Fabric with Frame Interface (TFI). The STS switch 300 is adapted to support further FlexE switching. The STS switch 300 includes line cards 302, fabrics 304, ports 306, and interfaces 308. The line cards 302 include a FlexE shim termination block 310 and a TFI block 312 and the fabrics 304 include a TFI block 314. Also, the line cards 302 include switching circuitry 316 and the fabrics 304 include switching circuitry 318.

The STS switch 300 is configured to adapt 64b/66b blocks into STS-n. The rate of the calendar slots is (100GE / 20 - (20*1024)/(1+20*1024)) = 5.15G which requires an STS-100 container for 64b/66b. The STS switch 300 is configured to transcode 64b/66b into 256B/257B (from IEEE 802.3bj), specifically 5.15G * 32/33 * 257/256 = 5.013G, which requires an STS-97. The STS adaptation can implement various "tricks" or the like to fit into the 64b/66b blocks into less spaces, such as to reuse a part of the STS and use the idle adaptation to get to STS-96, which is a meaningful number in SONET/SDH. Since the minimum FlexE client granularity is 10G, it is possible to group 2x slots and map into an STS-192c. The STS switch 200 can use a special 64b/66b "O code," i.e., 0x9, as stuffing to fit FlexE 64b/66b stream into the STS-n frame format. The STS switch 300 can phase align FlexE frame boundaries to SDH 8k to preserve 64b/66b block skew for groups of calendar slots.

At the ports 306 and the FlexE shim termination block 310, there are N x clients and M x groups (which can include standard PMD interfaces). The FlexE shim termination block 310 terminates the shim overhead and provides access to the 64b/66b blocks and slots. The STS switch 300 includes adaptation circuitry 320. The adaptation circuitry 320 is configured to adapt (map/demap) 64b/66b to STS-n while keeping bit transparency for the 64b/66b stream. Subsequent to the adaptation circuitry 320, the STS switch 300 provides STS switching. Specifically, the switching circuitry 316, 318 provides STS level switching and the TFI blocks 312, 314 utilize standard TFI5 links.

FlexE-based switching using OPF

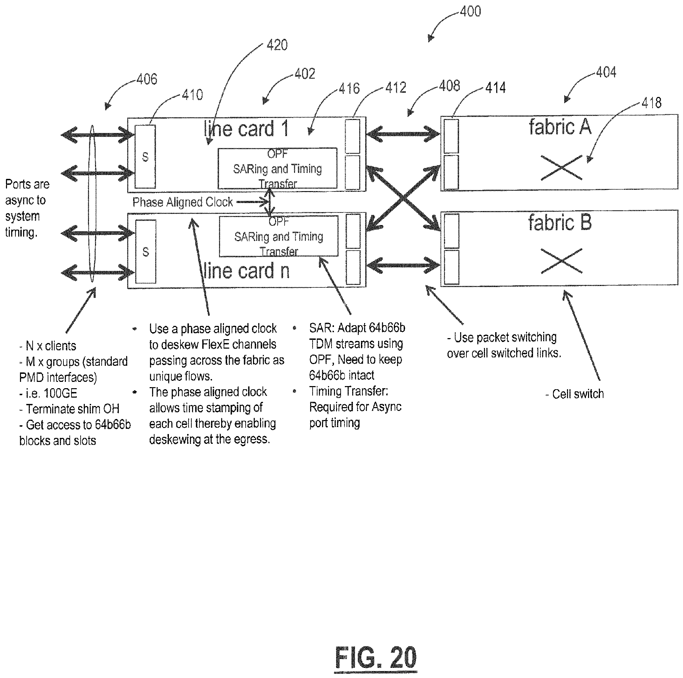

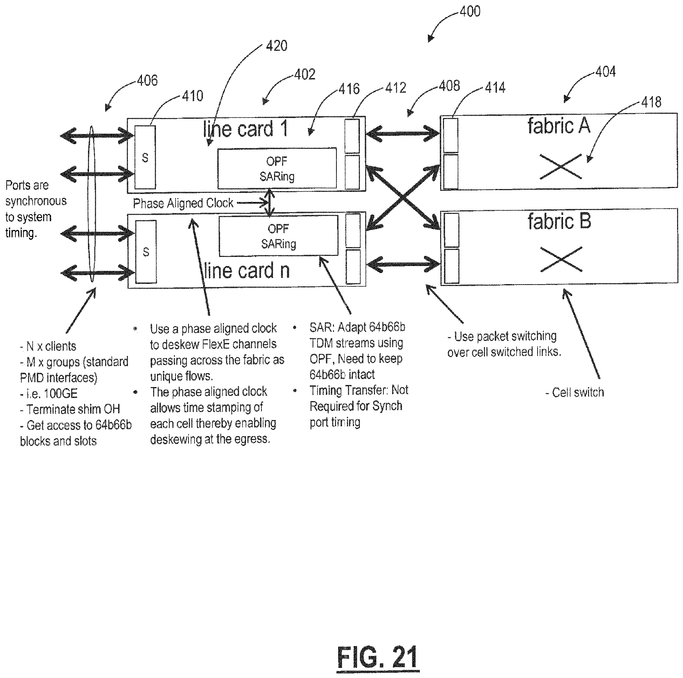

Referring to FIGS. 20 and 21, in an exemplary embodiment, block diagrams illustrate an OPF switch 400 adapted to support FlexE. Note, OPF is described in IA # OIF-OFP-01.0 "OTN Over Packet Fabric Protocol (OFP) Implementation Agreement" (November 2011), The objectives of the OPF switch 400, for FlexE switching, include maintaining 64b/66b coding; switching in N x 5G units, i.e., a single 5G calendar slots or a full client flow; maximizing fabric bandwidth efficiency (by minimizing header and/or payload); providing timing transparency using B+/-1; performing byte alignment of payload units for ease of re-creating FlexE stream; minimizing fabric related skew between bonded flows; and performing error detection across fabric between SARs. It may be assumed that the fabric packets are not required to carry an integral number of FlexE payload units, and the fabric maintains packet order within a flow.

An OPF header includes 32 bits, as follows: Timestamp (16), Reserved (6), Sequence Number (2), Previous Packet Size Indicator 1 (2), PPSI2/BIP-8 (2), CSI (3), Parity (1). The OPF switch 400 can use the OPF header in part for FlexE switching. The Timestamp is needed for fabric latency variation compensation, and there could possibly be a reduction in resolution by 1 or 2 bits. The Reserved bits are available to be used. The Sequence Number is needed for lost packet detection; the Previous Packet Size Indicator 1 provides timing transfer lost packet compensation. The PPSI2 is not needed unless the double packet loss probability is high enough - not likely, but the BIP-8 is desirable to provide SAR-to-SAR error detection; could be added to OPF IA. The CSI is optional and is provided for fast protection switching. So, with changes, there could be 6 or as many as 9-11 bits available in the OPF header.

Timing transparency is required when a destination client is not synchronous with a source client. OPF varies packet size from nominal by +/- one byte to signal the source rate. This requires a Packet Size Decision (PSD) at both ingress and egress points and uses PPSI to communicate previous packet size to allow for single packet loss. For rate adaptation, the fabric has speedup over the line, so idle removal on ingress is not required, and the egress point is the logical place for idle insertion/removal. If timing transparency is not required, fabric packets could have a fixed payload size. It is possible to make packet size a fixed multiple (likely fractional) of a payload unit. A fixed pattern could be aligned to SQ, additional header bit(s) if necessary.

The OPF switch 400 can use OPF mechanisms for the cell switch fabrics. This can accumulate 66B blocks of one or more calendar slots for a stream and create B +/- 1 sized packets with timing transfer. In a first option, this can be performed with no transcoding - fill packet payload with 66B blocks, first/last 66B blocks may span 2 packets, every 4th 66B block is byte aligned (every 33 bytes), and mark the first byte aligned block in OPF header (6 bits). In a second option, this can be performed with transcoding, i.e., transcode 4 66B blocks to a 257B block, carry 257B block control/data bit in header to maintain byte alignment (8 bits required for 256 byte fabric packet class), mark start of first complete 256B block in OPF header (5 bits), etc.

Alternatively, the OPF switch 400 could use a simplified OPF mechanism for the cell switch fabrics. This can accumulate 66B blocks of one or more calendar slots for a stream and create fixed sized packets with no timing transfer. In a first option, there is no transcoding, i.e., fill packet payload with 66B blocks, first/last 66B blocks may span 2 packets, every 4th 66B block is byte aligned (every 33 bytes), mark start of repeating block pattern (1 bit) (up to 33 packets in pattern, dependent on payload length), and mark first byte aligned block in OPF header (6 bits). In a second option, this can be performed with transcoding, i.e., transcode 4 66B blocks to 257B block, carry 257B block control/data bit in header to maintain byte alignment (8 bits required for 256 byte fabric packet class), mark start of repeating block pattern (1 bit) (up to 33 packets in pattern). This requires 9 header bits.

Another option can include carrying the complete 257B block in the packet payload; this reduces header requirements; every 8th block is byte aligned; need to signal block alignment. Block alignment signaling can be serialized since it is used only at traffic (re)start; reduces header requirements; applies to all three options above. The block pointer can be serialized using one or more header bits, aligned to SQ. For example, a possible bit sequence for a 5-bit offset serialized using a single header bit over 8 packets: starting on SQ=0, 0, offset[0], offset[1], offset[2], 1, offset[3], offset[4], unused. This can be applied to any of the preceding options that require block alignment signaling, not just the 257B option in this clause.

For skew management, OPF provides a fixed fabric delay, greater than max fabric delay, to smooth out fabric packet delay variations. All fabric switched flows can be configured to have the same delay, with sub-microsecond precision (typically sub 100ns).

The OPF switch 400 in FIGS. 20 and 21, similar to the FlexE switch 100 and the STS switch 300, includes line cards 402, fabrics 404, ports 406, and interfaces 408. The line cards 402 include a FlexE shim termination block 410 and a block 412 and the fabrics 404 include a block 414 which physically forms the interfaces 408 with the block 412. Also, the line cards 402 include circuitry 416 and the fabrics 404 include switching circuitry 418.

FIG. 20 illustrates the OPF switch 400 for asynchronous ports. Here, the ports 406 are asynchronous to system timing. FIG. 21 illustrates the OPF switch 400 for synchronous ports. Here, the ports 406 are synchronous to the system timing. The ports 406 supports N x clients or M x groups (with standard PMD interfaces). The FlexE shim termination block 410 is configured to terminate shim overhead and provide access to 64b/66b blocks and slots. The line cards 402 use a phase aligned clock to deskew FlexE channels passing across the fabric 404 as unique flows. The phase aligned clock allows time stamping of each cell thereby enabling deskewing at the egress.

In FIG. 20, the circuitry 416 performs OPF SARing and Timing Transfer and, in FIG. 21, the circuitry 416 performs OPF SARing. The SAR function adapts 64b/66b TDM streams using OPF, keeping 64b/66b blocks and streams intact. In FIG. 20, the timing transfer is required for asynchronous port timing, but not required in FIG. 21. The switching circuitry 418 uses cells for OTN TDM switching, e.g., using OIF OPF specifications. The OPF switch 400 operates creating 5G cell flows based on 64b/66b calendar slots.

The OPF implementation can support a single fabric channel for each client. This would require the merging of data from each 5G channel into a single fabric channel. This scheme would reduce connection scaling resource demand in the fabric system assuming that the average client had a bandwidth greater that a single calendar slot. If the client calendar slots were distributed across multiple ingress cards we could support a multiple fabric channels (1 from each card/client) utilizing the phase aligned clock to allow for the mapping into of the egress channels.

The OPF can also support a single fabric channel for each calendar slot. This simplifies the implementation at the expense of connection scaling in the fabric. It does require the support of the phase aligned clock to ensure channel alignment at the egress.

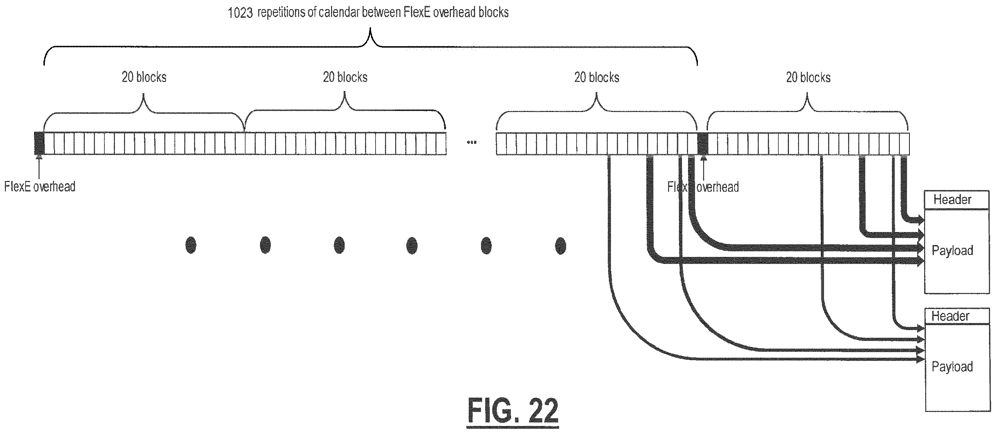

Referring to FIG. 22, in an exemplary embodiment, a diagram illustrates mapping individual client calendar slots to packets for the OPF switch 400. Specifically, FIG. 22 shows the calendar from FIG. 7 and mapping associated client calendar slots into a single fabric packet. For example, two clients are shown.

### FlexE Service OAM

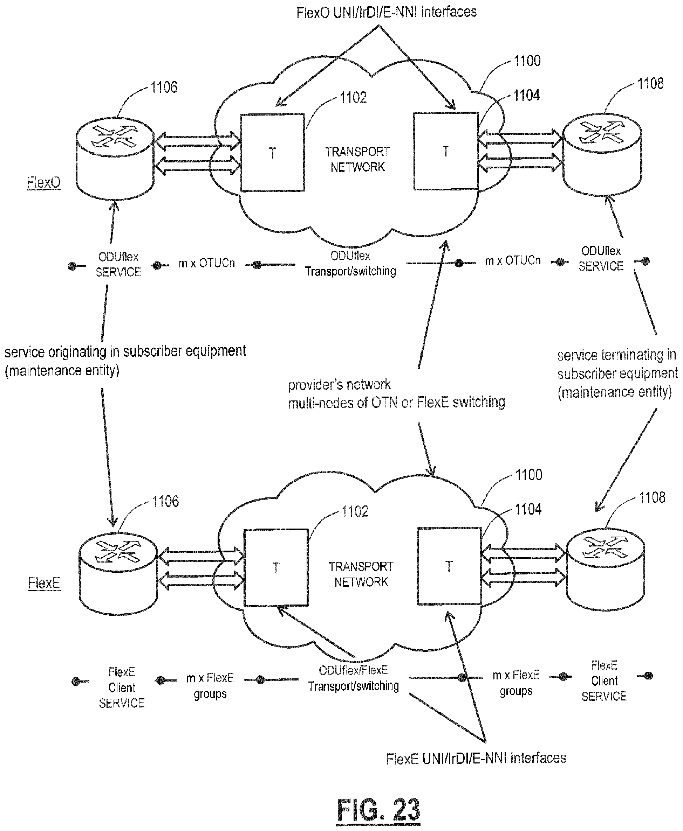

Referring to FIG. 23, in an exemplary embodiment, a network diagram illustrates a comparison of FlexO service OAM with the FlexE Client service OAM systems and methods described herein. Specifically, the same equipment is shown in FIG. 23 for FlexO and FlexE, including a transport network 1100 with network elements 1102, 1104 coupled to switches/routers 1106, 1108. In an exemplary embodiment, the FlexE Client OAM systems and methods enable a FlexE client to be transported as a service (or private line service) in a provider network. The switches/routers 1106, 1108 can be referred to as subscriber equipment where a service originates or terminates, i.e., a maintenance entity. In FlexO, the service can be an ODUflex, and, in FlexE, the service can be a FlexE client. The network elements 1102, 1104 are communicatively coupled to the network elements 1102, 1104. In FlexO, the interconnection between the network elements 1102, 1104 and the switches/routers 1106, 1108, respectively, can be m x OTUCn, and, in FlexE, the interconnection can be m x FlexE groups.

The transport network 1100 can include a plurality of network elements in addition to the network elements 1102, 1104. The various network elements in the transport network 1100 are configured to perform transport/switching. In FlexO, the transport/switching can be at ODUk/flex or some other variant of OTN. In FlexE, the transport/switching can be ODUk/flex and/or FlexE-based switching. An example of FlexE-based switching is described in U.S. Patent Application No. 62/186,489, filed on June 30, 2015, and entitled "FLEXIBLE ETHERNET SWITCHING SYSTEMS AND METHODS," In FlexO, the network elements 1102, 1104 provide User-Network Interface (UNI)/Inter-Domain Interface (IrDI)/External Network-Network (E-NNI) interfaces. Conversely, the FlexE Client OAM systems and methods enable FlexE UNI/IrDI interfaces at the network elements 1102, 1104.

In an exemplary embodiment, the network 1100 can support a FlexE client, and the network 100 can include a plurality of nodes interconnected to one another, wherein the FlexE client is configured between two nodes; wherein each of the two nodes include circuitry configured to receive the FlexE client, and circuitry configured to update or monitor one or more Operations, Administration, and Maintenance (OAM) fields in FlexE overhead, wherein the OAM fields cover a single client path for the FlexE client. One of the two nodes can be a service terminating subscriber equipment and another of the two nodes can be a network element in a transport network, wherein the FlexE client can include a User-Network Interface (UNI). Each of the two nodes can be a network element in a transport network, and each of the two nodes can be configured to operate as an OAM monitoring point for the FlexE client in the transport network. The one or more OAM fields can include any of a client service monitoring field, a connectivity/trace, link fault, remote fault, maintenance states, test signals, link neighbor discovery, and backwards fault and error indication.

### FlexE Client Performance Monitoring

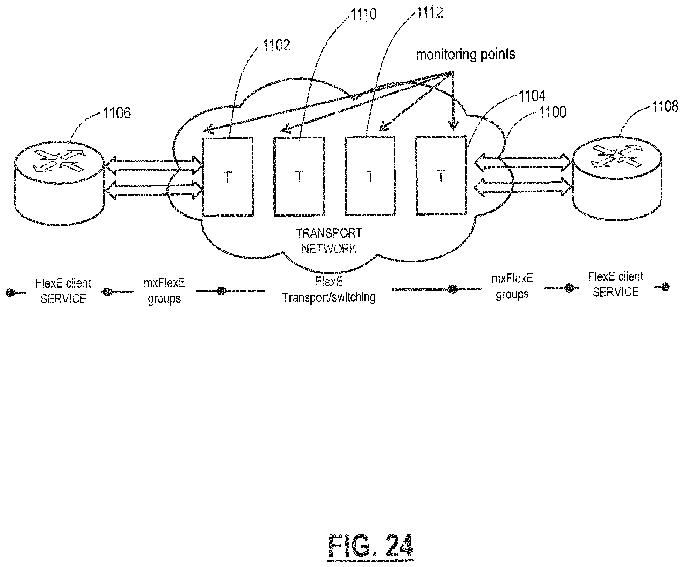

Referring to FIG. 24, in an exemplary embodiment, a network diagram illustrates a network with various FlexE Client OAM monitoring points. In FIG. 24, the transport network 1100 is illustrated with additional network elements 1110, 1112, and each of the network elements 1102, 1104, 1110, 1112 can be configured as a monitoring point for FlexE service OAM. In Ethernet, current transport equipment typically relies on MAC CRC (layer 2) for fault isolation and performance monitoring. In FlexE, this becomes complicated as FlexE introduces a variable amount of clients on a single/multiple ports (groups) and a variable rate for the clients (Flexible MAC). The FlexE Client OAM systems and methods can include a simpler FlexE client service monitoring field (e.g., Bit Interleaved Parity 8 (BIP8) or the like) that covers only the 64b/66b codes for a single client path, i.e., a single error check per client, instead of CRC at the packet level. This can be viewed analogously to the PM BIP8 that covers an ODUflex service path. Such an approach with a FlexE client service monitoring field simplifies monitoring and fault isolation. Nodes in a transport network could be 3R regens (i.e. Regenerator Section (RS)-OTN) or switches (i.e. Multiplex Section (MS)-OTN or FlexE switches).

In an exemplary embodiment, a node configured to monitor a Flexible Ethernet (FlexE) client service in a network includes circuitry configured to receive a FlexE client; and circuitry configured to monitor or update one or more Operations, Administration, and Maintenance (OAM) fields in FlexE overhead, wherein the OAM fields cover a single client path for the FlexE client. The one or more OAM fields can include a client service monitoring field which does not rely on packet Cyclic Redundancy Check (CRC). The one or more OAM fields can include a client service monitoring field including a bitstream Bit Interleaved Parity (BIP) code. The one or more OAM fields can include any of a connectivity/trace, link fault, remote fault, maintenance states, test signals, link neighbor discovery, and backwards fault and error indication. The one or more OAM fields can be disassociated from Local Fault and Remote Fault information for an associated FlexE PHY/group. The one or more OAM fields can be located in the FlexE overhead in a multiframe scheme. The one or more OAM fields can be implemented in a Reconciliation Sublayer with an associated Operational code, different from the one used for FlexE OH (or current IEEE/FC codes). The node can be one of a Regenerator Section (RS) Optical Transport Network (OTN) switch, a Multiplex Section (MS) OTN switch, and a FlexE switch.

### FlexE OAM Fields

The following table includes proposed FlexE OAM fields:

| |
|---|
| Bit Error Check (e.g., BIP8) |
| Connectivity/Trace (e.g., Trail Trace Identifier (TTI)) |
| Link Neighbor Discovery (i.e. LLDP) |
| Link Fault |
| Remote Fault |
| Maintenance States (e.g., locked, loop-back, test) |
| Test signals (e.g., Pseudorandom binary sequence (PRBS)) for turn-up |
| Backwards fault and error indication |

Referring back to FIG. 2, the FlexE group Remote Fault (RF)/Local Fault (LF) is handled at the Reconciliation Sub layer (RS), above the FlexE shim. The FlexE OAM cannot reuse the group RF/LF for clients as this would flag group/PHY faults in the transport equipment. Instead, the FlexE OAM could define a new "O code" (e.g., 0x9) for client RF/LF to disassociate from the group/PHY. Again, drawing analogies to the OTN implementations, this is analogous to LO ODUk-AIS Path Monitoring (PM) relative to LO/HO Section Monitoring (SM).

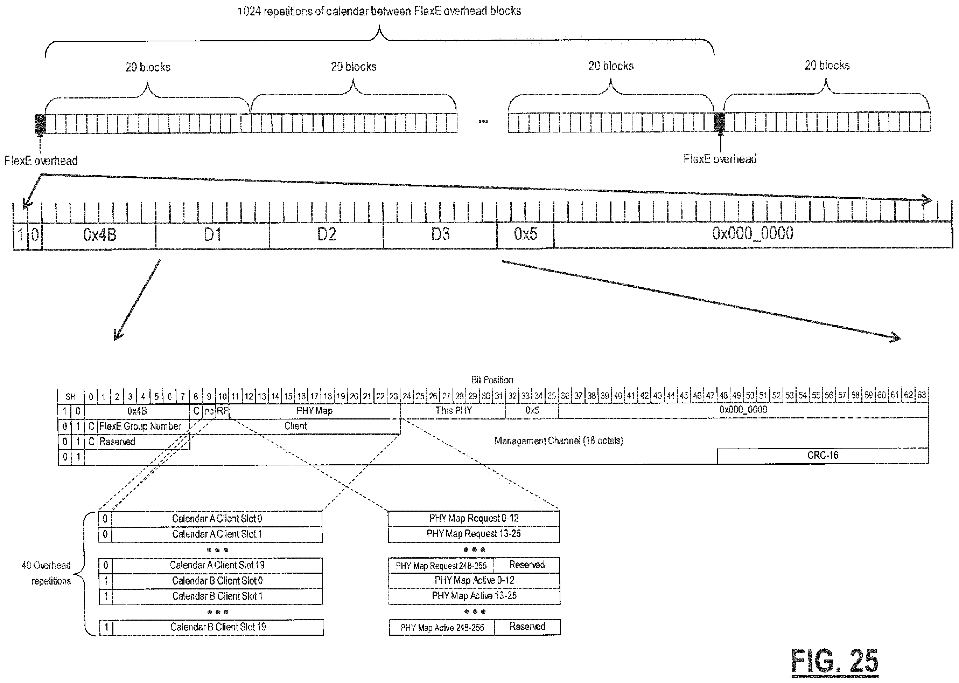

Referring to FIG. 25, in an exemplary embodiment, a diagram illustrates an exemplary FlexE Client OAM implementation with FlexE overhead. Specifically, FIG. 25 illustrates a first option for OAM where the fields are included in the FlexE Time Division Multiplexing (TDM) frame overhead. The FlexE TDM frame overhead has a portion for all calendar slots and paths. For example, the FlexE Client OAM could occupy some or all of the reserved portions of the FlexE TDM frame overhead. However, it might be tight fitting OAM overhead for up to 10 clients (per group) in these portions. As such, an option could be to multiframe to OAM overhead, analogous to what OTN does with the HO OPUk path OH. The FlexE OAM could be switched along with the calendar slots to provide a path. Another option could include reducing the management channel to provide more room for the FlexE Client OAM or reusing the management channel capacity with a messaged based OAM approach on a general communications channel.

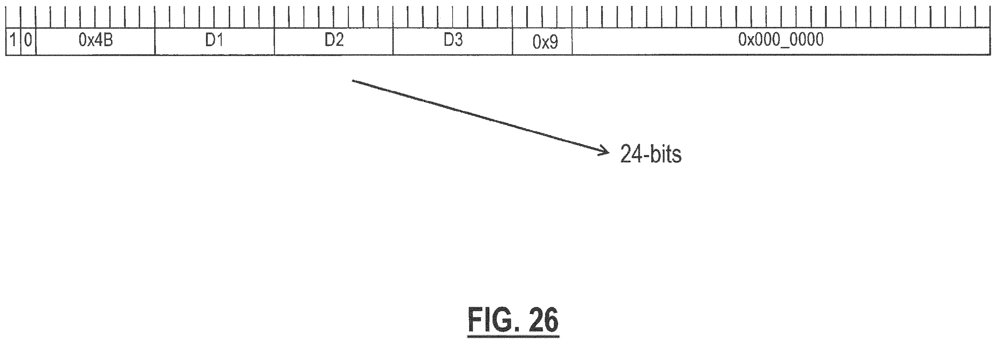

Referring to FIG. 26, in an exemplary embodiment, a block diagram illustrates the FlexE overhead from FIG. 9 with a new "O" code for implementing FlexE OAM at the RS layer. This exemplary embodiment includes injecting a new "O" code (e.g., 0x9), 1/16k occurrence and steal bandwidth of the client (e.g., 59 parts per million (ppm)) - worst case standard Ethernet at 100G has 400ppm of idles in there. This can be used for a new client LF/RF and to differentiate from group LF/RF (0x0), and this can include specific OAM per client stream, which is then mapped to calendar slots along with the client stream. These OAM fields are tied to FlexE clients and not calendar slots. This second option is analogous to LO ODUk PM overhead.

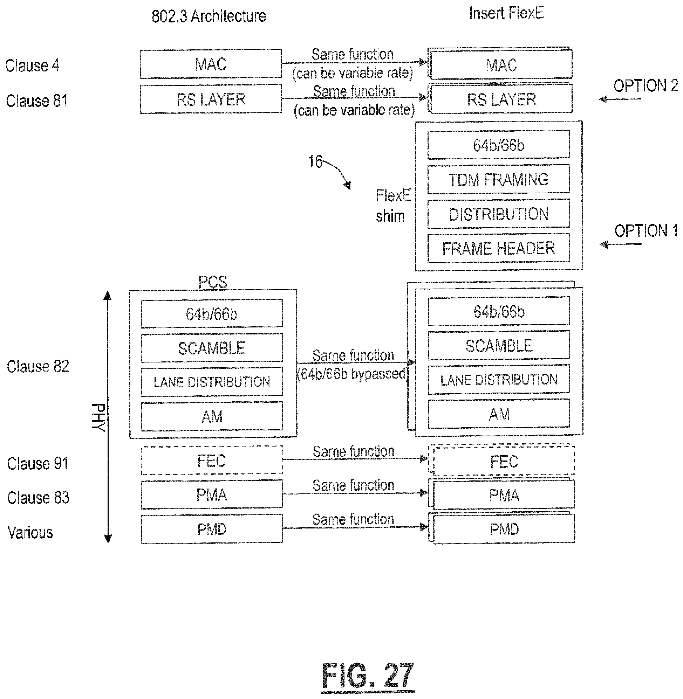

Referring to FIG. 27, in an exemplary embodiment, the logical diagram of FIG. 2 illustrates a location of the first and second options in the IEEE 802.3 stack. The first option is located in the FlexE shim in the frame header, stealing OH bandwidth of the FlexE OH (O code 0x5). The second option is implemented in the RS layer creating the concept of a path, like an ODUflex, stealing bandwidth from the client with new O code (i.e. 0x9). This can be snooped easily without requiring knowledge of packets and boundaries of FlexE client for performance monitoring and can be switched along with client 64b/66b bitstream as a path layer.

## FlexE monitoring process

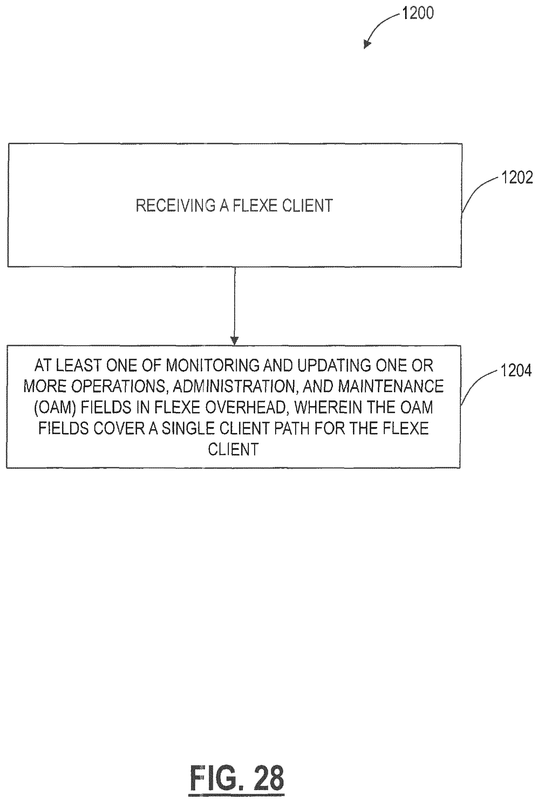

Referring to FIG. 28, in an exemplary embodiment, a flowchart illustrates a process 1200, implemented in a node, for monitoring a Flexible Ethernet (FlexE) client service in a network. For example, the node can include the network elements 1102, 1104 or the switches/routers 1106, 1108. The process 1200 includes receiving a FlexE client (step 1202); and at least one of monitoring and updating one or more Operations, Administration, and Maintenance (OAM) fields in FlexE overhead, wherein the OAM fields cover a single client path for the FlexE client (step 1204). The one or more OAM fields can include a client service monitoring field which does not rely on Cyclic Redundancy Check (CRC). The one or more OAM fields can include a client service monitoring field including a Bit Interleaved Parity (BIP) code. The one or more OAM fields can include any of a connectivity/trace, link fault, remote fault, maintenance states, test signals, and backwards fault and error indication. The one or more OAM fields can be disassociated from Local Fault and Remote Fault information for an associated FlexE group/PHY. The one or more OAM fields can be located in the FlexE overhead, possibly using a multiframe scheme. The one or more OAM fields can be implemented in a Reconciliation Sublayer with a new associated Operational code. The node can be one of a Regenerator Section (RS) Optical Transport Network (OTN) switch, a Multiplex Section (MS) OTN switch, and a FlexE switch.

## FlexE Multi-Service

The FlexE shim is only defined to support FlexE clients (e.g., ETCn according to G.8010 or possibly a new flexible ETCflex). Also, Ethernet is driving volumes for component and optical modules, and other standard bodies and protocols are looking into ways to reuse same components and modules. For example, OTN (ITU/Q11) is discussing adapting the OTUCn (n=1 and n=4) frame in 64b/66b to reuse 100GbE and 400 GbE modules and FEC (transcoded to 256b257b). Also, InfiniBand is adopting Ethernet PCS and rates. Thus, the systems and methods described herein describe mapping other 64b/66b clients into a FlexE TDM structure, to expand the reach and application of FlexE. For example, OTN is already discussing 64b/66b adaptation; the systems and methods described herein discuss mapping into the FlexE shim. This can be viewed analogous to the ODTUk/Cn.ts structure in OTN where it can map any client, such as FC, ODUflex, Common Public Radio Interface (CPRI), and the like, to the FlexE shim.

**FlexE OTN adaptation and other client adaptation**

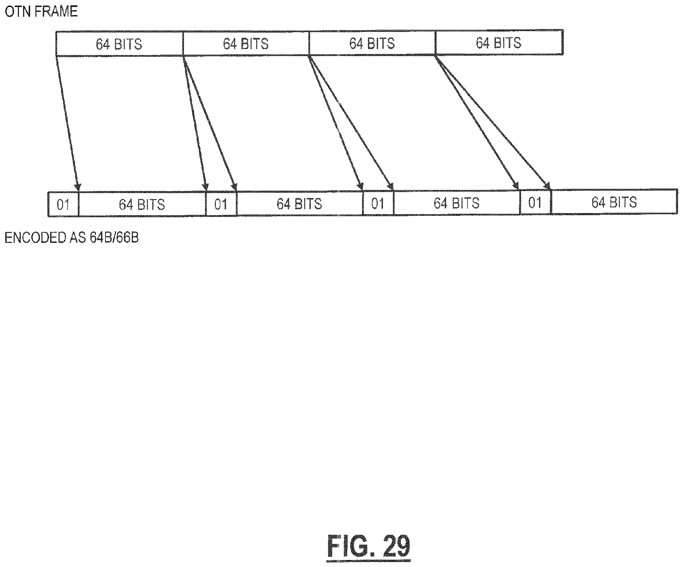

Referring to FIG. 29, in an exemplary embodiment, a block diagram illustrates OTN adaptation to FlexE. Specifically, FIG. 16 illustrates encoding OTN to 64b/66b. Once OTN is encoded to 64b/66b, OTN can be added to the FlexE shim, in the calendar slots.

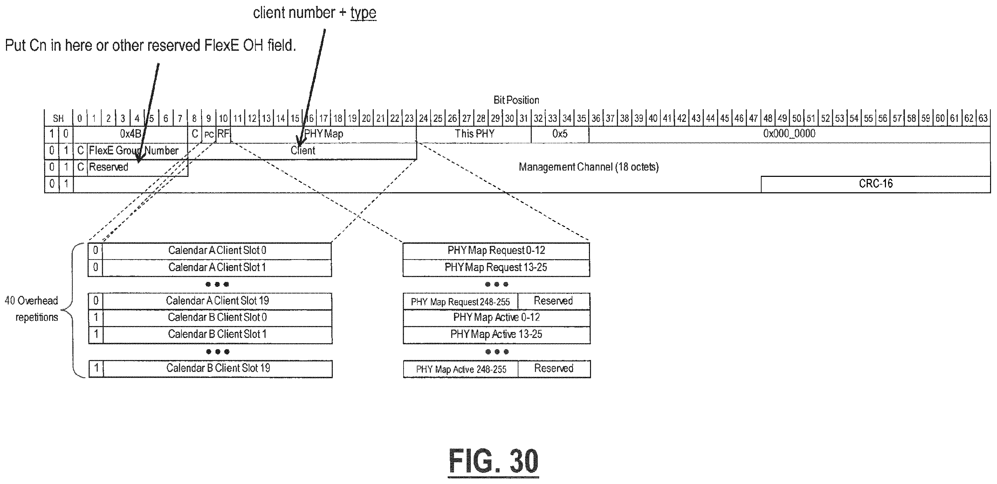

Other protocols, such as 8B10B from CPRI and the like can be transcoded into 64b/66b for transport via FlexE. For example, Fibre channel is already moving to 64b/66b and InfiniBand already supports 64b/66b. Other protocols such as SONET/SDH could be wrapped into OTN first and then transported via FlexE. FIG. 30 illustrates the FlexE overhead where a client number and new client/payload type can be added to the FlexE overhead, such as in the client area (although other locations are also contemplated).

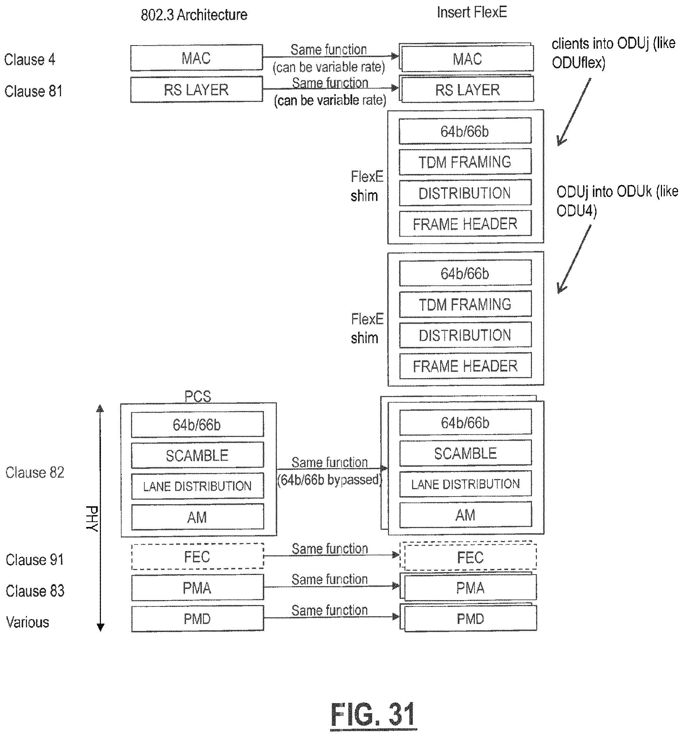

FIG. 31 illustrates the logical diagram of the IEEE 802.3 stack from FIG. 2, describing mapping one FlexE shim into another FlexE shim. Note, a FlexE shim is a stream of 64b/66b bits, and can be mapped into another FlexE shim. This is analogous to ODUj to ODUk multiplexing in OTN, and could be useful for switching networks and virtual (private line) transport applications, where hierarchy is needed.

**FlexE timing transparency**

One requirement of FlexE multi-service is timing transparency of clients when mapped to the shim. There is no removal of idles, so the group might have to run faster, e.g., 50ppm to leave room for the shim overhead. This also enables application of having FlexE clients being SyncE and Precision Time Protocol (PTP) (IEEE 1588) capable. The systems and methods propose a new "O" code (e.g., 0x9) to stuff and rate adapt 64b/66b client streams into the calendar slots. This new "O" code could also be used for FlexE OAM (such as described in U.S. Patent Application No. 62/186,502, filed on June 30, 2015, and entitled "FLEXIBLE ETHERNET OPERATIONS, ADMINISTRATION, AND MAINTENANCE SYSTEMS AND METHODS".

The FlexE group (e.g., 100GbE PMD) is the timing reference. The systems and methods transmit a timing value, with a set bit resolution Cn (e.g., 24 bits) in the FlexE overhead. This could be multiframe to have Cn timing information per overhead for a given calendar slot or client. This is analogous to the Generic Mapping Procedure (GMP) process in OTN, except stuffing and timing information is transmitted separately, but long-term average equal. Referring back to FIG. 30, the Cn can be included in the reserved FlexE overhead fields. The systems and methods can use multiframe or introduce a scheme for transporting this using +/- 1 deltas (like GMP).

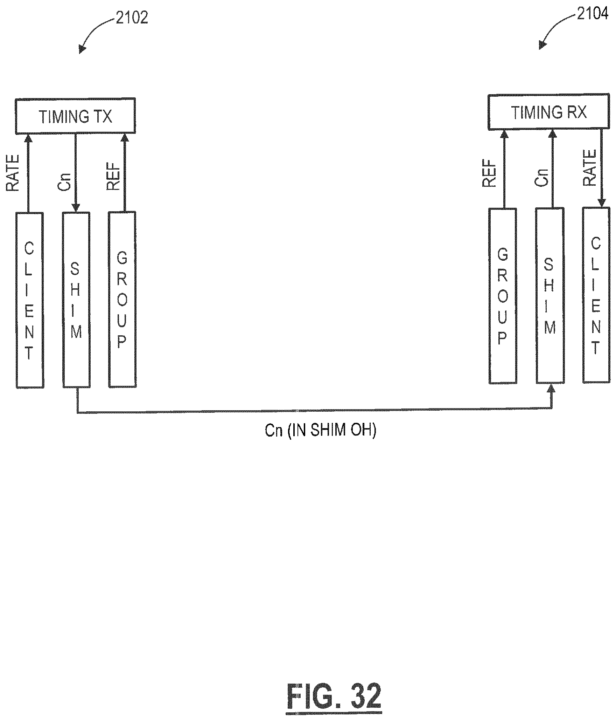

Referring to FIG. 32, in an exemplary embodiment, a diagram illustrates a differential timing process between two nodes 2102, 2104 utilizing FlexE. At the transmitting node 2102, a client provides a rate for the timing TX and a group provides a timing reference (REF), and the flexE shim provides Cn in the shim overhead to the receiving node 2104. The FlexE shim at the node 2104 provides Cn to the timing RX, as well as the FlexE group providing a timing reference and the timing RX providing the FlexE client a rate.

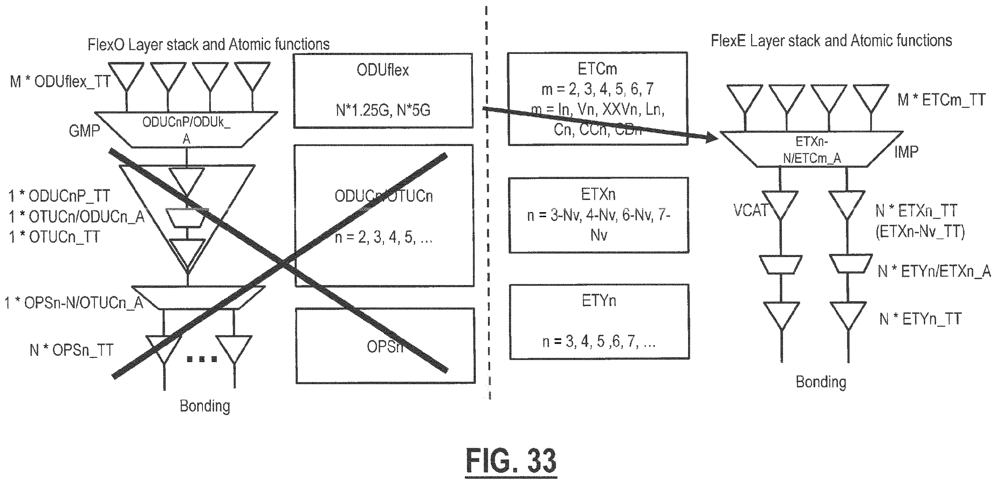

Referring to FIG. 33, in an exemplary embodiment, the diagram from FIG. 15 illustrates FlexE being the next B100G OTN multiplexed container. Specifically, for B 100G, FlexE can be used to map LO ODUj, HO ODUk, and ETC right into a FlexE shim. The FlexE group is a section layer and the FlexE client (the 64b/66b stream, which could be OTN) becomes a switchable OAM service.

**Multi-service mapping process**

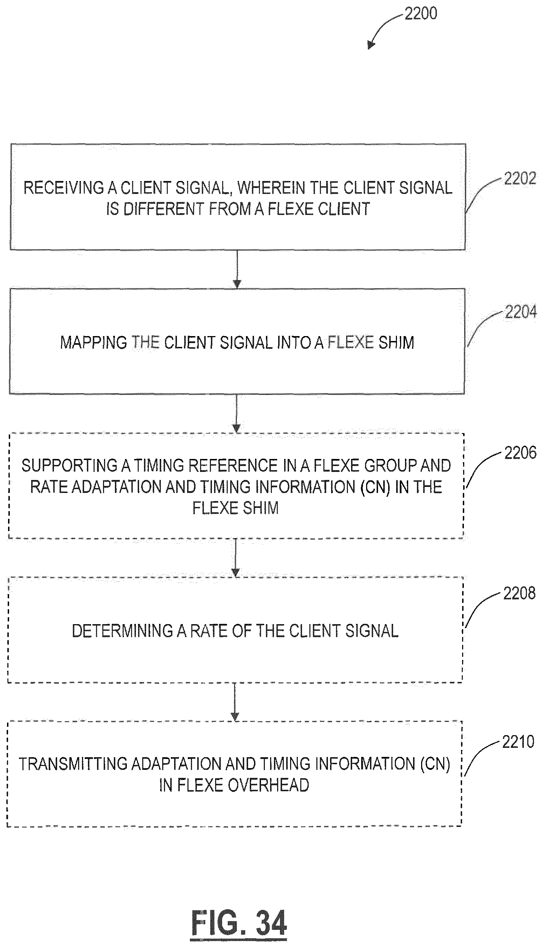

Referring to FIG. 34, in an exemplary embodiment, a flowchart illustrates a process 2200, implemented in a node, for supporting support multi-service with Flexible Ethernet (FlexE). For example, the node can include a network element, a switch, a router, etc. The process 2200 includes receiving a client signal, wherein the client signal is different from a FlexE client (step 2202); and mapping the client signal into a FlexE shim (2204). The process 200 can further include supporting a timing reference in a FlexE group and rate adaptation and timing information (Cn) in the FlexE shim (step 2206); and determining a rate of the client signal (step 2208). The process 2200 can further include transmitting adaptation and timing information (Cn) in FlexE overhead (step 2210). The client signal can utilize 64b/66b encoding. The client signal can be one of Fibre Channel, Infiniband, Optical Transport Network (OTN), Common Public Radio Interface (CPRI), and Synchronous Optical Network (SONET) first mapped into OTN. The mapping step 2204 can further include inserting client information associated with the client signal in FlexE overhead. The FlexE shim can be a first FlexE shim, and wherein the client signal can include a second FlexE shim. The mapping step 2204 can further include using an Operational code to stuff and rate adapt the client signal.

**In** another exemplary embodiment, a node configured to support multi-service with Flexible Ethernet (FlexE) includes circuitry configured to receive a client signal, wherein the client signal is different from a FlexE client; and circuitry configured to map the client signal into a FlexE shim. Again, for example, the node can include a network element, a switch, a router, etc. The client signal can utilize 64b/66b encoding. The client signal can be one of Fibre Channel, Infiniband, Optical Transport Network (OTN), Common Public Radio Interface (CPRI), and Synchronous Optical Network (SONET) first mapped into OTN. The circuitry configured to map can be further configured to insert client information associated with the client signal in FlexE overhead. The FlexE shim can be a first FlexE shim, and wherein the client signal can include a second FlexE shim. The circuitry configured to map can be further configured to use an Operational code to stuff and rate adapt the client signal. The node can further include timing circuitry configured to support a timing reference in a FlexE group, rate adaptation and timing information (Cn) in the FlexE shim, and to determine a rate of the client signal. The node can further include timing circuitry configured to transmit adaptation and timing information (Cn) in FlexE overhead.

In a further exemplary embodiment, a network supporting multi-service with Flexible Ethernet (FlexE) includes a plurality of nodes interconnected to one another, wherein a FlexE group is configured between two nodes; wherein each of the two nodes include circuitry configured to receive a client signal, wherein the client signal is different from a FlexE client, and circuitry configured to map the client signal into a FlexE shim, which is transmitting over the FlexE group. The client signal can be one of Fibre Channel, Infiniband, Optical Transport Network (OTN), Common Public Radio Interface (CPRI), and Synchronous Optical Network (SONET) first mapped into OTN. The circuitry configured to map can be further configured to insert client information associated with the client signal in FlexE overhead, for communication between the two nodes. Each of the two nodes can further include timing circuitry configured to support a timing reference in a FlexE group, rate adaptation and timing information (Cn) in the FlexE shim, and to determine a rate of the client signal.

### FlexE C2C interfaces

FlexE is defined for system/network IrDI/UNI/E-NNI interfaces. Historically, OIF has been defining C2C interfaces, such as Serdes Framer Interface Level 5 (SFI-5), but OIF has recently stopped this practice. IEEE and ITU have developed their own system interfaces (OTL, CAUI), which have seen adoption for C2C applications. Interlaken is currently used for C2C packet interfaces, but is complicated and is constrained to C2C applications (within a system).

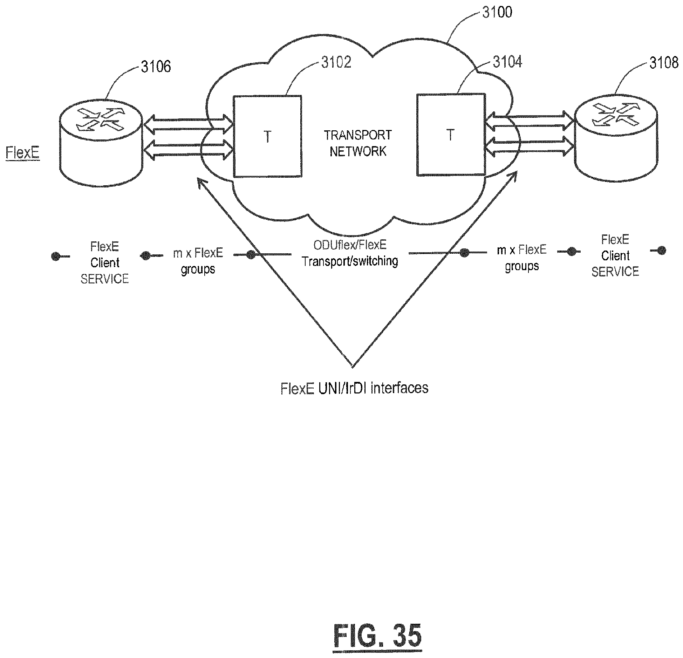

Referring to FIG. 35, in an exemplary embodiment, a network diagram illustrates a FlexE Client service. Specifically, FIG. 35 includes a transport network 3100 with network elements 3102, 3104 coupled to switches/routers 3106, 3108. The switches/routers 3106, 3108 can be referred to as subscriber equipment where a service originates or terminates, i.e., a maintenance entity. In FlexE, the service can be a FlexE client service. The network elements 3102, 3104 are communicatively coupled to the network elements 3102, 3104. In FlexE, the interconnection between the network elements 3102, 3104 and the switches/routers 3106, 3108, respectively, can be m x FlexE groups.

The transport network 3100 can include a plurality of network elements in addition to the network elements 3102, 3104. The various network elements in the transport network 3100 are configured to perform transport/switching. In FlexE, the transport/switching can be ODUflex and/or FlexE-based switching. An example of FlexE-based switching is described in U.S. Patent Application No. 62/186,489, filed June 30, 2015, and entitled "FLEXIBLE ETHERNET SWITCHING SYSTEMS AND METHODS". In FlexE, the network elements 3102, 3104 provide User-Network Interface (UNI)/Inter-Domain Interface (IrDI) interfaces.

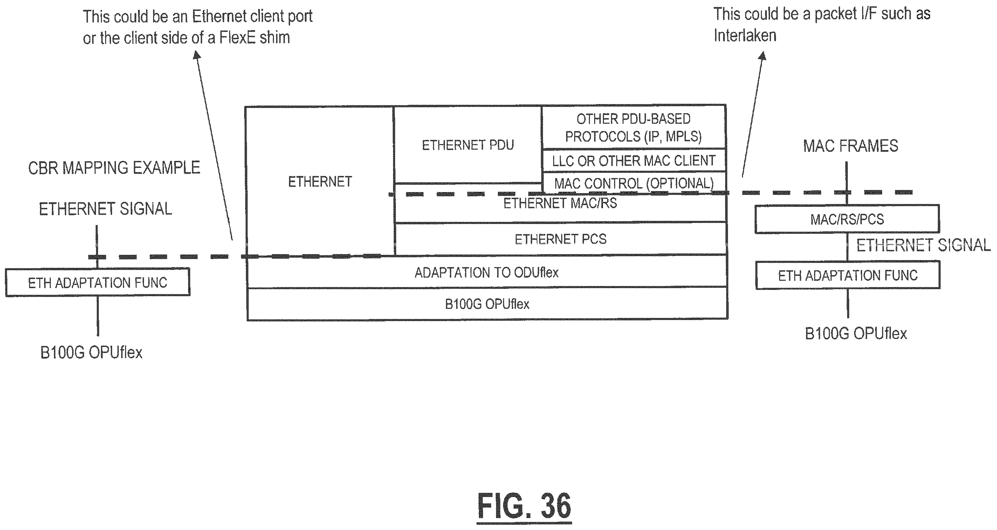

Referring to FIG. 36, in an exemplary embodiment, a logical diagram illustrates a protocol stack for Layers 1-3. ITU group is aligning packet mapping and FlexE client mapping. A FlexE Chip-to-Module (C2M) interface from an IrDI is similar to a FlexE C2C interface from an NPU, i.e., similar logic and similar interface. Interlaken has been used historically for packet interfaces from NPU. FlexE already provides channelization, but is limited to fixed sizes and minimum granularity of 10G.

The protocol stack illustrates two example mappings - a Constant Bit Rate mapping (CBR) example and a Packet Data Unit (PDU) mapping example. In the CBR example, an ETH adaptation function is used to map an Ethernet signal to a B100G OPUflex. This could be an Ethernet client port of the client side of a FlexE shim. In the PDU example, MAC frames are processed by a MAC/RS/PCS layer to provide an Ethernet signal which is adapted by an ETH adaptation function to a B100G OPUflex. A packet from an Interlaken interface is similar to a FlexE client packet from a FlexE interface.

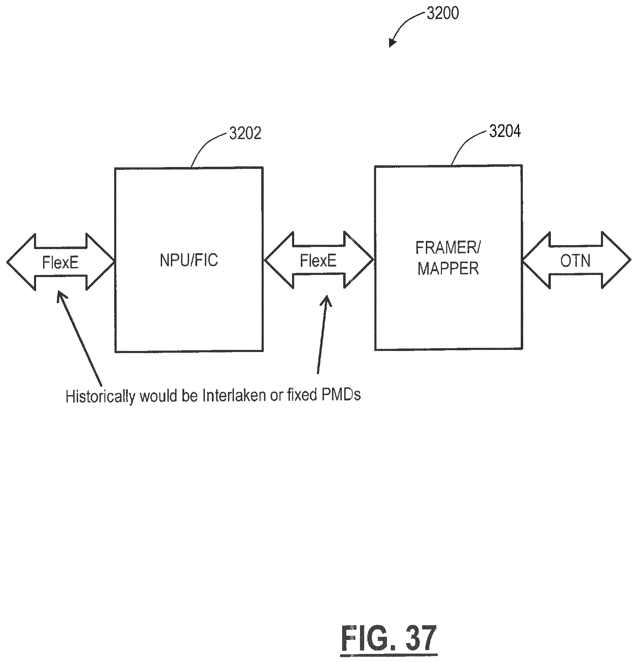

Referring to FIG. 37, in an exemplary embodiment, a logical diagram illustrates use of FlexE in a C2C application 3200. The C2C application 3200 includes an NPU or Fabric Interface Chip (FIC) 3202 coupled to a framer/mapper device 3204. The interfaces to/from the NPU/FIC 3202 can be FlexE in the C2C application 3200, specifically FlexE between the NPU/FIC 3202 and the framer/mapper 3204. The interface from the framer/mapper 3204 can be OTN. Note, historically, the FlexE interfaces in the C2C application 3200 were Interlaken.

The C2C application 3200 provides a simplified framer/mapper 3204 and NPU/FIC 3202 design by supporting less interfaces. Normal Ethernet interfaces are not channelized at L1 (need to rely on Virtual Local Area Network (VLAN) or other L2/L3 channels). Extended X Attachment Unit Interface (eXAUI) attempted introducing channelization to 10GbE with header extensions. Normal Ethernet interfaces need to handle subrate with PAUSE frames. Ethernet PMDs (i.e. KR4) already support FEC, however the Interlaken Alliance is currently evaluation FEC schemes.

To make a FlexE interface suitable as a C2C packet interface, the systems and methods described herein include flow control, enhanced channelization, and optionally mapping OTN to FlexE (described in U.S. Patent Application No. 62/186,508, filed June 30, 2015, and entitled "FLEXIBLE ETHERNET MULTI-SERVICE AND TIMING TRANSPARENCY SYSTEMS AND METHODS". Interlaken historically runs faster to carry channelization, flow-control and other bits of information. FlexE for C2C could also run faster to account for added information bits, or more groups can be added to the FlexE shim to account for overclocking.

### FlexE C2C interfaces - channelization

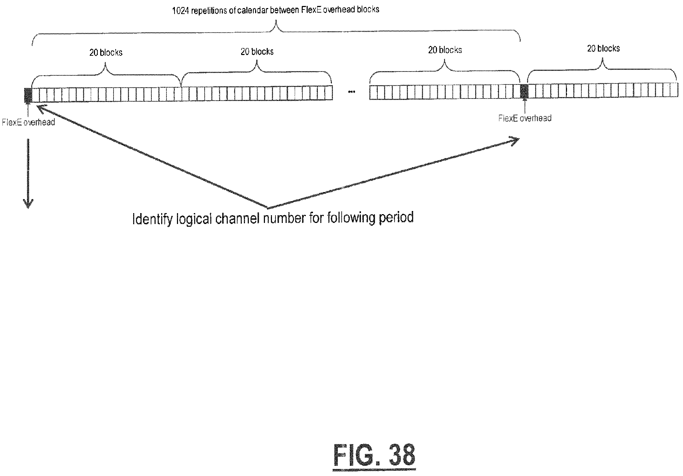

Referring to FIG. 38, in an exemplary embodiment, the diagram of FlexE overhead on each PHY of the FlexE group of FIG. 7 is illustrated to describe channelization in the C2C application. FlexE already provides calendar slots and channelization with granularity of 5G, and a minimum client rate of 10G. This is limited for applications requiring more than 20x channels and client rates <5G (such as 1Gbe). As such, the systems and methods propose the concept of a logical channel in FlexE that can share single or grouped calendar slots. The logical channel can change on frame boundaries and is more flexible than a calendar. These logical channels can be bursts of 20k blocks (matching frame header) or 80k blocks (multiframe). The logical channels can be identified through a logical channel number for a following period in the FlexE overhead. These logical channels are not limited in granularity

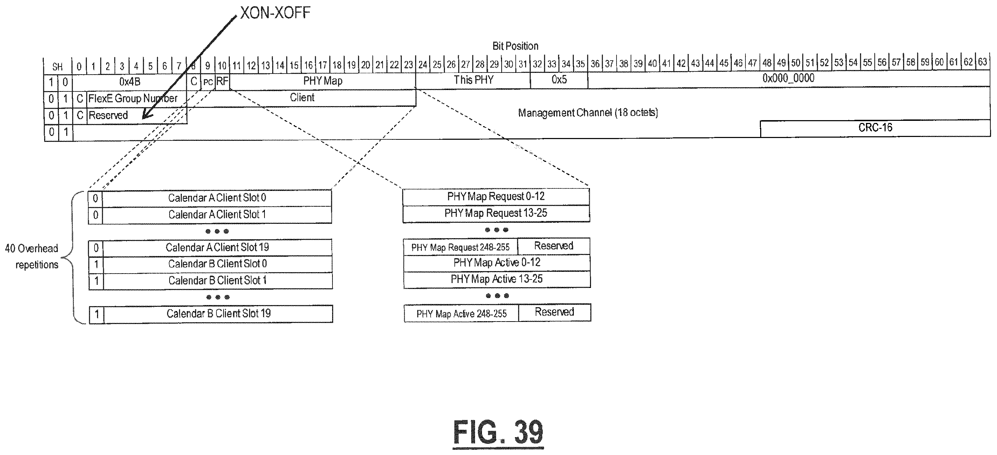

Referring to FIG. 39, in an exemplary embodiment, the diagram of FlexE overhead from FIG. 10 illustrates possible locations for communicating a logical channel number. For example, the logical channel number can be in the FlexE reserved area or in bits from the management channel (which is not needed for C2C applications) - limited in number of bits. In another exemplary embodiment, the logical channel number could be identified in the FlexE calendar area, i.e., repurpose the calendar area for logical channels, more dynamic behavior. In a further exemplary embodiment, another "O" code (operational code) could be defined or it could be in the data block immediately following a frame header (signified with "O" code 0x5). The "O" codes could also be distributed and not aligned to FlexE frame boundaries.

### FlexE C2C interfaces - flow control

In FIG. 39, possible locations are shown for XON-XOFF control in the FlexE shim. This can provide an in-band mechanism for XON-XOFF flow control in the FlexE shim. The flow control can use a 20-bit field, 1 per calendar slot (0 - off, 1 - on). The in-band flow control can use reserved fields or management channel (again, not used for C2C applications). Also, the flow control can include an out-of-band mechanism with pins, aligned to FlexE frame boundaries. The out-of-band flow control can apply to normal FlexE channelization scheme or the new logical channel one.

### Chip-to-Chip (C2C) interface utilizing Flexible Ethernet (FlexE)

In an exemplary embodiment, a Chip-to-Chip (C2C) interface utilizing Flexible Ethernet (FlexE) includes circuitry configured to provide the FlexE over backplane/fabric links between two devices, wherein the circuitry includes flow control and channelization for the FlexE. Each of the two devices can include any of a Network Processor (NPU), a Fabric Interface Card (FIC), a framer, and a mapper, i.e., the framer/mapper 204 or the NPU/FIC 202. A rate of the FlexE group can be increased to support additional information for the flow control and the channelization. The circuitry, for the channelization, can be configured to provide a logical channel that shares one of a single calendar slot and a group of calendar slots. The logical channel can change on a frame boundary. Information associated with the logical channel can be communicated in FlexE overhead. The information can be provided in one of a reserved area of the FlexE overhead and a management channel of the FlexE overhead, wherein the management channel is not used in a C2C application. A calendar area of the FlexE overhead can be repurposed for the information. The information can be provided utilizing one of a defined Operational code and a data block immediately following a frame header. The circuitry, for the flow control, can be configured to provide flow control in a FlexE shim. The the flow control can include an in-band mechanism for XON-XOFF flow control per calendar slot, and wherein the flow control is communicated in one of a reserved area of FlexE overhead and a management channel of the FlexE overhead, wherein the management channel is not used in a C2C application.

In another exemplary embodiment, a circuit utilizing Flexible Ethernet (FlexE) as a Chip-to-Chip (C2C) interface includes circuitry configured to provide packet functionality; and circuitry configured to provide the FlexE over backplane/fabric links between the circuitry configured to provide packet functionality and another device, wherein the circuitry includes flow control and channelization for the FlexE. The circuitry configured to provide packet functionality is configured to provide functionality of any of a Network Processor (NPU), a Fabric Interface Card (FIC), a framer, and a mapper, i.e., the framer/mapper 3204 or the NPU/FIC 3202. A rate of the FlexE can be increased to support additional information for the flow control and the channelization or more PMDs can be added to the FlexE group. The circuitry configured to provide the FlexE, for the channelization, can be configured to provide a logical channel that shares one of a single calendar slot and a group of calendar slots. The logical channel can change on a frame boundary. Information associated with the logical channel can be communicated in FlexE overhead. The information can be provided through one of one of a reserved area of the FlexE overhead and a management channel of the FlexE overhead, wherein the management channel is not used in a C2C application, a calendar area of the FlexE overhead is repurposed for the information; and one of a defined Operational code and a data block immediately following a frame header. The circuitry, for the flow control, can be configured to provide flow control in a FlexE shim.

In a further exemplary embodiment, a Chip-to-Chip (C2C) interface method utilizing Flexible Ethernet (FlexE) includes providing, via circuitry, the FlexE over backplane/fabric links between two devices, wherein the circuitry includes flow control and channelization for the FlexE.

## FlexE PTP - conventional

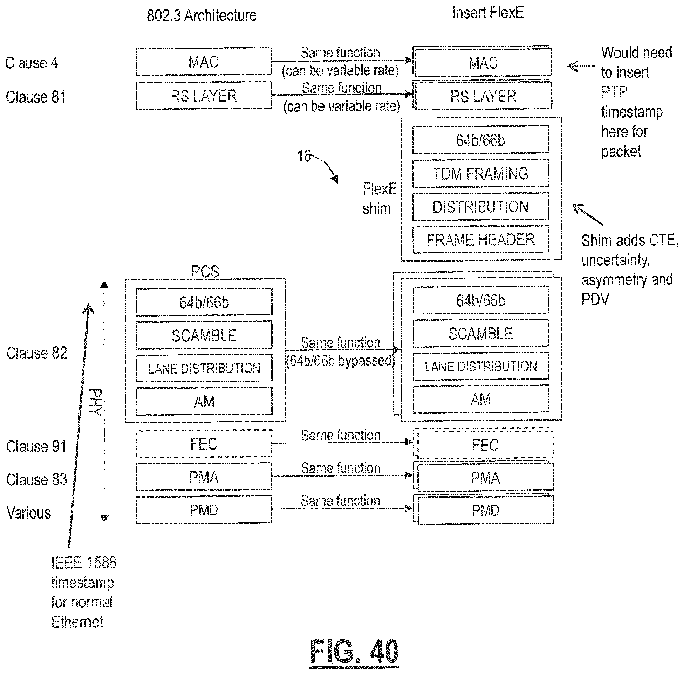

Referring to FIG. 40, a logical diagram illustrates the IEEE 802.3 stack and problems carrying standard PTP according to IEEE 1588 defined methods. Conventional IEEE 1588 would be inserted at the MAC level and adjusted at the PHY level. The problem with FlexE is that the PHY would not be able to adjust the timestamp given that it would be presented with various packet streams into a FlexE shim. FlexE implementation would require timestamps to be inserted at the FlexE client MAC level and would add Constant Time Error (CTE), uncertainty, asymmetry, and Packet Delay Variation (PDV). Specifically, FlexE Client adaptation and mapping to the FlexE shim is not timing transparent. The process of idle insertion and removal contributes to PDV, and adaptation contributes to CTE and uncertainty for the PTP process. In order for systems/nodes to terminate PTP in a Boundary Clock (BC) topology, the systems/nodes must terminate FlexE clients. This is a complication for systems/nodes that are not aware of variable size and variable amount of FlexE clients.

## FlexE PTP

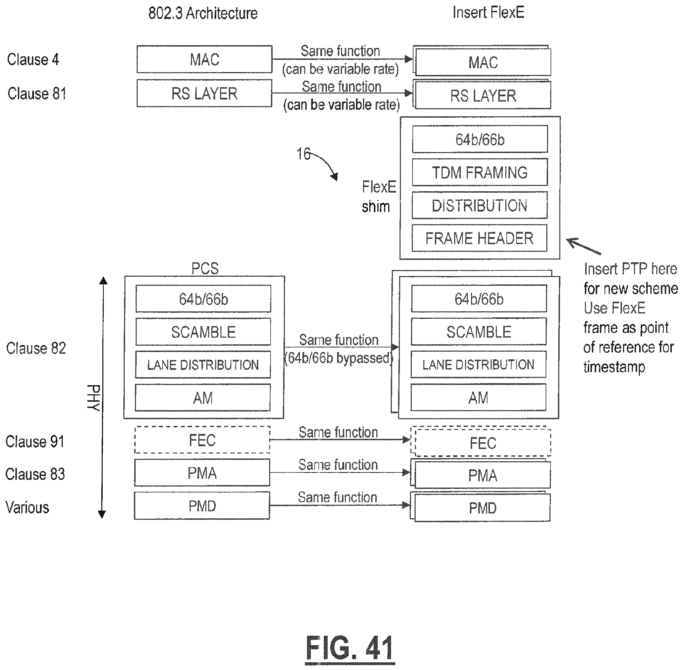

Referring to FIG. 41, in an exemplary embodiment, a logical diagram illustrates the IEEE 802.3 stack and where the time transfer systems and methods locate PTP. Specifically, the time transfer systems and methods insert PTP messages in the FlexE frame header and use the FlexE TDM frame structure boundaries as a point of reference for timestamps.

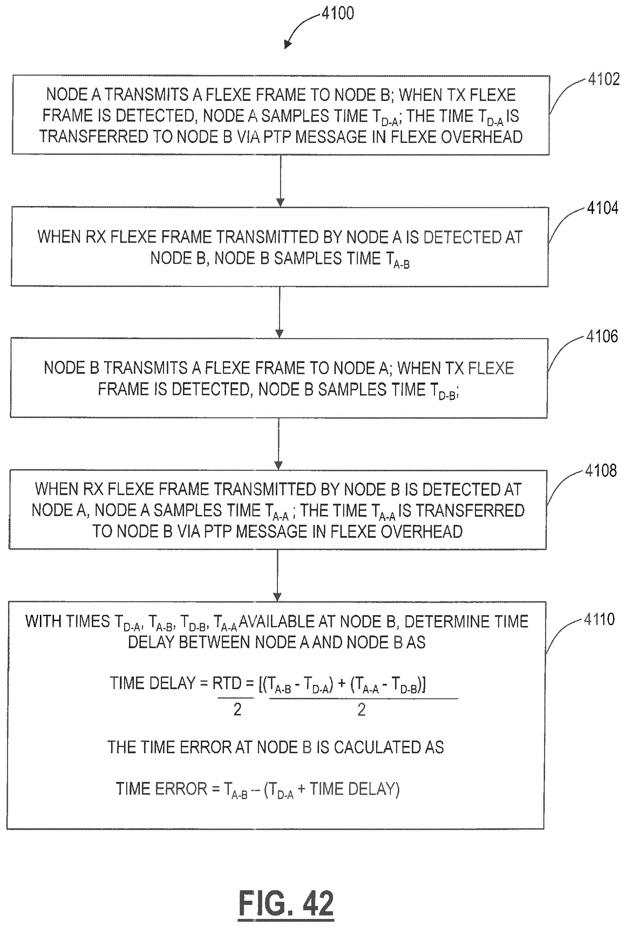

Referring to FIG. 42, in an exemplary embodiment, a flowchart illustrates a time transfer process 4100 in FlexE. The time transfer process 4100 uses a fixed FlexE (multi)frame boundary or an overhead toggling/counting bit as a reference for timestamp generation. The reference must be reliably detected (post-Forward Error Correction (FEC) processing) at given intervals. The time of detection becomes the time reference point or "significant instant" for the time transfer process 4100. The time reference point is post adaptation/mapping processing in the transmit (TX) direction and pre adaptation/mapping in the receive (RX) direction to minimize the uncertainty and jitter introduced by such blocks.

The time reference point used to indicate an Arrival Time is $T_A$ using RX frame boundaries and Departure Time $T_D$ using TX frame boundaries. The PMD/PHY layers in the stack are Constant Bit Rate (CBR) and not significant contributors to CTE. The period for time reference point in the time transfer process 4100 must allow for the transfer of the timing information via a sync message channel, which can either use a reserved FlexE OH field or share the existing management channel.

The time transfer process 4100 is described between two nodes - node A and node B utilizing a FlexE interface. The node A transmits a FlexE frame towards node B; when the transmit FlexE frame is detected, node A samples time $T_{D-A}$; the time $T_{D-A}$ is transferred to the node B via a PTP message in the FlexE overhead (step 4102). When the receive FlexE frame transmitted by node A is detected at node B, node B samples time $T_{A-B}$ (step 4104). Node B transmits a FlexE frame to node A; when the transmit frame is detected, node B samples time $T_{D-B}$ (step 4106). When the receive frame transmitted by node B is detected at node A; node A samples time $T_{A-A}$; the time $T_{A-A}$ is transferred to node B via a PTP message in the FlexE overhead (step 4108). With times $T_{D-A}$, $T_{A-B}$, $T_{D-B}$, $T_{A-A}$ available at node B, the time delay between node A and node B is determined as:

$$TIME\_DELAY = \frac{RTD}{2} = \frac{\left[\left(T_{A-B} - T_{D-A}\right) + \left(T_{A-A} - T_{D-B}\right)\right]}{2}$$

Where RTD is the Round Trip Delay which is $[(T_{A-B} - T_{D-A}) + (T_{A-A} - T_{D-B})]$. The time error at node B is calculated as:

$$TIME\_ERROR = T_{A-B} - \left(T_{D-A} + TIME\_DELAY\right) \quad (\text{step } 110).$$

Control algorithms and fixed known offsets can then be employed to minimize the time error.

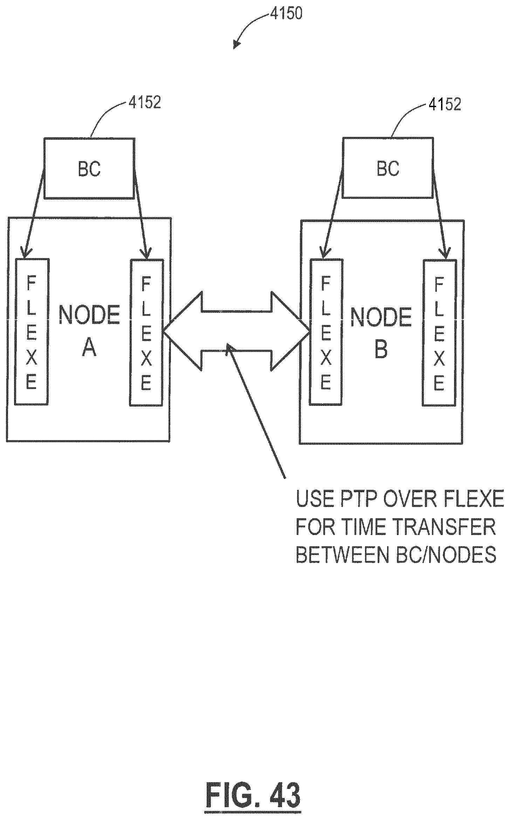

Referring to FIG. 43, in an exemplary embodiment, a network diagram illustrates a network 4150 with node A and node B connected to one another via a FlexE interface. Specifically, the time transfer process 4100 uses FlexE interfaces between boundary clocks 4152 and does not rely on FlexE clients. The boundary clock 4152 is an IEEE 1588 component that allows the synchronization of IEEE 1588 clocks across subnets defined by a router or other devices that blocks the transmission of all IEEE 1588 messages. The boundary clock 4152 serves to eliminate the large fluctuations in communication latency typically generated by routers and similar devices.

**FlexE Sync Messages**

In the time transfer process 4100, messages are provided between nodes to relay the various time measurements. For example, in the time transfer process 4100, the node A transfers the times $T_{D-A}$, $T_{A-A}$ to the node B. In an exemplary embodiment, the time transfer process 4100 can use the reserved area in the FlexE overhead multiframe (FlexE shim overhead) for inserting these PTP messages. In another exemplary embodiment, the time transfer process 4100 can use the existing management channel for inserting these PTP messages. The management channel can use a Generic Framing Procedure - Framed (GFP-F)/High-Level Data Link Control (HDLC)/Ethernet encapsulation with some type of packet differentiation (i.e. GFP UPI).

**FlexE Timestamp Point of Reference**

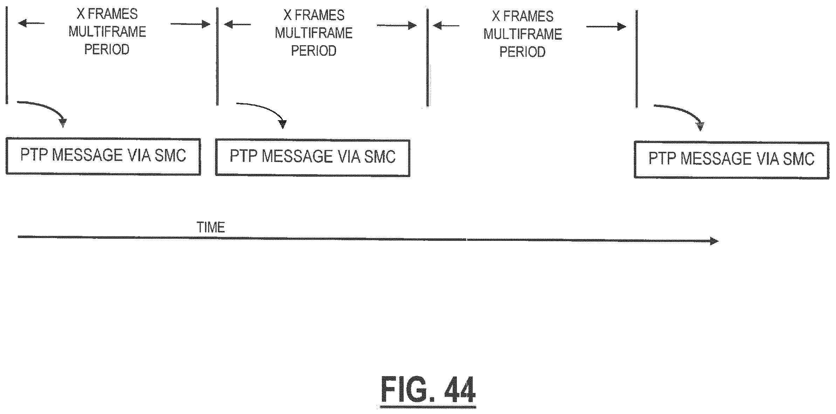

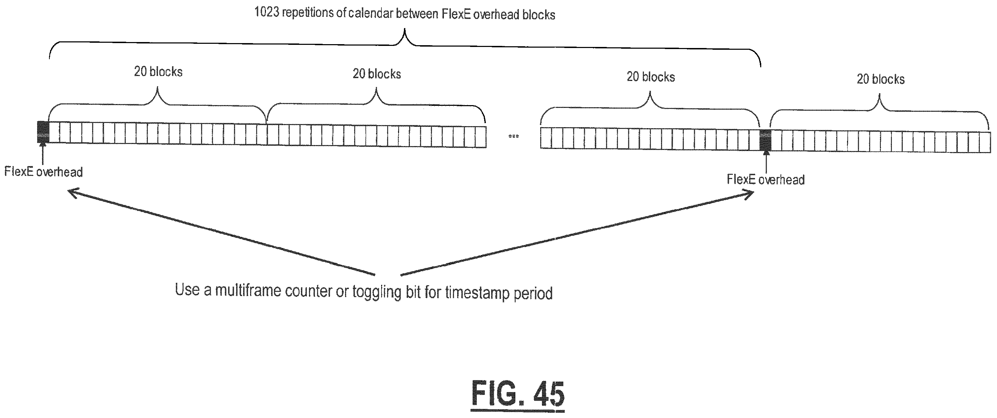

Referring to FIGS. 44 and 45, in exemplary embodiments, block diagrams illustrate a FlexE timestamp point of reference. FIG. 44 illustrates FlexE frame or multiframe boundaries for use as a point of reference in timestamp calculations. The FlexE frame is CBR and deterministic, thus, uses the FlexE frame or multiframe boundaries as the point of reference will not contribute to significant CTE. FIG. 45 illustrates the FlexE overhead on each PHY of the FlexE group from FIG. 7. Again, the time transfer process 4100 can use the multiframe boundary or a toggling in FlexE OH to signal the timestamp point of reference.

**Time transfer method**

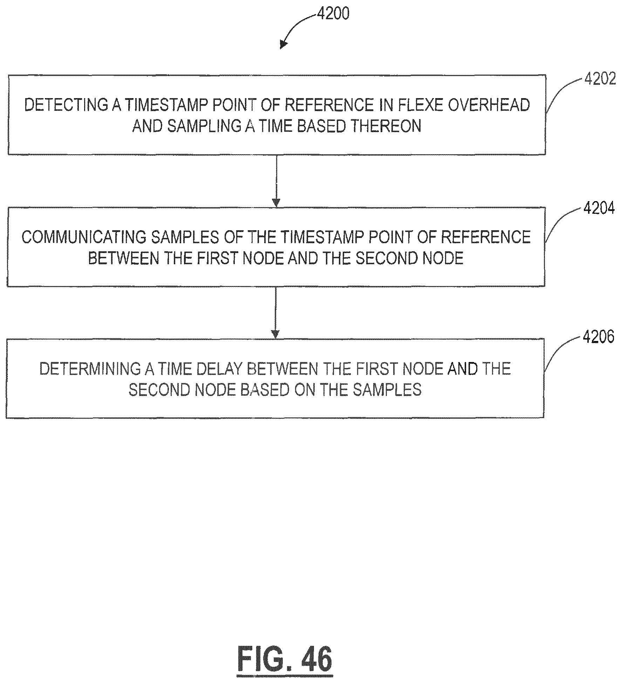

Referring to FIG. 46, in an exemplary embodiment, a flowchart illustrates a time transfer method 4200 in Flexible Ethernet (FlexE) between a first node and a second node. The time transfer method 4200 includes detecting a timestamp point of reference in FlexE overhead and sampling a time based thereon (step 4202); communicating samples of the timestamp point of reference between the first node and the second node (step 4204); and determining a time delay between the first node and the second node based on the samples (step 4206). The timestamp point of reference can be one of a frame and multiframe boundary associated with FlexE frame TDM structure. The timestamp point of reference can be a toggling bit in the FlexE overhead. The timestamp point of reference is determined post adaptation/mapping processing in a transmit direction and pre adaptation/mapping in a receive direction. Step 4204 can be performed using a reserved area in the FlexE overhead or using a management channel in the FlexE overhead. The samples can include $T_{A-B}$ which is an arrival time in a receive direction at the second node, $T_{D-A}$ which is a departure time in a transmit direction at the first node, $T_{A-A}$ which is an arrival time in a receive direction at the first node, and $T_{D-B}$ which is a departure time in a transmit direction at the second node. A Round Trip Delay is $[(T_{A-B} - T_{D-A}) + (T_{A-A} - T_{D-B})]$, time delay TD is RTD/2, and a time error at the second node relative to the first node is $T_{A-B} - (T_{D-A} + TD)$.

In another exemplary embodiment, a node configured to switch a Flexible Ethernet (FlexE) client service in a network includes circuitry configured to detect a timestamp point of reference in FlexE overhead and to sample a time based thereon; circuity configured to communicate samples with a second node; and circuitry configured to determine a time delay between the second node based on the samples. In a further exemplary embodiment, a network utilizing Flexible Ethernet (FlexE) for time transfer includes a first node; and a second node communicatively coupled to the first node with FlexE; wherein each of the first node and the second node are configured to detect a timestamp point of reference in FlexE overhead and sample a time based thereon, communicate samples of the timestamp point of reference between the first node and the second node, and determine a time delay between the first node and the second node based on the samples.

**AES Encryption**

AES is a specification for the encryption of electronic data established by the U.S. National Institute of Standards and Technology (NIST). AES is based on the Rijndael cipher which is a family of ciphers with different key and block sizes. For AES, NIST selected three members of the Rijndael family, each with a block size of 128 bits, but three different key lengths: 128, 192 and 256 bits. AES is a symmetric-key algorithm, meaning the same key is used for both encrypting and decrypting the data. AES is based on a design principle known as a substitutionpermutation network, combination of both substitution and permutation, and is fast in both software and hardware. Unlike its predecessor DES, AES does not use a Feistel network. AES operates on a 4×4 column-major order matrix of bytes, termed the state, although some versions of Rijndael have a larger block size and have additional columns in the state. Most AES calculations are done in a special finite field.

## GCM Encryption

Galois/Counter Mode (GCM) is a mode of operation for symmetric key cryptographic block ciphers that has been widely adopted because of its efficiency and performance. GCM throughput rates for state of the art, high speed communication channels can be achieved with reasonable hardware resources. The operation is an authenticated encryption algorithm designed to provide both data authenticity (integrity) and confidentiality. GCM is defined for block ciphers with a block size of 128 bits. Galois Message Authentication Code (GMAC) is an authentication-only variant of the GCM which can be used as an incremental message authentication code. Both GCM and GMAC can accept initialization vectors of arbitrary length. Different block cipher modes of operation can have significantly different performance and efficiency characteristics, even when used with the same block cipher. GCM can take full advantage of parallel processing and implementing GCM can make efficient use of an instruction pipeline or a hardware pipeline. In contrast, the cipher block chaining (CBC) mode of operation incurs significant pipeline stalls that hamper its efficiency and performance.

## FlexE Encryption

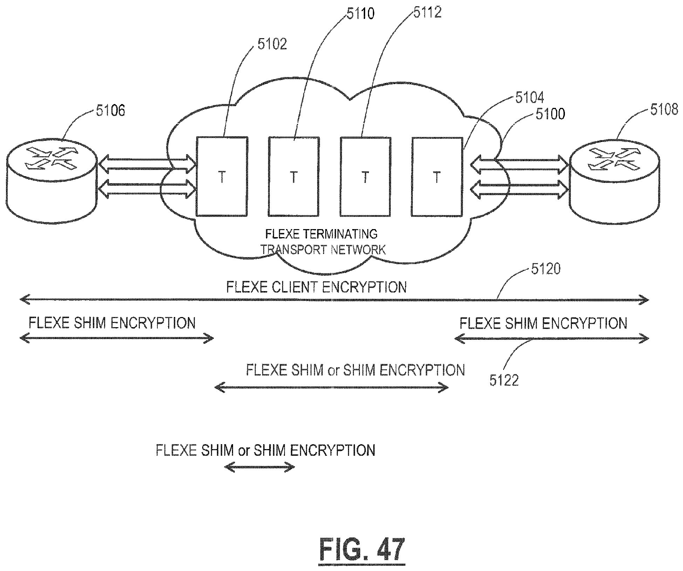

Referring to FIG. 47, in an exemplary embodiment, a network diagram illustrates a FlexE terminating transport network 5100 with network elements 5102, 5104 coupled to switches/routers 5106, 5108 and with intermediate, transparent network elements 5110, 5112 between the network elements 5102, 5104, with FlexE encryption. In an exemplary embodiment, a FlexE client can be transported as a service (or private line service) in a provider network (i.e., the transport network 5100). The switches/routers 5106, 5108 can be referred to as subscriber equipment where a service originates or terminates, i.e., a maintenance entity. The transport network 5100 can include a plurality of network elements in addition to the network elements 5102, 5104. The various network elements in the transport network 5100 are configured to perform transport/switching. In FlexE, the transport/switching can be ODUk/flex and/or FlexE client based switching. An example of FlexE client based switching is described in U.S. Patent Application No. 14/855,857, filed on September 16, 2015, and entitled "FLEXIBLE ETHERNET SWITCHING SYSTEMS AND METHODS".

The transport network 5100 can include FlexE client encryption 5120, covering the entire path, and/or FlexE shim encryption 5122, covering the section between the router to transport segment. Further, FlexE client encryption can cover the path from on-ramp transport node to off-ramp transport node. Additionally, FlexE shim encryption can also cover the segments between transport nodes as well as cover the path layer between on-ramp and off-ramp transport nodes. In either of the encryption methods 5120, 5122, FlexE encryption is applied at Layer 1, does not affect the packet rate and can be used with future FlexE interfaces, without requiring need for OTN wrapping. The encryptions 5120, 5122 are also lower complexity, resulting in lower logic, lower power and lower cost for the overall solution. The FlexE client encryption 5120 is applied at the FlexE client (i.e., path layer) between the switches/routers 5106, 5108 and across the transport network 5100. The FlexE shim encryption 5122 is applied at the FlexE shim (i.e., section/segment) between the switch/router 106 and the network element 102 and between the switch/router 5108 and the network element 5104. The FlexE shim encryption can be applied at the FlexE shim between the the on-ramp network element (5102, 5104) and the off-ramp network element (5104, 5102). The FlexE shim encryption can be applied at the FlexE shim between individual transport network elements 5102, 5104, 5110, 5112. The FlexE client encryption can be applied at the FlexE client between the on-ramp network element 5102, 5104 and the off-ramp network element 5104, 5102. The FlexE client encryption can be applied at the FlexE client between individual transport network elements 5102, 5104, 5110, 5112.

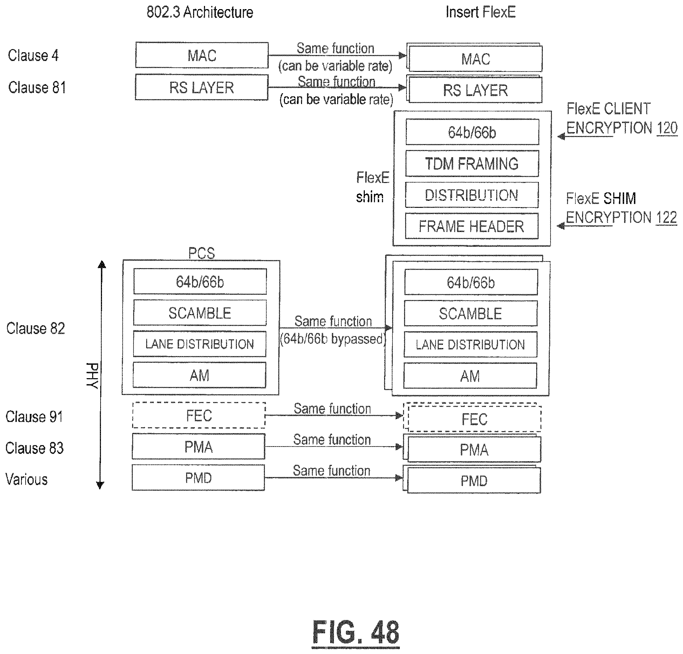

Referring to FIG. 48, in an exemplary embodiment, a logical diagram illustrates the IEEE 802.3 stack compared to a FlexE stack. Specifically, the logical diagram compares functions such as MAC, RS, PCS, FEC, PMA, and PMD. As described herein, the FlexE shim can reside between the RS layer and the PMD. For the FlexE shim encryption 5122, encryption is provided at the FlexE shim, i.e., on the whole shim. 64b/66b bit streams for all FlexE clients are mapped into the FlexE shim and the FlexE shim encryption 5122 can be applied across the entire shim, i.e., all of the FlexE clients. The FlexE shim encryption 5122 does not benefit to FlexE client switching as it is applied hop by hop, but it is less complex (than the FlexE client encryption 5120) and can be applied without knowledge of the client mappings (i.e., in the transport equipment or the PHYs). As shown in the logical diagram of FIG. 48, the FlexE shim encryption 5122 can be applied at the bottom of the FlexE shim layer. The FlexE shim encryption 5122 can reuse portions of the FlexE frame overhead for key exchange, authentication, GCM tags, etc. In an exemplary embodiment, an encryption messaging channel for key exchange, authentication, GCM tags, etc. can utilize reserved and/or undefined locations in the FlexE frame/shim overhead. Also, the encryption messaging channel can be performed through the FlexE management channel, shown in FIG. 10.

The FlexE client encryption 5120 can be applied on individual clients, and can be performed at a top of the FlexE shim as shown in the logical diagram of FIG. 48. The FlexE client encryption 5120 benefits FlexE client switching, and can be mapped into the FlexE shim or can be a standard client going to standard PCS/PHY. Also, the FlexE client encryption 5120 can be utilized with the FlexE shim encryption 5122. For communications, the FlexE client encryption 5120 can utilize a portion of the FlexE client stream (e.g., 1/16k) with a special O code (e.g., 0x9) with 24-bit data fields for an encryption messaging channel. For example, FIG. 49 is a diagram of encoding of ordered set block for FlexE overhead similar to FIG. 9 for the encryption messaging channel.

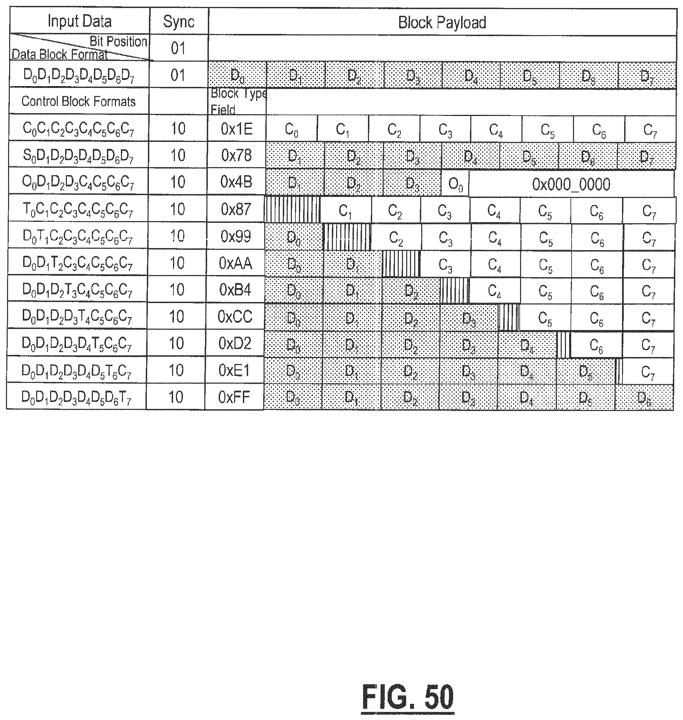

Referring to FIG. 50, in an exemplary embodiment, a table illustrates 64b/66b block formats. For the client encryption 120 at 64b/66b, the client encryption 120 does not encrypt the 64b/66b header (2-bits) as this still needs to go through standard Ethernet PHYs and is used for alignment. For the client encryption 5120, 01 data blocks (Dx fields) can be all encrypted and 10 control block need special attention. In an exemplary embodiment, only data blocks are encrypted which allows idles and rate adjustments, allows for LF/RF, and easily maps into ODUflex(IMP). In another exemplary embodiment, data and some control blocks are encrypted to minimize the visibility of the Start of Packet (SOP)/End of Packet (EOP) (link chatter).

GCM can be used in combination with AES to provide authentication of the encrypted message by adding a tag (hash). As per NIST Special Publication 800-38D, November 2007, "Recommendation for Block Cipher Modes of Operation: Galois/Counter Mode (GCM) and GMAC," up to 64GB of data can be covered with a single tag of 96, 104, 112, 120, or 128 bits. There is less than 50ppm to add the GCM tag. As much of that as possible can be used to minimize latency and buffer requirements. The GCM tag is either in the shim layer encryption messaging channel (for the FlexE shim encryption 5122) or directly in-band with the 0x9 O-code message channel when encrypting the client directly (for the FlexE client encryption 5120).

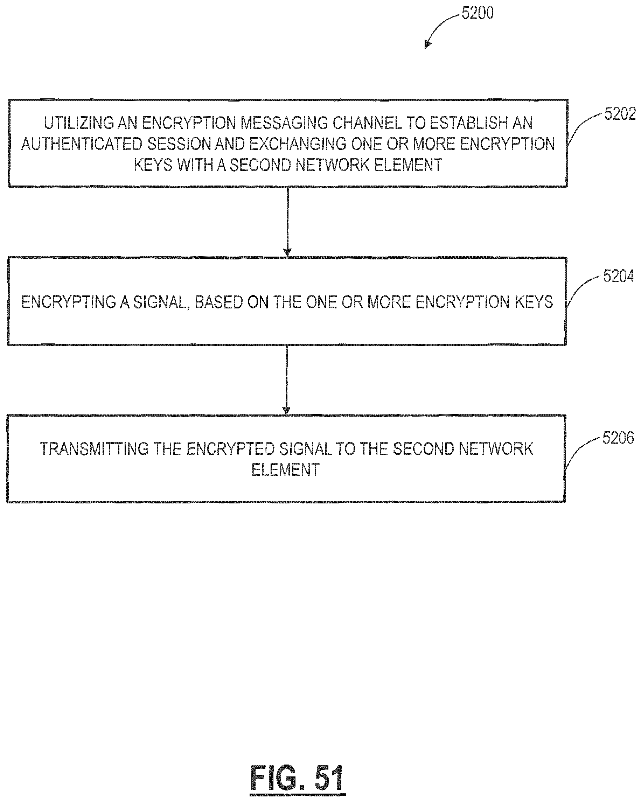

Referring to FIG. 51, in an exemplary embodiment, a flowchart illustrates a process 5200 for Physical Coding Sublayer (PCS) encryption implemented by a first network element communicatively coupled to a second network element. The process 5200 includes utilizing an encryption messaging channel to establish an authenticated session and exchanging one or more encryption keys with a second network element (step 5202); encrypting a signal, based on the one or more encryption keys (step 5204); and transmitting the encrypted signal to the second network element (step 5206). The encryption can be applied to a 64b/66b bit stream associated with a FlexE signal at one or more of a FlexE client layer and a FlexE shim layer. The encryption messaging channel can be utilized for key exchange, authentication, and tags with the second network element. The signal can include a FlexE shim including a plurality of FlexE clients. The signal can include one of a FlexE client and a generic Ethernet PCS stream onto standard Ethernet PHY. The encryption messaging channel can utilize one or more of reserved bytes in FlexE overhead and a management channel. The encryption messaging channel can utilize a FlexE client or PCS stream with a designed Operational code. The encryption can be applied to a 64b/66b bit stream with data blocks encrypted as well as some control blocks encrypted. The encryption can utilize one or more of Advanced Encryption Standard (AES) and Galois/Counter Mode (GCM).

In another exemplary embodiment. an apparatus for Physical Coding Sublayer (PCS) encryption implemented at a first network element communicatively coupled to a second network element includes circuitry adapted to utilize an encryption messaging channel to establish an authenticated session and exchanging encryption keys with a second network element; circuitry adapted to apply encryption to a signal, based on the encryption key; and circuitry adapted to transmit the signal with the encryption to the second network element. In a further exemplary embodiment, a network with Flexible Ethernet (FlexE) encryption includes a first network element; and a second network element communicatively coupled to the first network element; wherein the first network element is adapted to utilize an encryption messaging channel to establish an authenticated session and exchanging encryption keys with a second network element, apply encryption to a signal, based on the encryption key, and transmit the FlexE signal with the encryption to the second network element. The encryption can be applied to a 64b/66b bit stream associated with the FlexE signal at one or more of a FlexE client layer, a FlexE shim layer, and a generic Ethernet PCS stream onto standard Ethernet PHY.

It will be appreciated that some exemplary embodiments described herein may include one or more generic or specialized processors ("one or more processors") such as microprocessors, digital signal processors, customized processors, and field programmable gate arrays (FPGAs) and unique stored program instructions (including both software and firmware) that control the one or more processors to implement, in conjunction with certain non-processor circuits, some, most, or all of the functions of the methods and/or systems described herein. Alternatively, some or all functions may be implemented by a state machine that has no stored program instructions, or in one or more application specific integrated circuits (ASICs), in which each function or some combinations of certain of the functions are implemented as custom logic. Of course, a combination of the aforementioned approaches may be used. Moreover, some exemplary embodiments may be implemented as a non-transitory computer-readable storage medium having computer readable code stored thereon for programming a computer, server, appliance, device, etc. each of which may include a processor to perform methods as described and claimed herein. Examples of such computer-readable storage mediums include, but are not limited to, a hard disk, an optical storage device, a magnetic storage device, a ROM (Read Only Memory), a PROM (Programmable Read Only Memory), an EPROM (Erasable Programmable Read Only Memory), an EEPROM (Electrically Erasable Programmable Read Only Memory), Flash memory, and the like. When stored in the non-transitory computer readable medium, software can include instructions executable by a processor that, in response to such execution, cause a processor or any other circuitry to perform a set of operations, steps, methods, processes, algorithms, etc.

Although the present disclosure has been illustrated and described herein with reference to preferred embodiments and specific examples thereof, it will be readily apparent to those of ordinary skill in the art that other embodiments and examples may perform similar functions and/or achieve like results. All such embodiments and examples are within the scope of the present invention as defined by the following claims.

**Claims**

1.  A time transfer method implemented in a first node (A), the time transfer method comprising the steps of communicating flexible ethernet overhead with a second node (B),

    communicating synchronization messages with the second node (B) via a synchronization message channel in the flexible ethernet overhead, wherein the synchronization messages are Precision Time Protocol, PTP, messages used to provide time samples from the second node (B); and
    determining time delay with the second node (B) using the time samples from the second node (B) and from time samples captured at the first node (A), wherein the time samples are captured by the first node (A) and the second node (B) based on timestamp points of reference detected in the flexible ethernet overhead.

2.  The time transfer method as claimed in claim 1, wherein the timestamp points of reference for the synchronization messages are based on one of frame and multiframe boundaries.

3.  The time transfer method as claimed in any one of the preceding claims, wherein the flexible ethernet overhead is an overhead block.

4.  The time transfer method as claimed in any one of the preceding claims, wherein the steps further include communicating data blocks with the second node (B).

5.  The time transfer method as claimed in claim 4, wherein the data blocks and the overhead blocks are distributed based on a calendar.

6.  The time transfer method as claimed in any one of claims 4 to 5, wherein the data blocks and the overhead blocks encoded based on 64b/66b encoding.

7.  The time transfer method as claimed in any one of claims 1 to 6, wherein the synchronization message channel is via reserved fields in the flexible ethernet overhead.

8.  The time transfer method as claimed in any one of claims 1 to 6, wherein the synchronization message channel is via a management channel in the flexible ethernet overhead.

9.  The time transfer method as claimed any one of the preceding claims, wherein the flexible ethernet overhead is a 66b block compliant to IEEE Std 802.3-2015 clause 82.

10. A node (A) comprising circuitry configured to implement the time transfer method as claimed in any one of claims 1 to 9, the node (A) being the first node (A) and including one or more ports with a port configured to communicate with the second node (B).

11. A network including the node (A) of claim 10.

12. A computer-readable storage medium having computer readable code stored thereon for implementing the time transfer method in the first node (A) as claimed in any one of claims 1 to 9.

13. Computer readable code including instructions for implementing the time transfer method in the first node (A) as claimed in any one of claims 1 to 9.

**Patentansprüche**

1.  Zeitübertragungsverfahren, das in einem ersten Knoten (A) implementiert ist, wobei das Zeitübertragungsverfahren die folgenden Schritte umfasst: Kommunizieren von flexiblem Ethernet-Overhead mit einem zweiten Knoten (B),

    Kommunizieren von Synchronisierungsnachrichten mit dem zweiten Knoten (B) über einen Synchronisierungsnachrichtenkanal im flexiblen Ethernet-Overhead, wobei die Synchronisierungsnachrichten Nachrichten nach dem Präzisionszeitprotokoll, PTP, sind, die verwendet werden, um Zeitabtastungen von dem zweiten Knoten (B) bereitzustellen; und

    Bestimmen von Zeitverzögerung mit dem zweiten Knoten (B) unter Verwendung der Zeitabtastungen von dem zweiten Knoten (B) und von Zeitabtastungen, die am ersten Knoten (A) erfasst wurden, wobei die Zeitabtastungen durch den ersten Knoten (A) und den zweiten Knoten (B) basierend auf Zeitstempel-Referenzpunkten erfasst werden, die in dem flexiblen Ethernet-Overhead erkannt wurden.

2.  Zeitübertragungsverfahren nach Anspruch 1, wobei die Zeitstempel-Referenzpunkte für die Synchronisierungsnachrichten auf einem von Frame- und Multiframe-Grenzen basieren.

3.  Zeitübertragungsverfahren nach einem der vorstehenden Ansprüche, wobei der flexible Ethernet-Overhead ein Overhead-Block ist.

4.  Zeitübertragungsverfahren nach einem der vorstehenden Ansprüche, wobei die Schritte weiter Kommunizieren von Datenblöcken mit dem zweiten Knoten (B) einschließen.

5.  Zeitübertragungsverfahren nach Anspruch 4, wobei die Datenblöcke und Overhead-Blöcke basierend auf einem Kalender verteilt werden.

6.  Zeitübertragungsverfahren nach einem der Ansprüche 4 bis 5, wobei die Datenblöcke und die Overhead-Blöcke basierend auf 64b/66b-Codierung codiert werden.

7.  Zeitübertragungsverfahren nach einem der Ansprüche 1 bis 6, wobei der Synchronisierungsnachrichtenkanal über reservierte Felder im flexiblen Ethernet-Overhead verläuft.

8.  Zeitübertragungsverfahren nach einem der Ansprüche 1 bis 6, wobei der Synchronisierungsnachrichtenkanal über einen Verwaltungskanal im flexiblen Ethernet-Overhead verläuft.

9.  Zeitübertragungsverfahren nach einem der vorstehenden Ansprüche, wobei der flexible Ethernet-Overhead ein 66b-Block ist, der IEEE Std 802.3-2015 Satz 82 erfüllt.

10. Knoten (A), umfassend Schaltungen, die so konfiguriert sind, dass sie das Zeitübertragungsverfahren nach einem der Ansprüche 1 bis 9 implementieren, wobei der Knoten (A) der erste Knoten (A) ist und einen oder mehrere Anschlüsse mit einem Anschluss einschließt, der so konfiguriert ist, dass er mit dem zweiten Knoten (B) kommuniziert.

11. Netzwerk, das den Knoten (A) nach Anspruch 10 einschließt.

12. Computerlesbares Speichermedium, das darauf gespeicherten computerlesbaren Code zum Implementieren des Zeitübertragungsverfahrens im ersten Knoten (A) nach einem der Ansprüche 1 bis 9 aufweist.

13. Computerlesbarer Code, der Anweisungen zum Implementieren des Zeitübertragungsverfahrens im ersten Knoten (A) nach einem der Ansprüche 1 bis 9 einschließt.

**Revendications**

1.  Procédé de transfert de temps mis en œuvre dans un premier nœud (A), le procédé de transfert de temps comprenant les étapes consistant à communiquer un surdébit Ethernet flexible avec un second nœud (B),

    communiquer des messages de synchronisation avec le second nœud (B) par l'intermédiaire d'un canal de messages de synchronisation dans le surdébit Ethernet flexible, dans lequel les messages de synchronisation sont des messages de protocole de temps de précision, PTP, utilisés pour fournir des échantillons de temps du second nœud (B) ; et

la détermination d'un décalage temporel avec le second nœud (B) à l'aide des échantillons de temps provenant du second nœud (B) et d'échantillons de temps capturés au niveau du premier nœud (A),

dans lequel les échantillons de temps sont capturés par le premier nœud (A) et le second nœud (B) sur la base de points de référence d'horodatage détectés dans le surdébit Ethernet flexible.

2. Procédé de transfert de temps selon la revendication 1, dans lequel les points de référence d'horodatage pour les messages de synchronisation sont basés sur l'une parmi les limites de trames et des limites multitrames.

3. Procédé de transfert de temps selon l'une quelconque des revendications précédentes, dans lequel le surdébit Ethernet flexible est un bloc de surdébit.

4. Procédé de transfert de temps selon l'une quelconque des revendications précédentes, dans lequel les étapes incluent en outre la communication de blocs de données au second nœud (B).

5. Procédé de transfert de temps selon la revendication 4, dans lequel les blocs de données et les blocs de surdébit sont distribués sur la base d'un calendrier.

6. Procédé de transfert de temps selon l'une quelconque des revendications précédentes 4 et 5, dans lequel les blocs de données et les blocs de surdébit sont codés sur la base d'un codage 64b/66b.

7. Procédé de transfert de temps selon l'une quelconque des revendications 1 à 6, dans lequel le canal de messages de synchronisation passe par des champs réservés dans le surdébit Ethernet flexible.

8. Procédé de transfert de temps selon l'une quelconque des revendications 1 à 6, dans lequel le canal de messages de synchronisation passe par un canal de gestion dans le surdébit Ethernet flexible.

9. Procédé de transfert de temps selon l'une quelconque des revendications précédentes, dans lequel le surdébit Ethernet flexible est un bloc 66b conforme à la norme IEEE 802.3-2015 clause 82.

10. Nœud (A) comprenant des circuits configurés pour mettre en œuvre le procédé de transfert de temps selon l'une quelconque des revendications 1 à 9, le nœud (A) étant le premier nœud (A) et incluant un ou plusieurs ports avec un port configuré pour communiquer avec le second nœud (B).

11. Réseau incluant le nœud (A) de la revendication 10.

12. Support de stockage lisible par ordinateur sur lequel est stocké un code lisible par ordinateur pour mettre en œuvre le procédé de transfert de temps dans le premier nœud (A) selon l'une quelconque des revendications 1 à 9.

13. Code lisible par ordinateur comprenant des instructions pour la mise en œuvre du procédé de transfert de temps dans le premier nœud (A) selon l'une quelconque des revendications 1 à 9.

FIG. 1

FlexE Client a → 64B/66B encode → Idle insert/delete

FlexE Client b → 64B/66B encode → Idle insert/delete

FlexE Client z → 64B/66B encode → Idle insert/delete

Error Control Block Generator → LF Generator

Client Clock Domain / FlexE Clock Domain

Control

Overhead Insertion

66B block distribution and Insertion into master calendar

Master Calendar

Calendar Distribution

PHY A Sub-calendar

PHY B Sub-calendar

PHY N Sub-calendar

Scramble → 100GBASE-R PMA → PHY A Lower Layers and PMD

Scramble → 100GBASE-R PMA → PHY B Lower Layers and PMD

Scramble → 100GBASE-R PMA → PHY N Lower Layers and PMD

PCS lane distribution and AM insertion

FlexE defined sublayers

802.3 defined sublayers

14

**FIG. 2A**

**FIG. 2B**

All PHYs of the FlexE group layer are carried independently, but over the same fiber route, over the transport network. Deskew across the transport network is performed in the FlexE shim

FIG. 3

25G | 50G    16

FLEXE SHIM

May be wavelength or
sub-wavelength services over
OTN

30

FLEXE SHIM

25G    50G

FLEXE SHIM

25G                                    50G

150G

150G

TRANSPORT
NETWORK

300G

300G

300G

Since the FlexE group is terminated before crossing the
transport network, the total skew is comparable to the
Ethernet PCS lane skew

# FIG. 4

All PHYs of the FlexE group layer are carried independently,
but over the same fiber route, over the transport network.
Deskew across the transport network is performed in the
FlexE shim

150G

FLEXE SHIM  16

100G

100G

TRANSPORT
NETWORK

75G  40

42

100G

100G

FLEXE SHIM

150G

FlexE group PHYs are configured
so that only 75% of the calendar
slots on each PHY are available
to carry FlexE clients

Special mapper discards unavailable slots. Special
demapper restores unavailable slots to get back to the
original PHY rate

# FIG. 5

FIG. 6

Length 20 Sub-calendars

Length 20n Master Calendar

FIG. 7

1023 repetitions of calendar between FlexE overhead blocks

20 blocks

20 blocks

20 blocks

20 blocks

FlexE overhead

FlexE overhead

## FIG. 8

1023 repetitions of calendar between FlexE overhead blocks

20 blocks          20 blocks                    20 blocks              20 blocks

XXXXX        XXXXX       ...     XXXXX        XXXXX

FlexE overhead                                        FlexE overhead

## FIG. 9

| 1 | 0 | 0x4B | D1 | D2 | D3 | 0x5 | 0x000_0000 |

## FIG. 10

Bit Position

| SH | 0 | 1 | 2 | 3 | 4 | 5 | 6 | 7 | 8 | 9 | 10 | 11 | 12 13 14 15 16 17 18 19 20 21 22 23 | 24 25 26 27 28 29 30 31 | 32 33 34 35 | 36 ... 47 | 48 49 50 51 ... 63 |
|---|---|---|---|---|---|---|---|---|---|---|---|---|---|---|---|---|---|

| 1 | 0 | 0x4B | C | PC | RF | Client | PHYMap |
| 0 | 1 | C | FlexE Group Number | | | This PHY | 0x5 |
| 0 | 1 | C | Reserved | | | Management Channel (18 octets) | 0x000_0000 |
| 0 | 1 | | | | | | CRC-16 |

40 Overhead repetitions

| 0 | Calendar A Client Slot 0 |
| 0 | Calendar A Client Slot 1 |
| ... |
| 0 | Calendar A Client Slot 19 |
| 1 | Calendar B Client Slot 0 |
| 1 | Calendar B Client Slot 1 |
| ... |
| 1 | Calendar B Client Slot 19 |

| PHY Map Request 0-12 |
| PHY Map Request 13-25 |
| ... |
| PHY Map Request 248-255 | Reserved |

| PHY Map Active 0-12 |
| PHY Map Active 13-25 |
| ... |
| PHY Map Active 248-255 | Reserved |

Length 20 Sub-calendars

Length 20n Master Calendar

10G FlexE Client

25G FlexE Cleint

**FIG. 11**

EP 4 060 914 B1

## FIG. 12

Local Fault:

| 1 | 0 | 0x4B | 0x00 | 0x00 | 0x01 | 0x0 | 0x000_0000 |

Remote Fault:

| 1 | 0 | 0x4B | 0x00 | 0x00 | 0x02 | 0x0 | 0x000_0000 |

## FIG. 13

EP 4 060 914 B1

Length 20 Sub-calendars

Length 20n Master Calendar

10G FlexE Client

25G FlexE Cleint

Align per PHY calendars based on position
of D1=00xxxxxx FlexE overhead to assure
proper sequence of each FlexE client

FIG. 14

EP 4 060 914 B1

FlexO Layer stack and Atomic functions

M * ODUflex_TT

GMP    ODUCnP/ODUk_A

1 * ODUCnP_TT
1 * OTUCn/ODUCn_A
1 * OTUCn_TT

1 * OPSn-N/OTUCn_A

N * OPSn_TT

Bonding

| ODUflex |
| --- |
| N*1.25G, N*5G |

| ODUCn/OTUCn |
| --- |
| n = 2, 3, 4, 5, ... |

| OPSn |
| --- |

| ETCm |
| --- |
| m = 2, 3, 4, 5, 6, 7 |
| m = In, Vn, XXVn, Ln, Cn, CCn, CDn |

| ETXn |
| --- |
| n = 3-Nv, 4-Nv, 6-Nv, 7-Nv |

| ETYn |
| --- |
| n = 3, 4, 5 ,6, 7, ... |

FlexE Layer stack and Atomic functions

M * ETCm_TT

ETXn-N/ETCm_A    IMP

N * ETXn_TT
(ETXn-Nv_TT)

N * ETYn/ETXn_A

N * ETYn_TT

Bonding

## FIG. 15

- N x clients
- M x groups (standard PMD interfaces)
- i.e. 100GE

- Terminate shim OH
- Get access to 64b66b blocks and slots
- Function likely in a framer/mapper or switch device

- Move around 64b66b blocks to appropriate fabric link
- Function likely in FIC

- Pack 64b66b blocks/slots into new FlexE shim (container) to go to fabric
- Links can again use standard groups/PMDs i.e. 100GE

- Switch on a 64b66b block boundary
- Completely agnostic to content or grouping of 64b66b blocks

**FIG. 16**

**FIG. 17**

FIG. 18

FIG. 19

Ports are
async to
system
timing.

- N x clients
- M x groups (standard
PMD interfaces)
- i.e. 100GE
- Terminate shim OH
- Get access to 64b66b
blocks and slots

- Use a phase aligned clock
  to deskew FlexE channels
  passing across the fabric as
  unique flows.
- The phase aligned clock
  allows time stamping of
  each cell thereby enabling
  deskewing at the egress.

- SAR: Adapt 64b66b
  TDM streams using
  OPF, Need to keep
  64b66b intact
- Timing Transfer:
  Required for Async
  port timing

- Use packet switching
over cell switched links.

- Cell switch

**FIG. 20**

_400_

_420_

_406_   _402_
   _410_   _416_ _412_   _408_ _414_   _404_
                                                      _418_

line card 1                                    fabric A

S            OPF
             SARing

Ports are
synchronous
to system          Phase Aligned Clock
timing.
             OPF                               fabric B
S            SARing

line card n

- N x clients        • Use a phase aligned clock    • SAR: Adapt 64b66b      - Use packet switching
- M x groups (standard   to deskew FlexE channels       TDM streams using        over cell switched links.
  PMD interfaces)        passing across the fabric as   OPF, Need to keep
- i.e. 100GE             unique flows.                  64b66b intact
- Terminate shim OH    • The phase aligned clock      • Timing Transfer: Not      - Cell switch
- Get access to 64b66b   allows time stamping of        Required for Synch
  blocks and slots       each cell thereby enabling     port timing
                         deskewing at the egress.

# FIG. 21

1023 repetitions of calendar between FlexE overhead blocks

20 blocks      20 blocks      20 blocks      20 blocks

FlexE overhead

FlexE overhead

Header

Payload

Header

Payload

**FIG. 22**

EP 4 060 914 B1

FlexO UNI/IrDI/E-NNI interfaces

~1100

~1106

~1102

~1108

~1104

T          TRANSPORT          T
           NETWORK

FlexO

ODUflex
SERVICE    ● m x OTUCn ●    ODUflex           ● m x OTUCn ●    ODUflex
                            Transport/switching              SERVICE

service originating in subscriber equipment
(maintenance entity)

provider's network
multi-nodes of OTN or FlexE switching

service terminating in
subscriber equipment
(maintenance entity)

~1100

~1106

~1102

~1108

~1104

T          TRANSPORT          T
           NETWORK

FlexE

FlexE
Client      ● m x FlexE ●    ODUflex/FlexE        ● m x FlexE ●    FlexE
SERVICE       groups         Transport/switching      groups      Client
                                                                  SERVICE

FlexE UNI/IrDI/E-NNI interfaces

# FIG. 23

FIG. 24

EP 4 060 914 B1

1024 repetitions of calendar between FlexE overhead blocks

20 blocks   20 blocks   20 blocks   20 blocks

FlexE overhead   •••   FlexE overhead

| 1 | 0 | 0x4B | D1 | D2 | D3 | 0x5 | 0x000_0000 |

Bit Position

| SH | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 | 32 | 33 | 34 | 35 | 36 | 37 | 38 | 39 | 40 | 41 | 42 | 43 | 44 | 45 | 46 | 47 | 48 | 49 | 50 | 51 | 52 | 53 | 54 | 55 | 56 | 57 | 58 | 59 | 60 | 61 | 62 | 63 |
|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|
| 1 0 | | 0x4B | | | | | | | C | PC | RF | | PHY Map | | | | | | | | | | | | | This PHY | | | | | 0x5 | | | | 0x000_0000 | | | | | | | | | | | | | | | | | | | | | | | | | | | | | | | |
| 0 1 | C | FlexE Group Number | | | | | | | | Client | | | | | | | | | | | | | | | | | | | | | | | | | | | | | | | | | | | | | | | | | | | | | | | | | | | | | | |
| 0 1 | C | Reserved | | | | | | | | | | | | | | | | | | | | | | | Management Channel (18 octets) | | | | | | | | | | | | | | | | | | | | | | | | | | | | | | | | | | | | | | | |
| 0 1 | | | | | | | | | | | | | | | | | | | | | | | | | | | | | | | | | | | | | | | | | | | | | | | | | | | CRC-16 | | | | | | | | | | | | | | |

40 Overhead repetitions

| 0 | Calendar A Client Slot 0 |
| 0 | Calendar A Client Slot 1 |
| | • • • |
| 0 | Calendar A Client Slot 19 |
| 1 | Calendar B Client Slot 0 |
| 1 | Calendar B Client Slot 1 |
| | • • • |
| 1 | Calendar B Client Slot 19 |

| PHY Map Request 0-12 | |
| PHY Map Request 13-25 | |
| • • • | |
| PHY Map Request 248-255 | Reserved |
| PHY Map Active 0-12 | |
| PHY Map Active 13-25 | |
| • • • | |
| PHY Map Active 248-255 | Reserved |

**FIG. 25**

| 1 | 0 | 0x4B | D1 | D2 | D3 | 0x9 | 0x000_0000 |

24-bits

**FIG. 26**

EP 4 060 914 B1

**FIG. 27**

1200

RECEIVING A FLEXE CLIENT — 1202

AT LEAST ONE OF MONITORING AND UPDATING ONE OR MORE OPERATIONS, ADMINISTRATION, AND MAINTENANCE (OAM) FIELDS IN FLEXE OVERHEAD, WHEREIN THE OAM FIELDS COVER A SINGLE CLIENT PATH FOR THE FLEXE CLIENT — 1204

FIG. 28

OTN FRAME

| 64 BITS | 64 BITS | 64 BITS | 64 BITS |
|---------|---------|---------|---------|

| 01 | 64 BITS | 01 | 64 BITS | 01 | 64 BITS | 01 | 64 BITS |
|----|---------|----|---------|----|---------|----|---------|

ENCODED AS 64B/66B

# FIG. 29

client number + <u>type</u>

Put Cn in here or other reserved FlexE OH field.

Bit Position

| SH | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 | 32 | 33 | 34 | 35 | 36 | 37 | 38 | 39 | 40 | 41 | 42 | 43 | 44 | 45 | 46 | 47 | 48 | 49 | 50 | 51 | 52 | 53 | 54 | 55 | 56 | 57 | 58 | 59 | 60 | 61 | 62 | 63 |

| 1 | 0 | 0x4B | C | PC | RF | PHY Map | This PHY | 0x5 | 0x000_0000 |
| 0 | 1 | C | FlexE Group Number | Client | | |
| 0 | 1 | C | Reserved | Management Channel (18 octets) | |
| 0 | 1 | | CRC-16 |

40 Overhead repetitions

| 0 | Calendar A Client Slot 0 |
| 0 | Calendar A Client Slot 1 |
| ••• |
| 0 | Calendar A Client Slot 19 |
| 1 | Calendar B Client Slot 0 |
| 1 | Calendar B Client Slot 1 |
| ••• |
| 1 | Calendar B Client Slot 19 |

| PHY Map Request 0-12 |
| PHY Map Request 13-25 |
| ••• |
| PHY Map Request 248-255 | Reserved |
| PHY Map Active 0-12 |
| PHY Map Active 13-25 |
| ••• |
| PHY Map Active 248-255 | Reserved |

## FIG. 30

EP 4 060 914 B1

802.3 Architecture                    Insert FlexE

Clause 4        | MAC |    Same function    | MAC |          clients into ODUj (like
                           (can be variable rate)              ODUflex)

Clause 81       | RS LAYER |  Same function  | RS LAYER |
                              (can be variable rate)

                                        FlexE    | 64b/66b |
                                        shim     | TDM FRAMING |
                                                 | DISTRIBUTION |      ODUj into ODUk (like
                                                 | FRAME HEADER |      ODU4)

                                        FlexE    | 64b/66b |
                                        shim     | TDM FRAMING |
                                                 | DISTRIBUTION |
                                                 | FRAME HEADER |

                      PCS
                 | 64b/66b |                          | 64b/66b |
                 | SCAMBLE |     Same function         | SCAMBLE |
Clause 82        | LANE DISTRIBUTION |  (64b/66b bypassed)  | LANE DISTRIBUTION |
                 | AM |                                | AM |

Clause 91        | FEC |          Same function        | FEC |

Clause 83        | PMA |          Same function        | PMA |

Various          | PMD |          Same function        | PMD |

PHY

## FIG. 31

FIG. 32

FlexO Layer stack and Atomic functions

M * ODUflex_TT

GMP

1 * ODUCnP_TT
1 * OTUCn/ODUCn_A
1 * OTUCn_TT

1 * OPSn-N/OTUCn_A

N * OPSn_TT

Bonding

ODUflex

N*1.25G, N*5G

ODUCn/OTUCn

n = 2, 3, 4, 5, ...

OPSn

ETCm
m = 2, 3, 4, 5, 6, 7
m = In, Vn, XXVn, Ln,
Cn, CCn, CDn

ETXn
n = 3-Nv, 4-Nv, 6-Nv, 7-
Nv

ETYn

n = 3, 4, 5 ,6, 7, ...

FlexE Layer stack and Atomic functions

M * ETCm_TT

ETXn-
N/ETCm_A          IMP

VCAT          N * ETXn_TT
(ETXn-Nv_TT)

N * ETYn/ETXn_A

N * ETYn_TT

Bonding

## FIG. 33

EP 4 060 914 B1

2200

RECEIVING A CLIENT SIGNAL, WHEREIN THE CLIENT SIGNAL
IS DIFFERENT FROM A FLEXE CLIENT

2202

MAPPING THE CLIENT SIGNAL INTO A FLEXE SHIM

2204

SUPPORTING A TIMING REFERENCE IN A FLEXE GROUP AND
RATE ADAPTATION AND TIMING INFORMATION (CN) IN THE
FLEXE SHIM

2206

DETERMINING A RATE OF THE CLIENT SIGNAL

2208

TRANSMITTING ADAPTATION AND TIMING INFORMATION (CN)
IN FLEXE OVERHEAD

2210

FIG. 34

FlexE UNI/IrDI interfaces

FIG. 35

This could be an Ethernet client port
or the client side of a FlexE shim

This could be a packet I/F such as
Interlaken

CBR MAPPING EXAMPLE

ETHERNET SIGNAL

B100G OPUflex

ETH ADAPTATION FUNC

ETHERNET

OTHER PDU-BASED
PROTOCOLS (IP, MPLS)

ETHERNET PDU

LLC OR OTHER MAC CLIENT

MAC CONTROL (OPTIONAL)

ETHERNET MAC/RS

ETHERNET PCS

ADAPTATION TO ODUflex

B100G OPUflex

MAC FRAMES

MAC/RS/PCS

ETHERNET SIGNAL

ETH ADAPTATION FUNC

B100G OPUflex

## FIG. 36

**FIG. 37**

1024 repetitions of calendar between FlexE overhead blocks

20 blocks      20 blocks      20 blocks      20 blocks

FlexE overhead          FlexE overhead

Identify logical channel number for following period

**FIG. 38**

FIG. 39

802.3 Architecture                                        Insert FlexE

Clause 4          | MAC |      Same function        | MAC |        Would need
                              (can be variable rate)                to insert
Clause 81      | RS LAYER |    Same function     | RS LAYER |       PTP
                              (can be variable rate)                timestamp
                                                                    here for
                                            | 64b/66b |             packet
                                       16
                                            | TDM FRAMING |
                                  FlexE
                                  shim      | DISTRIBUTION |
                                            | FRAME HEADER |
                                                                    Shim adds CTE,
                                                                    uncertainty,
                          PCS                                        asymmetry and
                                                                    PDV
                   | 64b/66b |                | 64b/66b |

                   | SCAMBLE |    Same function  | SCAMBLE |
Clause 82                        (64b/66b bypassed)
              | LANE DISTRIBUTION |          | LANE DISTRIBUTION |

                     | AM |                    | AM |

Clause 91          | FEC |        Same function    | FEC |

Clause 83          | PMA |        Same function    | PMA |

Various            | PMD |        Same function    | PMD |

              IEEE 1588
              timestamp
              for normal
              Ethernet

FIG. 40

802.3 Architecture                                    Insert FlexE

Clause 4          MAC        Same function        MAC
                           (can be variable rate)

Clause 81       RS LAYER     Same function      RS LAYER
                           (can be variable rate)

                                                   64b/66b

                          16                     TDM FRAMING

                                   FlexE         DISTRIBUTION
                                   shim
                                                 FRAME HEADER

                  PCS                                              Insert PTP here
                                                                  for new scheme
                 64b/66b                           64b/66b        Use FlexE
                                                                  frame as point
                 SCAMBLE      Same function        SCAMBLE        of reference for
Clause 82                   (64b/66b bypassed)                    timestamp
            LANE DISTRIBUTION                  LANE DISTRIBUTION

                   AM                                AM

Clause 91          FEC       Same function           FEC

Clause 83          PMA       Same function           PMA

Various            PMD       Same function           PMD

FIG. 41

4100

NODE A TRANSMITS A FLEXE FRAME TO NODE B; WHEN TX FLEXE FRAME IS DETECTED, NODE A SAMPLES TIME $T_{D-A}$; THE TIME $T_{D-A}$ IS TRANSFERRED TO NODE B VIA PTP MESSAGE IN FLEXE OVERHEAD
4102

WHEN RX FLEXE FRAME TRANSMITTED BY NODE A IS DETECTED AT NODE B, NODE B SAMPLES TIME $T_{A-B}$
4104

NODE B TRANSMITS A FLEXE FRAME TO NODE A; WHEN TX FLEXE FRAME IS DETECTED, NODE B SAMPLES TIME $T_{D-B}$;
4106

WHEN RX FLEXE FRAME TRANSMITTED BY NODE B IS DETECTED AT NODE A, NODE A SAMPLES TIME $T_{A-A}$ ; THE TIME $T_{A-A}$ IS TRANSFERRED TO NODE B VIA PTP MESSAGE IN FLEXE OVERHEAD
4108

WITH TIMES $T_{D-A}$, $T_{A-B}$, $T_{D-B}$, $T_{A-A}$ AVAILABLE AT NODE B, DETERMINE TIME DELAY BETWEEN NODE A AND NODE B AS
4110

$$\text{TIME DELAY} = \frac{RTD}{2} = \frac{[(T_{A-B} - T_{D-A}) + (T_{A-A} - T_{D-B})]}{2}$$

THE TIME ERROR AT NODE B IS CACULATED AS

$$\text{TIME ERROR} = T_{A-B} - (T_{D-A} + \text{TIME DELAY})$$

FIG. 42

USE PTP OVER FLEXE
FOR TIME TRANSFER
BETWEEN BC/NODES

FIG. 43

FIG. 44

EP 4 060 914 B1

1023 repetitions of calendar between FlexE overhead blocks

20 blocks        20 blocks        20 blocks        20 blocks

...

FlexE overhead        FlexE overhead

Use a multiframe counter or toggling bit for timestamp period

**FIG. 45**

4200

DETECTING A TIMESTAMP POINT OF REFERENCE IN FLEXE OVERHEAD AND SAMPLING A TIME BASED THEREON — 4202

COMMUNICATING SAMPLES OF THE TIMESTAMP POINT OF REFERENCE BETWEEN THE FIRST NODE AND THE SECOND NODE — 4204

DETERMINING A TIME DELAY BETWEEN THE FIRST NODE AND THE SECOND NODE BASED ON THE SAMPLES — 4206

# FIG. 46

FIG. 47

802.3 Architecture                                          Insert FlexE

Clause 4          | MAC |        Same function        | MAC |
                                 (can be variable rate)

Clause 81         | RS LAYER |   Same function        | RS LAYER |
                                 (can be variable rate)
                                                                      FlexE CLIENT
                                                                      ENCRYPTION 120

                                              | 64b/66b |

                                              | TDM FRAMING |
                                    FlexE
                                    shim      | DISTRIBUTION |        FlexE SHIM
                                                                     ENCRYPTION 122
                                              | FRAME HEADER |

                  PCS

                  | 64b/66b |                 | 64b/66b |

                  | SCAMBLE |                 | SCAMBLE |
Clause 82                        Same function
                  | LANE DISTRIBUTION |  (64b/66b bypassed)  | LANE DISTRIBUTION |

                  | AM |                       | AM |

Clause 91         | FEC |        Same function       | FEC |

Clause 83         | PMA |        Same function       | PMA |

Various           | PMD |        Same function       | PMD |

PHY

# FIG. 48

FIG. 49

encryption OH

| Input Data | Sync | Block Type Field | Block Payload |
|---|---|---|---|
| Bit Position / Data Block Format | 01 | | |
| $D_0D_1D_2D_3D_4D_5D_6D_7$ | 01 | | $D_0$  $D_1$  $D_2$  $D_3$  $D_4$  $D_5$  $D_6$  $D_7$ |
| Control Block Formats | | | |
| $C_0C_1C_2C_3C_4C_5C_6C_7$ | 10 | 0x1E | $C_0$  $C_1$  $C_2$  $C_3$  $C_4$  $C_5$  $C_6$  $C_7$ |
| $S_0D_1D_2D_3D_4D_5D_6D_7$ | 10 | 0x78 | $D_1$  $D_2$  $D_3$  $D_4$  $D_5$  $D_6$  $D_7$ |
| $O_0D_1D_2D_3C_4C_5C_6C_7$ | 10 | 0x4B | $D_1$  $D_2$  $D_3$  $O_0$  0x000_0000 |
| $T_0C_1C_2C_3C_4C_5C_6C_7$ | 10 | 0x87 | $C_1$  $C_2$  $C_3$  $C_4$  $C_5$  $C_6$  $C_7$ |
| $D_0T_1C_2C_3C_4C_5C_6C_7$ | 10 | 0x99 | $D_0$  $C_2$  $C_3$  $C_4$  $C_5$  $C_6$  $C_7$ |
| $D_0D_1T_2C_3C_4C_5C_6C_7$ | 10 | 0xAA | $D_0$  $D_1$  $C_3$  $C_4$  $C_5$  $C_6$  $C_7$ |
| $D_0D_1D_2T_3C_4C_5C_6C_7$ | 10 | 0xB4 | $D_0$  $D_1$  $D_2$  $C_4$  $C_5$  $C_6$  $C_7$ |
| $D_0D_1D_2D_3T_4C_5C_6C_7$ | 10 | 0xCC | $D_0$  $D_1$  $D_2$  $D_3$  $C_5$  $C_6$  $C_7$ |
| $D_0D_1D_2D_3D_4T_5C_6C_7$ | 10 | 0xD2 | $D_0$  $D_1$  $D_2$  $D_3$  $D_4$  $C_6$  $C_7$ |
| $D_0D_1D_2D_3D_4D_5T_6C_7$ | 10 | 0xE1 | $D_0$  $D_1$  $D_2$  $D_3$  $D_4$  $D_5$  $C_7$ |
| $D_0D_1D_2D_3D_4D_5D_6T_7$ | 10 | 0xFF | $D_0$  $D_1$  $D_2$  $D_3$  $D_4$  $D_5$  $D_6$ |

## FIG. 50

5200

UTILIZING AN ENCRYPTION MESSAGING CHANNEL TO ESTABLISH AN AUTHENTICATED SESSION AND EXCHANGING ONE OR MORE ENCRYPTION KEYS WITH A SECOND NETWORK ELEMENT — 5202

ENCRYPTING A SIGNAL, BASED ON THE ONE OR MORE ENCRYPTION KEYS — 5204

TRANSMITTING THE ENCRYPTED SIGNAL TO THE SECOND NETWORK ELEMENT — 5206

## FIG. 51

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62186489
- US 62186502
- US 62186508
- US 62186518
- US 85585715
- US 82466715
- US 82469315
- US 82471515
- US 86860315
- US 96677915
- US 2010040369 A1
- US 2013051407 A1